(19) **Europäisches Patentamt**

**European Patent Office**

**Office européen des brevets**

(11) **EP 1 725 041 A2**

(12) **EUROPEAN PATENT APPLICATION**

(43) Date of publication:
**22.11.2006 Bulletin 2006/47**

(51) Int Cl.:
*H04N 7/26* (2006.01)    *H04N 7/46* (2006.01)
*H04N 7/50* (2006.01)

(21) Application number: **06113960.6**

(22) Date of filing: **15.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **17.05.2005 JP 2005143924**

(71) Applicant: **SONY CORPORATION**
**Tokyo (JP)**

(72) Inventors:
• **YAMAZAKI, Toshio,**
**c/o SONY-KIHARA RES. CENTER INC.**
**Tokyo (JP)**

• **KOBAYASHI, Seiji,**
**c/o SONY-KIHARA RES. CENTER INC.**
**TOKYO (JP)**
• **HIRASAWA, Yasutaka**
**c/o SONY-KIHARA RES. CENTER INC**
**Tokyo (JP)**

(74) Representative: **Thévenet, Jean-Bruno et al**
**Cabinet Beau de Loménie**
**158, rue de l'Université**
**75340 Paris Cédex 07 (FR)**

(54) **Moving picture conversion apparatus and method, moving picture reconstruction apparatus and method, and computer program**

(57)    A moving-picture conversion apparatus (100) includes a block generator (110) configured to generate blocks by dividing each frame forming moving picture data into the blocks, an amount-of-movement detector (120) configured to detect an amount of movement of a subject corresponding to each block generated by the block generator, a block processor (130) configured to receive the blocks generated by the block generator (110) and information concerning the amount of movement detected by the amount-of-movement detector (120) to perform decimation processing on the blocks, and a packing processor (140) configured to receive the blocks decimated by the block processor (130) to generate a packed block including pixel data forming the decimated blocks. The packing processor (140) generates a packed block by correcting positions of pixels forming the packed block substantially to relative positions of the corresponding pixels forming an original image.

FIG. 7

**Description**

BACKGROUND OF THE INVENTION

1. Field of the Invention

The present invention generally relates to moving picture conversion apparatuses and methods, moving picture reconstruction apparatuses and methods, and computer programs. More particularly, the invention relates to a moving picture conversion apparatus and method, a moving picture reconstruction apparatus and method, and a computer program in which moving picture compression and decompression utilizing human visual characteristics are suitably performed to efficiently reduce the quantity of data so that high-quality image reconstruction can be implemented while minimizing the loss in image quality.

2. Description of the Related Art

To reduce the quantity of data, moving picture data is subjected to data conversion, i.e., data compression, when being stored in a storage medium, such as a flash memory, a hard disk, or a digital versatile disc (DVD), or being distributed via a network. The quality of moving picture data is improving, for example, high-definition (HD) data is being used, and an improvement in the quality of moving picture data results in a marked increase in the quantity of data. Under those circumstances, study and research are being actively conducted on technologies for enhancing compression or decompression efficiency when compressing or reconstructing moving picture data or for implementing high-quality reconstructed data while minimizing the loss in image quality.

A typical compression method for moving picture data is a combination of inter-frame coding and intra-frame coding, such as a Moving Picture Experts Group (MPEG) method. To enhance the efficiency in coding moving pictures by MPEG, many preprocessing techniques for moving pictures have been proposed.

For example, Japanese Unexamined Patent Application Publication No. 2000-32470 discloses the following technique to enhance the coding efficiency while minimizing the loss in image quality. Moving pictures are compressed after reducing the number of pixels by a half (decimation) by being converted from progressive-scan moving pictures into interlace-scan moving pictures. Japanese Unexamined Patent Application Publication No. 2001-352546 discloses the following technique. Before compression, low-pass filters are applied to moving pictures so that the occurrence of block distortions after coding moving pictures is suppressed.

However, the data compression methods disclosed in the above-described publications present the following problems.

In the technique disclosed in Japanese Unexamined Patent Application Publication No. 2000-32470, the final coding efficiency can be considerably improved by reducing the quantity of data by a half before performing compression. In this technique, however, the number of pixels is reduced uniformly and unconditionally in the entire moving picture without considering the local characteristics of the moving picture, and more specifically, without considering the features of blocks forming the moving picture, i.e., the features of blocks having motions and blocks without motions. As a result, the quality of the resulting image is uniformly deteriorated.

The technique disclosed in Japanese Unexamined Patent Application Publication No. 2001-352546 aims at suppressing block distortions occurring, in particular, when low-bit-rate coding is performed. Accordingly, the application of this technique to high-bit-rate coding does not always lead to the enhancement of coding efficiency or the minimization of the loss in image quality.

To solve the above-described problems, the assignee of this application previously proposed a moving picture conversion apparatus and a data compression method implementing high-quality image compression/reconstruction in Japanese Patent Application No. 2003-412501. In this moving picture conversion apparatus, before performing data compression, by considering human visual characteristics, the optimal frame rate and spatial resolution are determined for each small block forming a moving picture in accordance with moving velocity information. More specifically, by utilizing the temporal-integrating function of the human visual system, based on the super-resolution effect produced when visually tracing a moving subject, spatial decimation is performed in the moving direction in accordance with the amount of movement so that the quantity of data is reduced. Details of this moving picture conversion apparatus are described later.

However, if the data compression method proposed in Japanese Patent Application No. 2003-412501, is combined with a general coding technique, such as MPEG, Motion, or Joint Photographic Experts Group (JPEG) to perform coding/decoding, the following problems are encountered.

If image quality is reduced by decimation by utilizing the super-resolution effect, the compression ratio is not improved by the application of a general coding technique.

If image quality is reduced by decimation by utilizing the super-resolution effect, the compression ratio is not improved by the application of a general coding technique for high-frame-rate moving pictures.

In this manner, the above-described data compression method does not improve compression ratio when being combined with a general coding technique, such as MPEG, Motion, or JPEG.

SUMMARY OF THE INVENTION

As discussed above, although some compression methods for enhancing the coding efficiency while minimizing the loss in image quality are known, it is difficult to sufficiently suppress the loss in image quality when reconstructing compressed image data.

It is thus desirable to provide a moving picture conversion apparatus and method, a moving picture reconstruction apparatus and method, and a computer program in which the quantity of data can be efficiently reduced by performing suitable compression/decompression utilizing the human visual characteristics so that high-quality image reconstruction can be implemented while minimizing the loss in image quality.

It is also desirable to provide a moving picture conversion apparatus and method, a moving picture reconstruction apparatus and method, and a computer program in which, when performing coding/decoding on moving picture data by combining the data compression method disclosed in Japanese Patent Application No. 2003-412501 with a general coding technique, such as MPEG, Motion, or JPEG, the quantity of data can be efficiently reduced by performing suitable compression/decompression utilizing the human visual characteristics so that high-quality image reconstruction can be implemented while minimizing the loss in the image quality.

According to an embodiment of the present invention, there is provided a moving picture conversion apparatus for performing data conversion processing on moving picture data. The moving picture conversion apparatus includes a block generator configured to generate blocks by dividing each frame forming the moving picture data into the blocks, an amount-of-movement detector configured to detect an amount of movement of a subject corresponding to each block generated by the block generator, a block processor configured to receive the blocks generated by the block generator and information concerning the amount of movement detected by the amount-of-movement detector to perform decimation processing on the blocks, and a packing processor configured to receive the blocks decimated by the block processor to generate a packed block including pixel data forming the decimated blocks. The packing processor generates a packed block by correcting positions of pixels forming the packed block substantially to relative positions of the corresponding pixels forming an original image before being converted.

In the aforementioned moving picture conversion apparatus, the packing processor may generate a packed block by selecting a plurality of consecutively located blocks which are subjected to decimation processing including spatial decimation processing of a certain processing mode performed by the block processor and by correcting the positions of the selected plurality of consecutively located blocks.

In the aforementioned moving picture conversion apparatus, the packing processor may generate a packed block by calculating the relative positions of the pixels forming the original image and by sorting the pixels forming the packed block based on the calculated relative positions forming the original image.

In the aforementioned moving picture conversion apparatus, the packing processor may correct the position of the pixels forming the packed block by a pixel swapping rule preset in accordance with the moving velocity of the blocks corresponding to the packed block.

The aforementioned moving picture conversion apparatus may further include a coder configured to receive the packed block generated by the packing processor and to perform coding processing on the packed block.

In the aforementioned moving picture conversion apparatus, side information including information concerning the processing mode used in the block processor may be generated and output.

In the aforementioned moving picture conversion apparatus, the side information may include information concerning the decimation processing mode for the blocks and information concerning the amount of movement of the blocks.

According to another embodiment of the present invention, there is provided a moving picture reconstruction apparatus for performing reconstruction processing on converted moving picture data. The moving picture reconstruction apparatus includes an unpacking processor configured to unpack a packed block generated based on decimated data. The unpacking processor on the basis of the packed block having pixels located substantially at relative positions of pixels forming an original image before being converted, an initial packed block in which pixel positions are arranged in the order of frames, and generates a plurality of blocks including frame pixels before being packed on the basis of the reconstructed initial packed block.

In the aforementioned moving picture reconstruction apparatus, the unpacking processor may select a packed block corresponding to a plurality of consecutively located blocks which are subjected to decimation processing including spatial decimation of a certain processing mode, and may reconstruct the initial packed block corresponding to the selected packed block.

In the aforementioned moving picture reconstruction apparatus, the unpacking processor may reconstruct the initial packed block by receiving relative pixel positions set for the pixels forming the packed block located substantially at the relative positions of the pixels forming the original image before being converted, and by sorting the relative pixel positions in ascending order or in descending order, and by changing the pixel positions of the packed block corresponding to the relative pixel positions changed by the sorting.

In the aforementioned moving picture reconstruction apparatus, the unpacking processor may reconstruct the initial packed block by correcting the positions of the pixels forming the packed block by a pixel swapping rule preset in accordance with the moving velocity of the blocks corresponding to the packed block.

The aforementioned moving picture reconstruction apparatus may further include a decoder configured to decode coded data which is coded by a moving picture conversion apparatus based on the packed block. The unpacking processor may receive the packed block decoded by the decoder to unpack the packed block.

In the aforementioned moving picture reconstruction apparatus, the unpacking processor may determine the unpacking processing mode by using information concerning the decimation processing mode for the blocks employed in a moving picture conversion apparatus and information concerning the amount of movement of the blocks.

According to another embodiment of the present invention, there is provided a moving picture reconstruction apparatus for performing reconstruction processing on converted moving picture data. The moving picture reconstruction apparatus includes a block processor configured to receive a packed block having pixels located substantially at relative positions of pixels forming an original image before being converted to convert a frame rate based on the packed block. If it is necessary to increase the number of frames of the packed block to generate frame data from the packed block, the block processor generates a new frame by shifting the packed block on the basis of information concerning the amount of movement of the blocks corresponding to the packed block to convert the frame rate, thereby generating moving picture data having the converted frame rate.

The aforementioned moving picture reconstruction apparatus may further include a filtering processor configured to perform blurring processing on the moving picture data having the converted frame rate formed from the packed block.

According to another embodiment of the present invention, there is provided a moving picture conversion method for performing data conversion processing on moving picture data. The moving picture conversion method includes the steps of generating blocks by dividing each frame forming the moving picture data into the blocks, detecting the amount of movement of a subject corresponding to each of the generated blocks, decimating the generated blocks by receiving the generated blocks and information concerning the detected amount of movement, and generating a packed block including pixel data forming the decimated blocks by receiving the decimated blocks. A packed block is generated by correcting positions of pixels forming the packed block substantially to relative positions of the corresponding pixels forming an original image before being converted.

In the aforementioned moving picture conversion method, a packed block may be generated by selecting a plurality of consecutively located blocks which are subjected to decimation processing including spatial decimation processing of a certain processing mode and by correcting the positions of the selected plurality of consecutively located blocks.

In the aforementioned moving picture conversion method, a packed block may be generated by calculating the relative pixel positions of the pixels forming the original image and by sorting the pixels forming the packed block based on the calculated relative pixel positions.

In the aforementioned moving picture conversion method, in generating a packed block, the position of the pixels forming the packed block may be corrected by a pixel swapping rule preset in accordance with the moving velocity of the blocks corresponding to the packed block.

The aforementioned moving picture conversion method may further include the step of receiving and coding the generated packed block.

The aforementioned moving picture conversion method may further include the step of generating and outputting side information including information concerning the processing mode used for decimating the blocks.

In the aforementioned moving picture conversion method, the side information may include information concerning the decimation processing mode for the blocks and information concerning the amount of movement of the blocks.

According to another embodiment of the present invention, there is provided a moving picture reconstruction method for performing reconstruction processing on converted moving picture data. The moving picture reconstruction method includes the step of unpacking a packed block generated based on decimated data. In unpacking a packed block, on the basis of the packed block having pixels located substantially at relative positions of pixels forming an original image before being converted, an initial packed block in which pixel positions are arranged in the order of frames may be reconstructed, and a plurality of blocks including frame pixels before being packed may be generated on the basis of the reconstructed initial packed block.

In the aforementioned moving picture reconstruction method, in unpacking a packed block, a packed block corresponding to a plurality of consecutively located blocks which are subjected to decimation processing including spatial decimation of a certain processing mode may be selected, and the initial packed block corresponding to the selected packed block may be reconstructed.

In the aforementioned moving picture reconstruction method, in unpacking a packed block, the initial packed block may be reconstructed by receiving relative pixel positions set for the pixels forming the packed block located substantially at the relative positions of the pixels forming the original image before being converted, and by sorting the relative pixel positions in ascending order or in descending order, and by changing the pixel positions of the packed block corresponding to the relative pixel positions changed by the sorting.

In the aforementioned moving picture reconstruction method, in unpacking a packed block, the initial packed block may be reconstructed by correcting the positions of the pixels forming the packed block by a pixel swapping rule preset in accordance with the moving velocity of the blocks corresponding to the packed block.

The aforementioned moving picture reconstruction method may further include decoding coded data which is coded by a moving picture conversion apparatus based on the packed block. In unpacking a packed block, the decoded packed block may be received and unpacked.

In the aforementioned moving picture reconstruction method, in unpacking a packed block, an unpacking processing mode may be determined by using information concerning the decimation processing mode for the blocks employed in a moving picture conversion apparatus and information concerning the amount of movement of the blocks.

According to another embodiment of the present invention, there is provided a moving picture reconstruction method for performing reconstruction processing on converted moving picture data. The moving picture reconstruction method includes the steps of converting a frame rate based on a packed block having pixels located substantially at relative positions of pixels forming an original image before being converted. If it is necessary to increase the number of frames of the packed block to generate frame data from the packed block, in converting the frame rate, the frame rate is converted by generating a new frame by shifting the packed block on the basis of information concerning the amount of movement of the blocks corresponding to the packed block, thereby generating moving picture data having the converted frame rate.

The aforementioned moving picture reconstruction method may further include performing filtering processing by performing blurring processing on the moving picture data having the converted frame rate formed from the packed block.

According to another embodiment of the present invention, there is provided a computer program allowing a computer to execute data conversion processing on moving picture data. The computer program includes the steps of generating blocks by dividing each frame forming the moving picture data into the blocks, detecting an amount of movement of a subject corresponding to each of the generated blocks, decimating the generated blocks by receiving the generated blocks and information concerning the detected amount of movement, and generating a packed block including pixel data forming the decimated blocks by receiving the decimated blocks. A packed block is generated by correcting positions of pixels forming the packed block substantially to relative positions of the corresponding pixels forming an original image before being converted.

According to another embodiment of the present invention, there is provided a computer program allowing a computer to execute reconstruction processing on converted moving picture data, The computer program includes the step of unpacking a packed block generated based on decimated data. In unpacking a packed block, on the basis of the packed block having pixels located substantially at relative positions of pixels forming an original image before being converted, an initial packed block in which pixel positions are arranged in the order of frames is reconstructed, and a plurality of blocks including frame pixels before being packed are generated on the basis of the reconstructed initial packed block.

The computer program according to an embodiment of the present invention is a computer program provided to a general-purpose computer system that can execute various program codes by a computer-readable storage medium, such as a compact disc (CD) or a magneto-optical (MD) disc, or communication medium, such as a network. By providing such a computer program in a computer-readable format, processing associated with the program can be executed on a computer system.

Further features and advantages of the present invention will become apparent from the following description of exemplary embodiment with reference to the attached drawings.

According to an embodiment of the moving picture conversion apparatus and method of the present invention, each frame forming moving picture data is divided into blocks. At least one of spatial decimation or temporal decimation is performed on each block in accordance with the amount of movement of a subject corresponding to the block, and then, a packed block including the pixel data forming the decimated block is generated. In this case, the resulting packed bock has relative positions corresponding to the pixel positions of the original image. With this configuration, when the packed block is coded by, for example, MPEG, Motion, or JPEG, the resulting image data of the packed block becomes a smooth image faithful to the original image so that coding processing with enhanced compression ratio can be implemented, which would otherwise decrease the compression ratio caused by decimated packed blocks. As a result, highly compressed coded data can be generated.

According to an embodiment of the moving picture reconstruction apparatus and method of the present invention, based on a packed block having relative pixel positions corresponding to pixel positions of an original image, an initial packed block in which the pixel positions are arranged in the order of frames is reconstructed. Then, based on the reconstructed initial packed block, a plurality of blocks including frame pixels before being packed are generated. With this configuration, a packed block having pixel positions corrected in the above-described moving picture conversion apparatus can be reconstructed so that correct frame data can be generated.

BRIEF DESCRIPTION OF THE DRAWINGS

Fig. 1 illustrates the basic configuration of a moving picture conversion apparatus that performs data conversion utilizing the super-resolution effect;

Fig. 2 illustrates details of the basic configuration of a moving picture conversion apparatus that performs data conversion utilizing the super-resolution effect;

Figs. 3 through 6 illustrate processing by a block processor in the moving picture conversion apparatus;

Fig. 7 illustrates the configuration of a moving picture conversion apparatus according to an embodiment of the present invention;

Fig. 8 illustrates a block generator and a block processor of the image conversion apparatus according to an embodiment of the present invention;

Figs. 9 and 10 illustrate specific examples of processing by a packing processor of the image conversion apparatus;

Fig. 11 illustrates the configuration of an output unit of the image conversion apparatus;

Fig. 12 illustrates an example of the configuration of image data to be processed by the moving picture conversion apparatus;

Fig. 13 illustrates blocks of a moving subject;

Fig. 14 illustrates frames subjected to spatial decimation processing by the block processor;

Fig. 15 illustrates blocks subjected to packing processing by the packing processor;

Fig. 16 illustrates a specific example of calculations of relative pixel positions x;

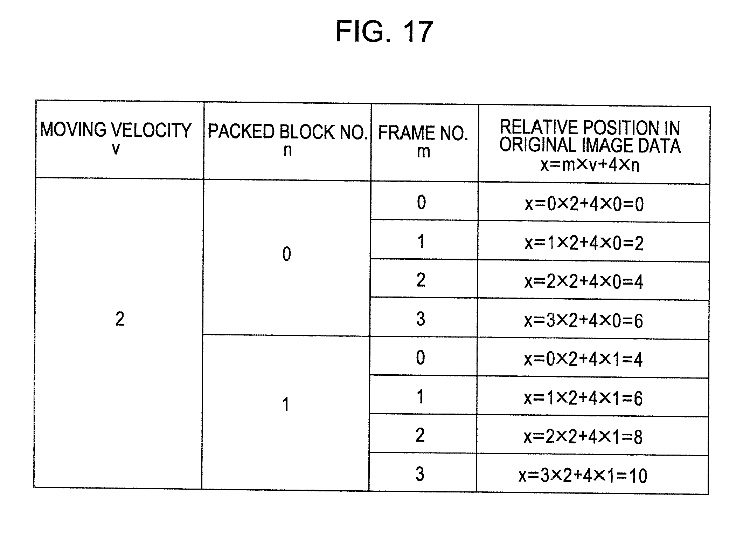

Fig. 17 illustrates the calculated relative pixel positions x;

Fig. 18 illustrates a diagram illustrating the correlation between the moving velocity v and the relative pixel position x when the number of blocks is two;

Fig. 19 is a block diagram illustrating the detailed configuration of a packing portion that executes packing processing on decimated data generated by a block processing portion;

Figs. 20 and 21 illustrate examples of blocks processed by different interblock-pixel sorting packing portions;

Fig. 22 illustrates the configuration and processing of an interblock-pixel sorting packing portion;

Fig. 23 illustrates calculation examples of the relative pixel positions x of representative pixels of each frame included in packed blocks;

Fig. 24 illustrates initial packed blocks generated by performing packing processing on two adjacent decimated blocks and illustrates sorted packed blocks;

Fig. 25 illustrates the configuration and processing of a packing portion;

Fig. 26 illustrates a calculation example of the relative pixel positions x of two blocks subjected to spatial decimation and temporal decimation processing when the subject is moving toward the left at two pixels per frame;

Fig. 27 illustrates initial packed blocks generated by performing packing processing on two adjacent decimated blocks and illustrates the sorted blocks;

Fig. 28 illustrates a diagram illustrating the correlation between the moving velocity v and the relative pixel position x when the number of blocks is four;

Fig. 29 illustrates the configuration and processing of a packing portion that performs pixel-column swapping packing processing;

Fig. 30 illustrates examples of settings of pixel-column swapping flags;

Fig. 31 illustrates the configuration and processing of an interblock-pixel pixel-column swapping packing portion;

Fig. 32 illustrates the configuration and processing of interblock-pixel pixel-column swapping processors;

Figs. 33 through 38 illustrate pixel-column swapping processing operations performed by different pixel-column swapping portions;

Fig. 39 illustrates a diagram illustrating the correlation between the moving velocity v and the relative pixel position x for packed blocks subjected to 1/2-spatial decimation and 1/2-temporal decimation processing;

Fig. 40 illustrates the configuration and processing of a packing portion that executes predetermined pixel swapping processing in accordance with the moving velocity v;

Fig. 41 illustrates examples of settings of pixel-column swapping flags;

Fig. 42 illustrates the configuration and processing of an interblock-pixel pixel-column swapping packing portion;

Fig. 43 illustrates the configuration and processing of interblock-pixel pixel-column swapping processors;

Fig. 44 illustrates the configuration and processing of a moving picture reconstruction apparatus that performs moving picture decompression processing;

Fig. 45 illustrates the configurations of a decoder, a block generator, and a block processor of the moving picture reconstruction apparatus;

Fig. 46 illustrates another example of the configuration of the block generator;

Fig. 47 illustrates the configuration and processing of an unpacking processor;

Fig. 48 illustrates the configuration and processing of an interblock-pixel sorting unpacking portion;

Figs. 49 and 50 illustrate processing performed by the interblock-pixel sorting unpacking portion;

Fig. 51 illustrates the configuration and processing of an unpacking processor;

Fig. 52 illustrates the configuration and processing of an interblock-pixel sorting unpacking portion;

Figs. 53 and 54 illustrate performed by the interblock-pixel sorting unpacking portion;

Fig. 55 illustrates the configuration and processing of an unpacking processor;

Fig. 56 illustrates the configuration and processing of an interblock-pixel pixel-column swapping unpacking portion;

Fig. 57 illustrates the configuration and processing of interblock-pixel pixel-column swapping unpacking portions;

Fig. 58 illustrates the configuration and processing of an unpacking processor;

Fig. 59 illustrates the configuration and processing of an interblock-pixel pixel-column swapping unpacking portion;

Fig. 60 illustrates the configuration and processing of interblock-pixel pixel-column swapping unpacking portions;

Fig. 61 illustrates the configuration and processing of a moving picture reconstruction apparatus that performs moving picture reconstruction for low-frame-rate devices;

Fig. 62 illustrates the configurations of a decoder, a block generator, and a block processor of the moving picture reconstruction apparatus;

Fig. 63 illustrates the configuration of a frame rate conversion processor; and

Fig. 64 illustrates a specific example of a block movement processor.

## DESCRIPTION OF THE PREFERRED EMBODIMENTS

A moving picture conversion apparatus and method, a moving picture reconstruction apparatus and method, and a computer program according to an embodiment of the present invention are described below with reference to the accompanying drawings. A description is given in the following order.

1. Basic Configuration of Moving Picture Conversion Apparatus Utilizing Super-Resolution Effect
2. Apparatus and Method for Performing Moving Picture Compression According to Embodiment of the Invention
3. Apparatus and Method for Performing Moving Picture Decompression According to Embodiment of the Invention
4. Apparatus and Method for Performing Moving Picture Decompression for Low-Frame-Rate Devices

1. Basic Configuration of Moving Picture Conversion Apparatus Utilizing Super-Resolution Effect

The basic configuration of the moving picture conversion apparatus that compresses moving pictures by utilizing the super-resolution effect is described first. In this basic configuration, an image is divided into small blocks, and the data is compressed by adaptively reducing the number of pixels or frames in accordance with the moving velocity of each block. Details of this basic configuration are disclosed in Japanese Patent Application No. 2003-412501.

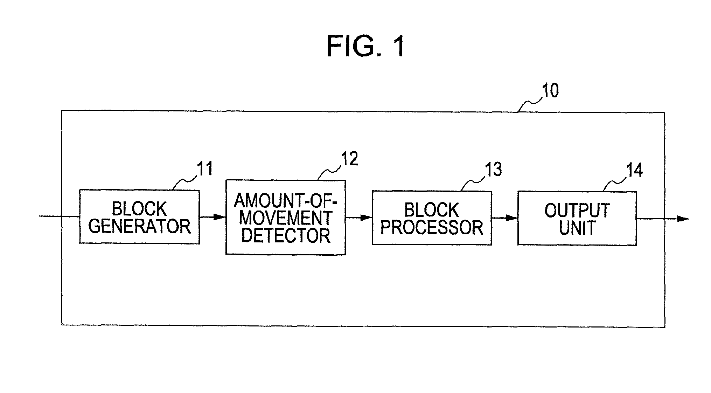

Fig. 1 illustrates the configuration of a moving picture conversion apparatus 10 disclosed in Japanese Patent Application No. 2003-412501. In the moving picture conversion apparatus 10, the quantity of data can be reduced by conducting moving picture conversion utilizing the super-resolution effect without observers recognizing the loss in image quality caused by the reduction in the quantity of data.

The super-resolution effect is a visual effect such that, when an observer visually traces a moving subject discretely sampled in the spatial direction, the resolution of a displayed image appears to be higher than the actual resolution. This is based on the visual characteristic in which humans recognize the summation of a plurality of images presented to them within a certain period of time. This characteristic originates from the visual temporal-integrating function, which is known as "Bloch's law" and is disclosed in, for example, Shikaku Joho Handbook (Visual Information Handbook) pp. 219-220 edited by the Vision Society of Japan. The integral period of time that can be supported by Bloch's law is reported to be about 25 to 100 ms, though it varies depending on the presentation conditions, such as the intensity of background light.

In the moving picture conversion apparatus 10, moving picture conversion utilizing the super-resolution effect produced by the temporal integrating function is performed so that the quantity of data can be reduced without an observer recognizing the loss in image quality. Details of the configuration of the moving picture conversion apparatus 10 shown in Fig. 1 are discussed below.

A block generator 11 divides each frame of an input moving picture into blocks, which partitions pixels forming the moving picture, and supplies the corresponding blocks to an amount-of-movement detector 12. The amount-of-movement detector 12 detects the amount of movement for each block supplied from the block generator 11, and supplies the block and the detected amount of movement to a block processor 13. The block processor 13 performs moving picture conversion, i.e., moving picture compression, on the block in accordance with the amount of movement, thereby reducing the quantity of data. The block processor 13 then supplies the block having a data quantity reduced by the block processor 13 to an output unit 14. The output unit 14 then collectively outputs the processed blocks as stream data.

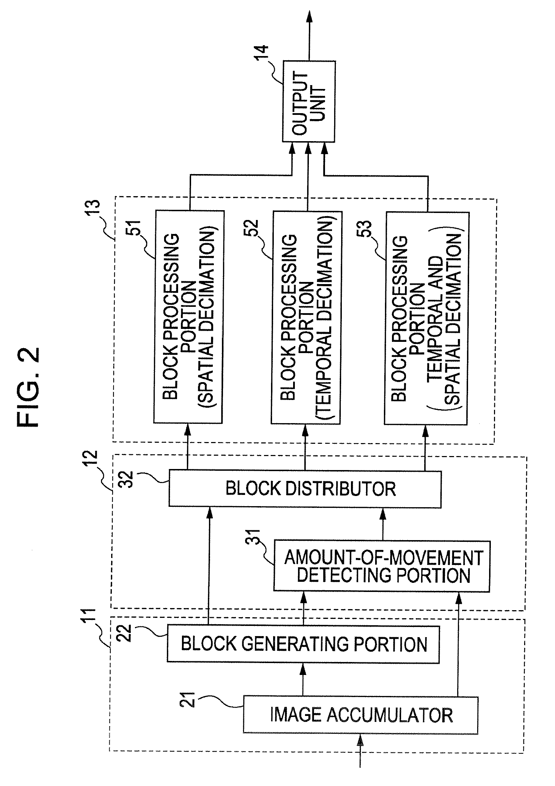

Details of the above-described elements forming the moving picture conversion apparatus 10 are discussed below with reference to Fig. 2. In the block generator 11, each frame forming a moving picture supplied to the moving picture conversion apparatus 10 is input into an image accumulator 21, and the image accumulator 21 accumulates the input frames. When the number of frames accumulated in the image accumulator 21 becomes N (N is a positive integer, for example, 4), the image accumulator 21 supplies the N consecutive frames to a block generating portion 22, and also supplies the Mth frame of the N frames (Mth frame means that that frame is the Mth frame stored in the image accumulator 21) to the amount-of-movement detector 12, and more specifically, to an amount-of-movement detecting portion 31.

The block generating portion 22 divides each of the N frames supplied from the image accumulator 21 into blocks of a certain size (for example, 8x8 or 16x16 pixels), and outputs the corresponding blocks to the amount-of-movement detector 12, and more specifically, to a block distributor 32. The block generating portion 22 also supplies the Pth frame of the N frames (Pth frame means that that frame is the Pth frame stored in the image accumulator 21) to the amount-of-movement detector 12, and more specifically, to the amount-of-movement detecting portion 31. The Pth frame is different from the Mth frame.

In the amount-of-movement detector 12, the amount-of-movement detecting portion 31 detects motion vectors of each block of the Pth frame supplied from the block generating portion 22 of the block generator 11 by referring to the Mth frame supplied from the image accumulator 21 by conducting, for example, block matching between the frames, and supplies the detected motion vectors to the block distributor 32. The motion vectors represent the amount of movement between frames in the horizontal direction (X axis) and the vertical direction (Y axis). When detecting motion vectors, the amount-of-movement detecting portion 31 may enlarge the image for enhancing the precision in detecting the amount of movement.

The block distributor 32 receives N blocks (N blocks located at the same position in the N frames) from the block dividing portion 22, and also receives the amount of movement of the block of the Pth frame among the N blocks from the amount-of-movement detecting portion 31. The block distributor 32 supplies the received N blocks and information concerning the amount of movement to the block processor 13, and more specifically, to a block processing portion 51, 52, or 53 that performs processing in accordance with the amount of movement.

More specifically, if the amount of movement in the horizontal direction (X axis) or in the vertical direction (Y axis) supplied from the amount-of-movement detecting portion 31 is two pixels or more, the block distributor 32 supplies the N blocks supplied from the block generating portion 22 and the amount of movement supplied from the amount-of-movement detecting portion 31 to the block processing portion 51. If the amounts of movements both in the horizontal direction and the vertical direction are one pixel or more and less than two pixels, the block distributor 32 outputs the N blocks and amount of movement to the block processing portion 53. If the amount of movement is other than the above-described pixels, the block distributor 32 supplies the N blocks and amount of movement to the block processing portion 52.

That is, the block distributor 32 distributes the block image to the block processing portion 51, 52, or 53 which determines the optimal frame rate and spatial resolution in accordance with the amount of movement supplied from the amount-of-movement detecting portion 31 and which converts the image data in accordance with the optimal frame rate and spatial resolution.

In the block processor 13, the block processing portion 51 reduces the number of pixels of the N blocks (whose amount of movement in the horizontal or vertical direction is two pixels or more) located at the same position in the N consecutive frames (N=4) supplied from the block distributor 32 in accordance with the amount of movement supplied from the block distributor 32. That is, the block processing portion performs 51 spatial decimation processing.

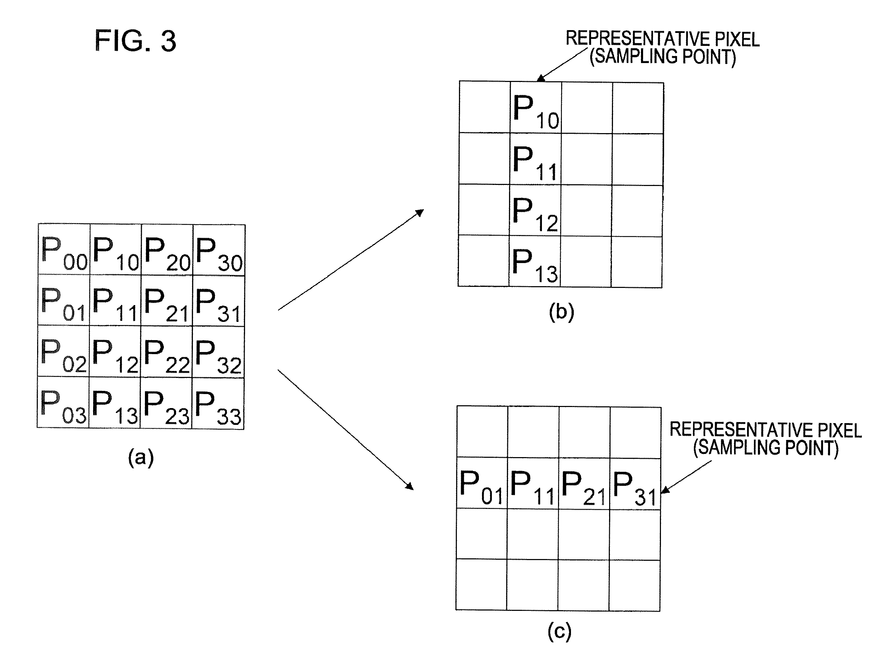

More specifically, when the amount of movement in the horizontal direction is two pixels or more, if a subject block has 4x4 pixels, as indicated by (a) in Fig. 3, the block processing portion 51 selects only one of the four pixels in the horizontal direction as a representative pixel. As indicated by (b) in Fig. 3, pixel $P_{10}$ is selected from pixels $P_{00}$ through $P_{30}$ as a representative pixel (sampling point), and the other pixels, i.e., $P_{00}$, $P_{20}$, and $P_{30}$ are omitted. Similarly, pixel $P_{11}$ is selected from $P_{01}$ through $P_{31}$ as a representative pixel (sampling point), pixel $P_{12}$ is selected from pixels $P_{02}$ through $P_{32}$ as a representative pixel, and pixel $P_{13}$ is selected from pixels $P_{03}$ through $P_{33}$ as a representative pixel.

When the amount of movement in the vertical direction is two pixels or more, if a subject block has 4x4 pixels, as indicated by (a) in Fig. 3, the block processing portion 51 selects only one of the four pixels in the vertical direction as a representative pixel. As indicated by (c) in Fig. 3, pixel $P_{01}$ is selected from pixels $P_{00}$ through $P_{03}$ as a representative pixel (sampling point), and the other pixels, i.e., $P_{00}$, $P_{02}$, and $P_{03}$ are omitted. Similarly, pixel $P_{11}$ is selected from $P_{10}$ through $P_{13}$ as a representative pixel (sampling point), pixel $P_{21}$ is selected from pixels $P_{20}$ through $P_{23}$ as a representative

pixel, and pixel $P_{31}$ is selected from pixels $P_{30}$ through $P_{33}$ as a representative pixel.

As a result of performing spatial decimation processing on the N (N=4) blocks located at the same position in the N consecutive frames (N=4), the data quantity of each block can be reduced to one fourth, and the data quantity of the four blocks is also reduced to one fourth. The block processing portion 51 supplies the four blocks having a reduced data quantity (1/4) to the output unit 14.

The processing executed by the block processing portion 52 shown in Fig. 2 is as follows. The block processing portion 52 reduces the number of frames of the N blocks (whose amounts of movements both in the horizontal direction and in the vertical direction are less than one pixel) located at the same position in the N consecutive frames supplied from the block distributor 32. That is, the block processing portion 52 performs temporal decimation processing.

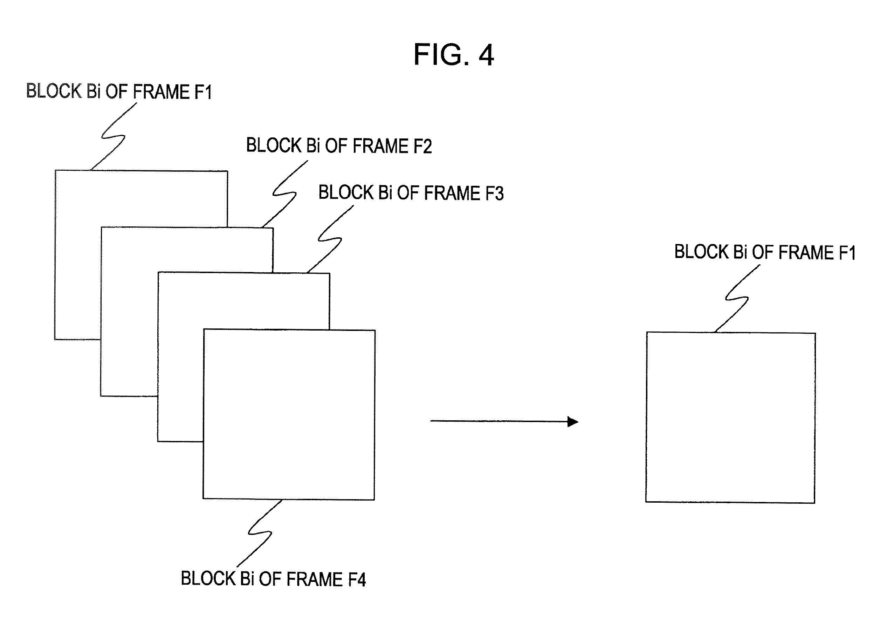

More specifically, among four blocks Bi located at the same position in four consecutive frames F1 through F4, as shown in Fig. 4, the block processing portion 52 selects only one block (in this case, block Bi of frame F1). The block processing portion 52 then supplies the four blocks having a reduced data quantity (1/4) (one block Bi) to the output unit 14. The pixel data of the selected one block serves as sample data of the four frames.

The block processing portion 53 reduces the number of pixels (spatial decimation processing) and the number of frames (temporal decimation processing) of the N blocks (whose amounts of movements both in the horizontal direction and in the vertical direction are one pixel or more and less than two pixels) located at the same position in the N consecutive frames supplied from the block distributor 32.

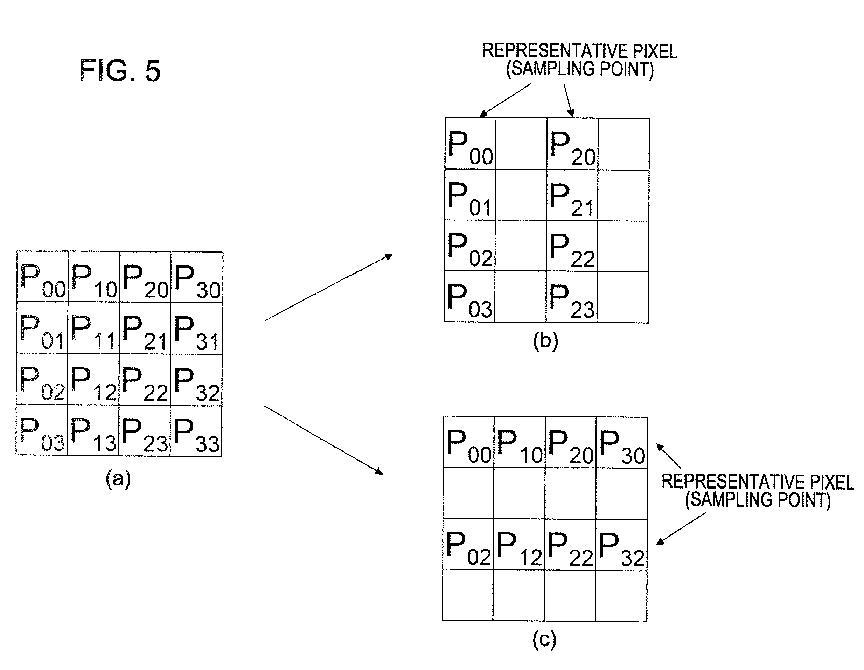

When a subject block has 4x4 pixels, as indicated by (a) in Fig. 5, as the horizontal decimation processing, the block processing portion 53 selects two pixels from four horizontal pixels as representative pixels, unlike the decimation processing performed by the block processing portion 51. In the example indicated by (b) in Fig. 5, only two pixels $P_{00}$ and $P_{20}$ are selected from four pixels $P_{00}$ through $P_{30}$ as representative pixels (sampling points), and the pixels $P_{10}$ and $P_{30}$ are omitted. Similarly, two pixels $P_{01}$ and $P_{21}$ are selected from four pixels $P_{01}$ through $P_{31}$ as representative pixels, two pixels $P_{02}$ and $P_{22}$ are selected from four pixels $P_{02}$ through $P_{32}$ as representative pixels, and two pixels $P_{03}$ and $P_{23}$ are selected from four pixels $P_{03}$ through $P_{33}$ as representative pixels.

When a subject block has 4x4 pixels, as indicated by (a) in Fig. 5, as the vertical decimation processing, the block processing portion 53 selects two pixels from four vertical pixels as representative pixels. In the example indicated by (c) in Fig. 5, only two pixels $P_{00}$ and $P_{02}$ are selected from four pixels $P_{00}$ through $P_{03}$ as representative pixels (sampling points), and the pixels $P_{01}$ and $P_{03}$ are omitted. Similarly, two pixels $P_{10}$ and $P_{12}$ are selected from four pixels $P_{10}$ through $P_{13}$ as representative pixels, two pixels $P_{20}$ and $P_{22}$ are selected from four pixels $P_{20}$ through $P_{23}$ as representative pixels, and two pixels $P_{30}$ and $P_{32}$ are selected from four pixels $P_{30}$ through $P_{33}$ as representative pixels.

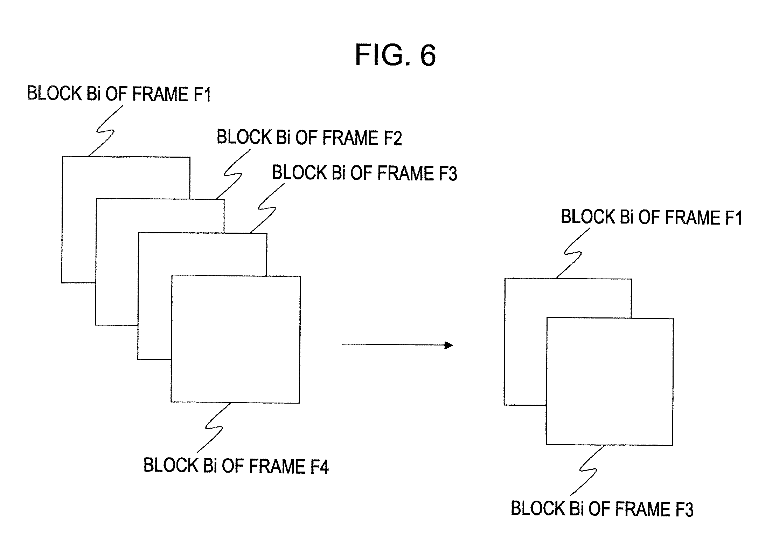

The block processing portion 53 also reduces the number of frames (temporal decimation processing). More specifically, the block processing portion 53 reduces the number of frames by selecting two blocks from four blocks located at the same position in four consecutive frames F1 through F4. Unlike the temporal decimation processing performed by the block processing portion 52, the block processing portion 53 reduces the number of frames, as shown in Fig. 6, by selecting two blocks (two blocks Bi of frames F1 and F3) located at the same positions in frames F1 through F4. Pixel data of the selected two blocks serves as sample data of the four frames. In this case, as a result of performing the spatial decimation processing discussed with reference to Fig. 5, the eight sampling points are already selected for one block, and a total of 16 sampling points are selected from the two blocks as sample data of the four frames.

The block processing portion 53 performs spatial decimation processing to reduce the quantity of data by one half, as discussed with reference to Fig. 5, and also performs temporal decimation processing to reduce the quantity of data by one half, as discussed with reference to Fig. 6, on the supplied four blocks, so that the quantity of the four blocks is reduced to one fourth ($(1/2) \times (1/2)=1/4$). The block processing portion 53 then supplies the data having a reduced data quantity (1/4) to the output unit 14.

The output unit 14 generates stream data from the N blocks having a reduced data quantity supplied from the block processing portions 51 through 53.

As described above, the assignee of this application proposed the above-described moving picture conversion apparatus disclosed in Japanese Patent Application No. 2003-412501. In this moving picture conversion apparatus, before performing data compression, by considering human visual characteristics, the optimal frame rate and spatial resolution are determined for each of small blocks forming a moving picture in accordance with moving velocity information. More specifically, by using the temporal-integrating function of the human visual system, based on the super-resolution effect produced when visually tracing a moving subject, the quantity of data is spatially reduced in the moving direction in accordance with the amount of movement.

2. Apparatus and Method for Performing Moving Picture Compression According to Embodiment of the Present Invention

When performing temporal decimation processing according to the data compression method employed in the above-described moving picture conversion apparatus, the following problems may be presented.

When the data compression method employed in the above-described moving picture conversion apparatus is combined with a general coding technique, such as MPEG, Motion, or JPEG, to perform coding/decoding, the following problems are encountered.

If the image quality is reduced by decimation by utilizing the super-resolution effect, the application of a general coding technique does not improve the compression ratio.

If the image quality is reduced by decimation by utilizing the super-resolution effect, the application of a general coding technique for high-frame-rate moving pictures does not improve the compression ratio.

An apparatus and method for conducting moving picture compression that solves the above-described problems according to an embodiment of the present invention is described below.

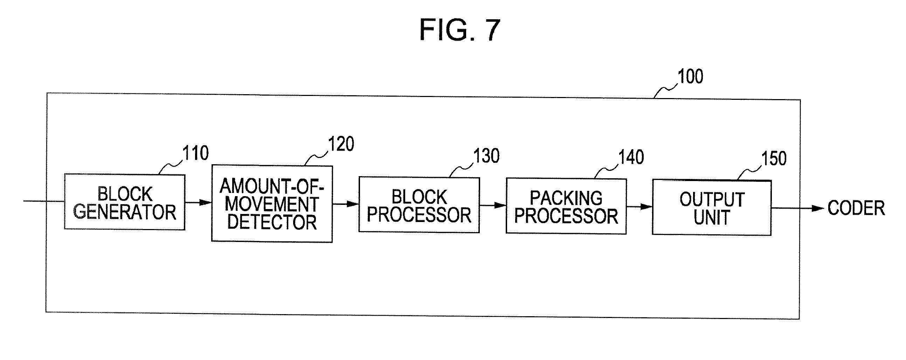

Fig. 7 is a block diagram illustrating the schematic configuration of a moving picture conversion apparatus 100 according to an embodiment of the present invention. The moving picture conversion apparatus 100 includes a block generator 110, an amount-of-movement detector 120, a block processor 130, a packing processor 140, and an output unit 150.

The configurations and operations of the block generator 110, the amount-of-movement detector 120, and the block processor 130 are similar to those of the counterparts of the moving picture conversion apparatus 10 disclosed in Japanese Patent Application No. 2003-412501. That is, subject moving picture data is input into the moving picture conversion apparatus 100, and then, the block generator 110 divides each frame forming the moving picture into predetermined blocks, and supplies the corresponding blocks to the amount-of-movement detector 120.

The amount-of-movement detector 120 detects the amount of movement for each block supplied from the block generator 110, and supplies the block and information concerning the amount of movement to the block processor 130. The block processor 130 performs moving picture conversion, i.e., moving picture compression, such as spatial decimation processing, temporal decimation processing, or spatial decimation processing and temporal decimation processing, in accordance with the amount of movement supplied from the amount-of-movement detector 120, thereby reducing the quantity of data. Then, the packing processor 140 packs (integrates) the blocks having a data quantity reduced by the block processor 130 for every M frames, and then performs frame rate conversion. More specifically, when the original frame rate of the input moving picture is indicated by R and the number of frames packed by the packing processor 140 is indicated by M, the packing processor 140 converts the frame rate of the packed blocks into R/M.

The packing processor 140 supplies the blocks having the converted frame rate (R/M) to the output unit 150. The output unit 150 combines the block data in units of frames into stream data, and outputs the stream data to a known coder that can perform moving picture compression, such as MPEG compression.

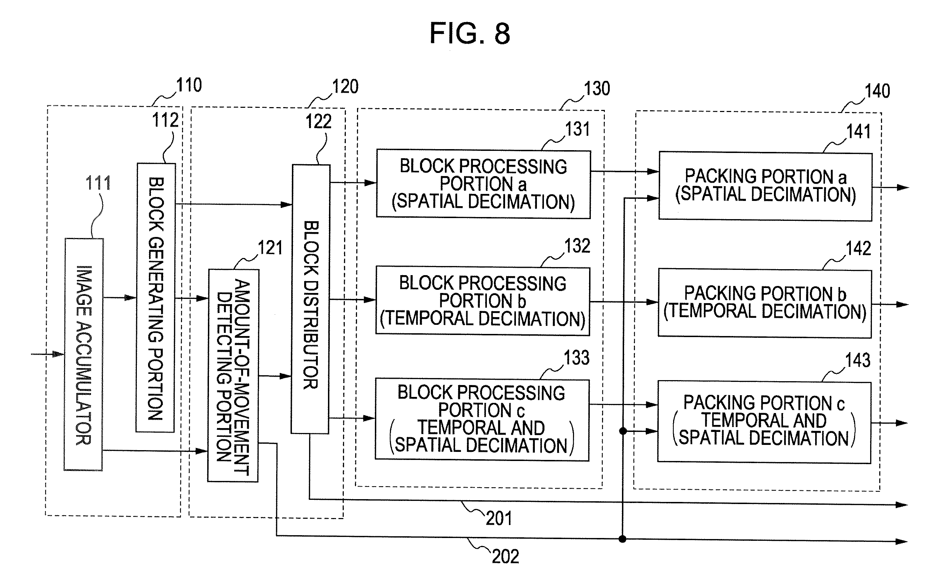

Details of the configurations of the block generator 110, the amount-of-movement detector 120, the block processor 130, and the packing processor 140 of the moving picture conversion apparatus 100 are discussed below with reference to Fig. 8.

In the block generator 110, N frames (N=4) of a subject moving picture are accumulated in an image accumulator 111. A block generating portion 112 divides each frame into blocks of a certain size (for example, 8x8 or 16×16 pixels), and supplies the corresponding blocks to a block distributor 122. The size of the divided blocks is reported to the amount-of-movement detecting portion 121.

In the amount-of-movement detector 120, the amount-of-movement detecting portion 121 obtains the Mth frame and the (M+L)th frame (in this embodiment, M=2 and L=1) accumulated in the image accumulator 111, and detects motion vectors of each block by using a known technique, for example, block matching, in accordance with the block size of the divided blocks supplied from the block dividing portion 112. More specifically, by using the N (N=4) blocks as the processing unit, the amount-of-movement detecting portion 121 performs block matching between the M frame and the M+L frame, i.e., between the second frame and the third frame, to detect motion vectors, thereby calculating the amount of movement of the corresponding block based on the motion vectors.

To use the amount of movement detected in the amount-of-movement detecting portion 121 for decoding, information concerning the amount of movement is supplied to the output unit 150 as output 202, and is coded together with the subject moving picture in a coder, which is discussed below. The unit for representing the amount of movement can be determined according to the motion-vector detecting method or the error reduction method.

As sated above, in this embodiment, the amount-of-movement detecting portion 121 calculates the amount of movement by block matching using the two consecutive frames (Mth frame and (M+L)th frame, i.e., the second frame and the third frame) among the N frames. Alternatively, the amount-of-movement detecting portion 121 may calculate the amount of movement by selecting other frames according to another technique. For example, all the N frames may be used for calculating the amount of movement.

The block distributor 122 distributes the blocks to block processing portion 131, 132, or 133 (block processing portion a, b, or c), the block processing portions 131, 132, and 133 performing block compression different from each other. The block distributor 122 receives the amount of movement of the blocks for the N frames output from the amount-of-movement detecting portion 121 and the block image data for the N frames output from the block generating portion 112.

The block distributor 122 distributes the blocks for the N frames to the corresponding block processing portion 131, 132, or 133 in accordance with the amount of movement of the blocks. If the block distribution conditions are used for decoding, the block distributor 122 sets the block distribution conditions as, for example, a block distribution flag and outputs it to the output unit 150 as output 201. The output 201 is coded together with the subject moving picture in a cader, which is discussed below.

The block distributor 122 uses the amount of movement detected by the amount-of-movement detecting portion 121 as the block distribution conditions. In this embodiment, if the greater value of the amount of movement in the horizontal direction and that in the vertical direction is two pixels or more, the block distributor 122 distributes the corresponding blocks to the block processing portion 131 that performs spatial decimation processing. If the greater value of the amount of movement in the horizontal direction and that in the vertical direction is one pixel or more and less than two pixels, the block distributor 122 distributes the corresponding blocks to the block processing portion 133 that performs temporal decimation processing and the spatial decimation processing. If the greater value of the amount of movement in the horizontal direction and that in the vertical direction is less than one pixel, the block distributor 122 distributes the corresponding blocks to the block processing portion 132 that performs temporal decimation processing. The conditions for outputting the blocks to the block processing portion 131, 132, or 133 are not restricted to those described above, and other conditions may be applied.

As discussed above, the block processing portion 131, 132 or 133 receives the block image data and information concerning the associated amount of movement from the block distributor 122, and conducts pixel/decimation processing as data compression.

The block processing portion 131 reduces the number of pixels of the received blocks in accordance with the amount of movement received together with the subject block data. In this embodiment, if the amount of movement in the horizontal direction is two pixels or more, the block processing portion 131 divides the pixels of the block into $1\times4$-pixel units and selects one of the four pixels in each unit. If the amount of movement in the vertical direction is two pixels or more, the block processing portion 131 divides the pixels of the block into $4\times1$-units and selects one of the four pixels in each unit. This decimation processing is similar to that discussed with reference to Fig. 3. If the amounts of movements both in the horizontal direction and in the vertical direction are two pixels or more, the block processing portion 131 divides the pixels of the block into $2\times2$-block units and selects one of the four pixels in each unit.

Normally, integrating all four pixels into one pixel value seriously decreases the image quality. However, the block processing portion 131 performs spatial decimation processing only on the blocks whose amount of movement in the horizontal or vertical direction is two pixels or more. Accordingly, the super-resolution effect is produced due to the temporal-integrating function of the visual system, which is known as Bloch's law. Thus, when an observer visually traces a moving subject discretely sampled in the spatial direction, the resolution of a displayed image appears to be higher than the actual resolution without the observer recognizing the loss in image quality. That is, if the block is moving at sufficiently high speed and the frame rate of the moving picture is sufficiently high, it is difficult to recognize the loss in image quality.

The block processing portion 132 reduces the number of frames of the received blocks (temporal decimation processing). The block processing portion 132 receives N blocks located at the same position in N frames. In this embodiment, if the amounts of movements both in the horizontal direction and in the vertical direction are less than ane pixel, the block processing portion 132 integrates all the four blocks into one of the block. This processing corresponds to the processing discussed with reference to Fig. 4.

The block processing portion 133 reduces the number of pixels and the number of frames of the received blocks (spatial decimation processing and temporal decimation processing). The basic operation of the reduction processing performed by the block processing portion 133 is a combination of the spatial decimation processing performed by the block processing portion 131 and the temporal decimation processing performed by the block processing portion 132.

However, the number of pixels and the number of frames to be reduced by the block processing portion 133 are different from that of the block processing portion 131 and from that of the block processing portion 132. In the block processing portion 133, the number of pixels is reduced in units of two pixels rather than in the units of four pixels. That is, the block processing portion 131 reduces the number of pixels by dividing them into $1\times4$-units, $4\times1$-unit, or 2x2-units. In contrast, the block processing portion 133 reduces the number of pixels by dividing them into $1\times2$-units or $2\times1$-units. More specifically, when the amount of movement in the horizontal direction is one pixel or more and less than two pixels, the block processing portion 133 divides the pixels into $1\times2$-units, and selects one of the two pixels in each unit. When the amount of movement in the vertical direction is one pixel or more and less than two pixels, the block processing portion 133 divides the pixels into $2\times1$-units, and selects one of the two pixels in each unit. This processing corresponds to the processing discussed with reference to Fig. 5.

The block processing portion 133 also reduces the number of frames in units of two frames, unlike the block processing portion 132. This processing is associated with the processing discussed with reference to Fig. 6.

The blocks having a data quantity reduced by the block processing portion 131, 132, or 133 are supplied to packing portion 141, 142, or 143 (packing portion a, b, or c), respectively. The packing portion 141, 142, or 143 packs (integrates) the blocks for every M frames, converts the frame rate into R/M, and then outputs the blocks to the output unit 150. As stated above, R represents the original frame rate of the input moving picture, and M designates the number of frames packed by the packing processor 140.

The processing performed by the packing processor 140 is described below, assuming that the number of frames packed by the packing processor 140 is M (M=4) and the frame rate is 1/4.

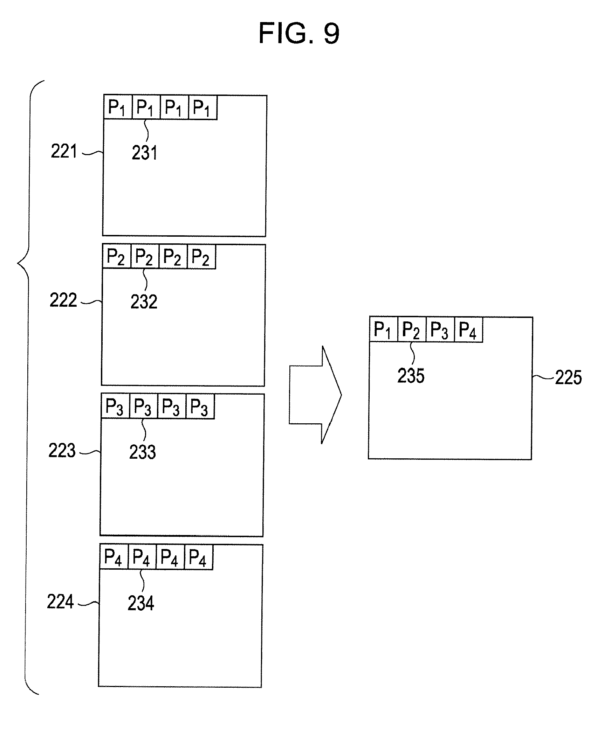

The operations performed by the packing portions 141, 142, and 143 are different from each other. The processing performed by the packing portion 141 is discussed first with reference to Fig. 9.

The input into the packing portion 141 is the output from the block processing portion 131. The output from the block processing portion 131 is four blocks extracted from four consecutive frames subjected to spatial decimation, i.e., the four blocks subjected to spatial decimation, such as the blocks shown in Fig. 3.

The four blocks are indicated by blocks 221 through 224 in Fig. 9. In the $1\times4$ units in the blocks, for example, in pixel sets 231 through 234 in Fig. 9, the four pixels in each pixel set have been converted into the same pixel value after being subjected to spatial decimation by the block processing portion 131. More specifically, all the pixel values of the $1\times4$ unit of the block 221 are P1, all the pixel values of the $1\times4$ unit of the block 222 is P2, all the pixel values of the $1\times4$ unit of the block 223 is P3, and all the pixel values of the $1\times4$ unit of the block 224 is P4. The packing portion 141 reduces the number of frames to one fourth by integrating the four pixels P1 through P4 into one $1\times4$ unit.

A block 225 shown in Fig. 9 is the output of the packing portion 141, and the pixel values of a $1\times4$-pixel set 235 are P1 through P4. The above-described packing processing is performed when the block processing portion 131 performs horizontal decimation on $1\times4$-unit pixels. If the block processing portion 131 performs decimation on $4\times1$-unit pixels or $2\times2$-unit pixels, the packing portion 141 performs processing similar to the above-described packing processing.

The processing performed by the packing portion 142 is as follows. As in the packing portion 141, the input into the packing portion 142 is four blocks extracted from four consecutive frames. Unlike the packing portion 141, however, the four blocks are blocks subjected to temporal decimation (see Fig. 4), and the selected representative pixels have the same pixel values among the frames. Accordingly, the packing portion 142 selects a suitable block from among the four blocks.

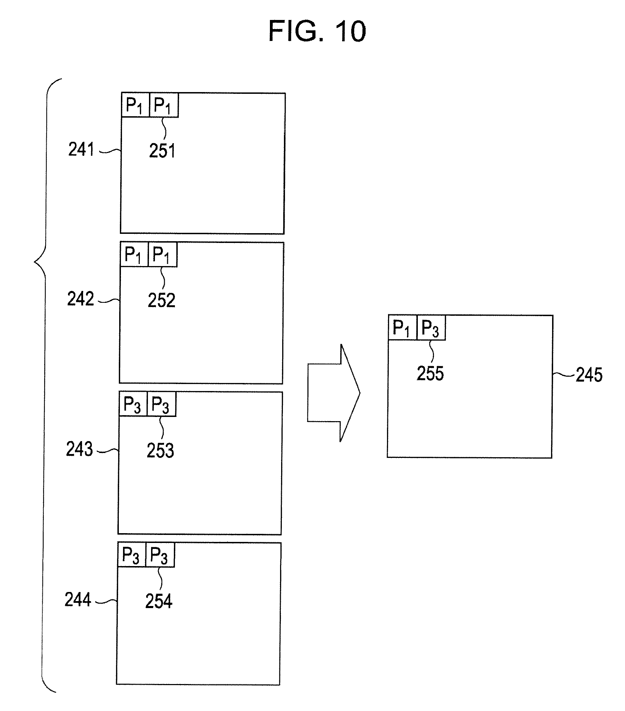

The processing performed by the packing portion 143 is discussed below with reference to Fig. 10. The input into the packing portion 143 is four blocks extracted from four consecutive frames, as in the other packing portions 141 and 142, but the four blocks have been subjected to both spatial decimation and temporal decimation. As shown in Fig. 10, blocks obtained from the first and second frames, i.e., blocks 241 and 242, have the same pixel value (P1) 251 and 252. The blocks obtained from the third and fourth frames, i.e., blocks 243 and 244, have the same pixel value (P3) 253 and 254.

The packing portion 143 performs packing processing by using the two blocks, i.e., the block 242 of the second frame and the block 243 of the third frame. In contrast to the packing portion 141 that performs packing in units of four pixels, the packing portion 143 performs packing processing in units of two pixels. More specifically, the two adjacent pixels indicated by 251 through 254 have the same pixel value, as shown in Fig. 10, and those pixels are rearranged as a pixel set 255 to form an output block 245. As a result, the frame rate can be reduced to one fourth. The decimation processing on $1\times2$-pixel units is shown in Fig. 10 by way of example, and decimation processing on 2x1-pixel units can be performed.

In the example shown in Fig. 9, the pixel values P1 through P4 are sequentially arranged from the left to form the pixel set 235, and in the example shown in Fig. 10, the pixel values P1 and P3 are arranged at the left and right sides, respectively, to form the pixel set 255. Various techniques may be used for determining the order of arranging the pixel values as long as the packing algorithms match the unpacking algorithms used for decoding. Details of the packing algorithms employed in this embodiment are given below.

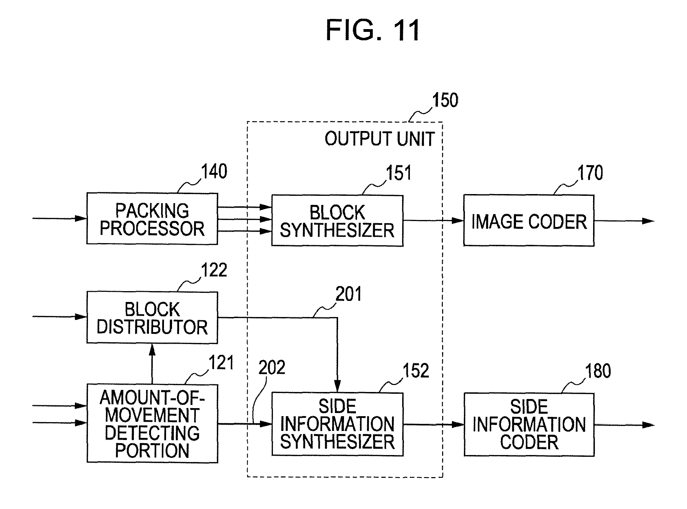

The configuration of the output unit 150 of this embodiment is described below with reference to the block diagram in Fig. 11.

After being subjected to spatial decimation, temporal decimation, or spatial and temporal decimation in accordance with the amount of movement detected in the subject block by the block processor 130, the moving picture data is subjected to packing processing in the packing processor 140 and is then input into a block synthesizer 151 of the output unit 150. The block synthesizer 151 synthesizes a frame image having a frame rate R/M from the moving picture received from the packing processor 140. As stated above, the original frame rate of the input moving picture is R, and the number of frames packed by the packing processor 140 is M.

The synthesized image generated in the block synthesizer 151 is image frame data having a frame rate R/M including blocks subjected to different compression operations. The synthesized image is supplied to an image coder 170. The image coder 170 codes the synthesized image according to a general coding method, such as MPEG, Motion, or JPEG.

The block synthesizer 150 serves to synthesize a moving picture that can be coded by the image coder 170 from the block data processed by the packing processor 140. In this embodiment, since the data is reduced to one fourth by the block processor 130, the block synthesizer 150 reconstructs a frame having a 1/4 rate of the original frame rate from the processed blocks, and then codes the frame as a moving picture of 60 fps. However, the frame rate and the amount of data reduction discussed above are examples only, and the frame rate can be determined as desired.

The output 201, i.e., the block distribution conditions, for example, the block distribution flag, output from the block distributor 122 of the amount-of-movement detector 120, and the output 202, i.e., information concerning the amount of movement detected by the amount-of-movement detecting portion 121, as discussed with reference to Fig. 8, are input into a side information synthesizer 152 of the output unit 150. The side information synthesizer 152 synthesizes a data structure that can be coded by a side information coder 180 from the data including the block distribution flag and the amount-of-movement information.

In this embodiment, the block distribution flag indicating which block processing portion 131, 132, or 133 is used for decimating each block, and a motion-vector velocity flag indicating the range of velocity of a motion vector are coded as side information. In this case, the velocities of the motion vectors are divided into a plurality of velocity ranges in advance. The velocity ranges used in the motion-vector velocity flag are discussed below. The above-described elements included in the side information are examples only, and any type of side information may be coded as long as information necessary for decoding is included.

The image coder 170 codes the image by a general coding method, such as MPEG, Motion, or JPEG, and supplies the coded image to a decoder. The side information coder 180 codes the input side information by a general coding method, such as LZH or Zip, and supplies the coded information to a decoder. Although lossy coding may be conducted on the side information, lossless coding is preferable. The coded side information may be embedded in the coded image information, or may be supplied to the decoder separately from the image information.

Details of the packing processor 140 of the moving picture conversion apparatus 100 are described below. In this embodiment, the number M of frames packed by the packing processor 140 is 4, and the frame rate is reduced to 1/4.

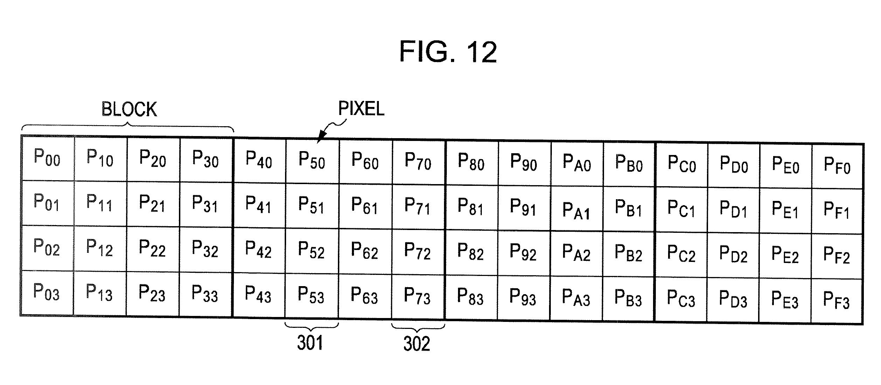

As stated above, upon receiving blocks decimated by the block processor 130, the packing processor 140 packs the blocks for every M frames and converts the frame rate into R/M. A description is given below, assuming that decimation processing and packing processing are performed on the image shown in Fig. 12. The input image shown in Fig. 12 is one frame of four blocks, each block formed of 4x4 pixels.

It is now assumed that the above-described packing processing is performed on two horizontal blocks (4x8 pixels) when the subject represented by the image shown in Fig. 12 is moving at a rate of two pixels per frame.

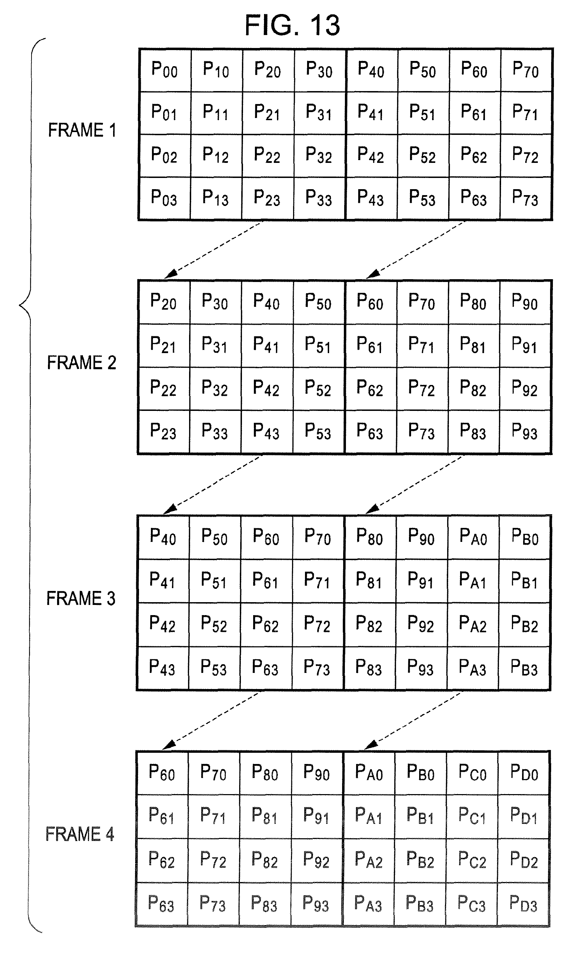

The two blocks to be subjected to spatial decimation are shown in Fig. 13. The two-block image data of frames 1 through 4 is moving picture data which shifts to the left side by two pixels between frames, i.e., the image data shifting to the left side at a rate of two pixels per frame. The two blocks are subjected to spatial decimation in the block processing portion 131.

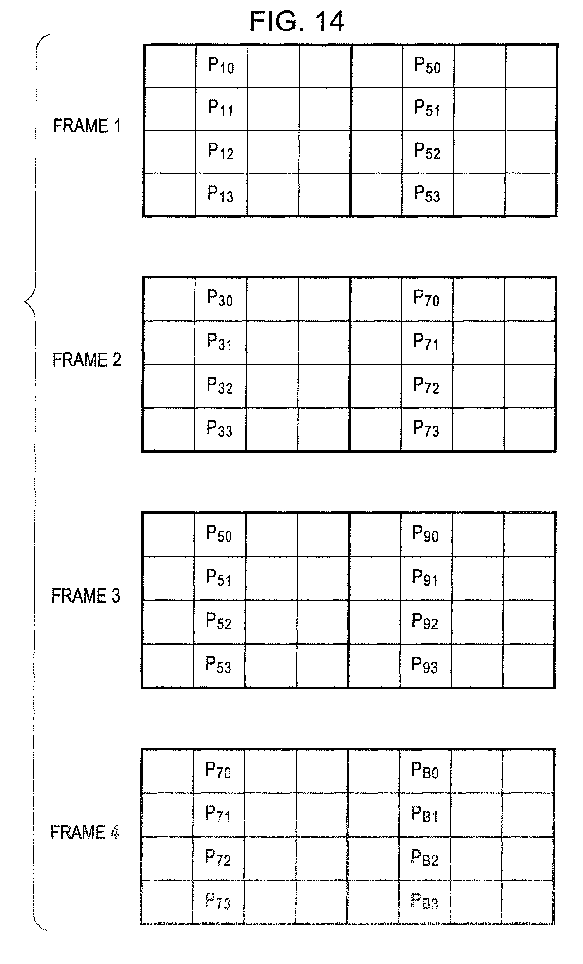

The data after being subjected to spatial decimation in the block processing portion 131 is shown in Fig. 14. The horizontal pixel data of each block is decimated to one fourth by representative pixels (sampling points), and the frame rate of the decimated pixels is converted into R/M by the above-described packing processing by the packing processor 140.

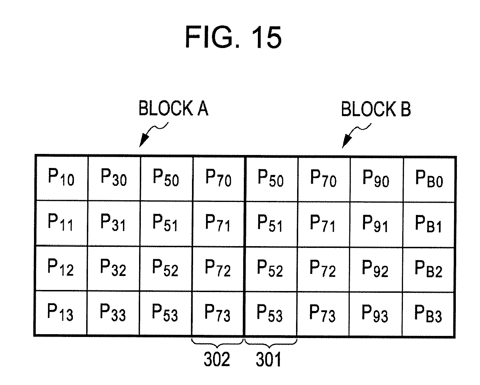

The data after being subjected to packing processing by the packing processor 140 is shown in Fig. 15. Since the frame rate of the data shown in Fig. 15 is converted into 1/4 (R=1 and M=4), the two blocks (4x8 pixels) of four frames are converted into the two blocks (4x8 pixels) of one frame.

Upon comparing the image as a result of performing the pack processing shown in Fig. 15 with the original image shown in Fig. 12, the horizontal order of pixels located at the boundary between block A and block B shown in Fig. 15, i.e., the horizontal order of a pixel data column 302 formed of pixels $P_{70}$ through $P_{73}$ of block A and pixel data column 301 formed of pixels $P_{50}$ through $P_{53}$ of block B is different from that of the original image shown in Fig. 12.

That is, in the original image shown in Fig. 12, the pixel data column 301 is located farther leftward than the pixel data column 302. In the image shown in Fig. 15, however, the pixel data column 301 is located farther rightward than the pixel data column 302. Thus, the horizontal order of the pixel data columns 301 and 302 is changed from that of the original image.

In the moving picture conversion apparatus 100 of this embodiment discussed with reference to Fig. 11, the image packed by the packing processor 140 is coded by a general coding method, such as MPEG, Motion, or JPEG. According to a general coding method, the compression ratio is higher for smooth image data in which adjacent pixel values change less sharply, and the compression ratio is lower for image data in which adjacent pixel values change more sharply. Thus, if the order of pixels is switched from the original image, as in the image shown in Fig. 15, pixel values are changed unnaturally. As a result, the compression ratio is decreased when the image is coded by a general coding method.

The moving picture conversion apparatus of this embodiment executes processing that does not produce such an adverse influence on the compression ratio.

It is now considered how the order of pixel columns in a packed block subjected to decimation processing and packing processing is changed from that in the original image. Calculations are made for determining the positions of the pixel columns in the packed block subjected to packing processing shown in Fig. 15 located in the packed block in the original image shown in Fig. 12. More specifically, the relative pixel position x of each pixel column of the packed block subjected to packing processing in the original image is calculated, assuming that the moving velocity of the original image is v pixels per frame.

To calculate the relative pixel position x, the following parameters are set:

v: moving velocity of the subject image (original image) (v = pixels per frame);
m: frame number of the original image (m=0, 1, 2, and so on, which are set from the temporally preceding frames); and
n: block number of the packed block (0, 1, 2, and so on, which are set in the moving direction in the ascending order).

One packed block is a block processed by decimating processing or packing processing performed at one time.

Then, the relative pixel position x of each pixel column set in the packed block after being subjected to decimation processing and packing processing in the original image is calculated by equation (1).

$$x = m \times v + 4 \times n \qquad \ldots (1)$$

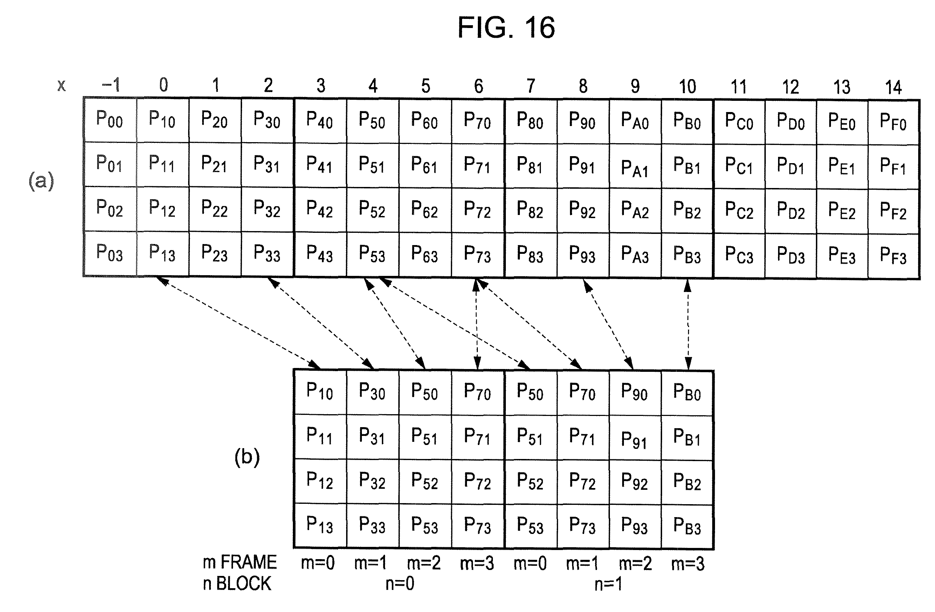

A specific example of calculations for the relative pixel position x using equation (1) is given below. The image indicated by (a) in Fig. 16 is one frame of image, such as that shown in Fig. 12, before being subjected to decimation processing and packing processing. The packed block generated by the processing discussed with reference to Figs. 12 through 15 is the block indicated by (b) in Fig. 16, which is equal to that shown in Fig. 15.

The image data indicated by (a) in Fig. 16 is moving in the horizontal direction at a moving velocity of two pixels per frame, as discussed with reference to Fig. 13. That is, v=2.

The packed blocks are formed of the following two blocks.

Packed block No. n = 0
Packed block No. n = 1

In the packed blocks, representative pixels (sampling points) of the frames 1 through 4, are stored, as discussed with reference to Figs. 13 and 14. The correspondence between the frame numbers 1 through 4 and frame numbers m is as follows.

Frame 1: frame number m=0
Frame 2: frame number m=1
Frame 3: frame number m=2
Frame 4: frame number m=3

The packed block n=0 and the packed block n=1 indicated by (b) in Fig. 16 include pixel data of the frame number m=0 through the frame number m=4. That is, the pixel columns of the packed blocks from the left have the following combinations of packed block n and frame number m.

(1) Packed block n=0, frame m=0
(2) Packed block n=0, frame m=1
(3) Packed block n=0, frame m=2
(4) Packed block n=0, frame m=3
(5) Packed block n=1, frame m=0
(6) Packed block n=1, frame m=1
(7) Packed block n=1, frame m=2
(8) Packed block n=1, frame m=3

The relative pixel positions x of the eight pixel columns in the original image data indicated by (a) in Fig. 16 are calculated according to equation (1), assuming that the moving velocity v is two pixels per frame (v=2). The results are as follows.

(1) n=0, m=0, x=0×2+4×0=0
(2) n=0, m=1, x=1×2+4×0=2
(3) n=0, m=2, x=2×2+4×0=4
(4) n=0, m=3, x=3×2+4×0=6
(5) n=1, m=0, x=0×2+4×1=4
(6) n=1, m=1, x=1×2+4×1=6
(7) n=1, m=2, x=2×2+4×1=8
(8) n=1, m=3, x=3×2+4×1=10

The correspondences between the eight pixel columns of the pixel blocks and those of the original image data are indicated by the double dotted arrows shown in Fig. 16.

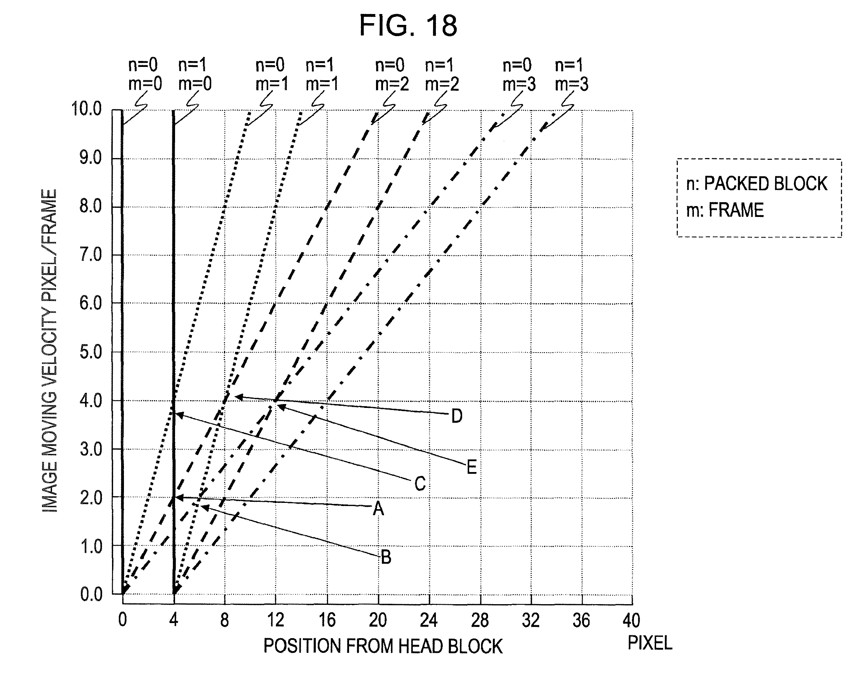

The correlation between the moving velocity v and the relative pixel position x when the number of packed frames is four and the number of packed blocks is two is indicated by the graph in Fig. 18. In Fig. 18, the solid lines designate representative pixels (sampling points) in the packed blocks (n=0, 1) of the first frame (m=0). The dotted lines indicate representative pixels (sampling points) in the packed blocks (n=0, 1) of the second frame (m=1). The broken lines indicate representative pixels (sampling points) in the packed blocks (n=0, 1) of the third frame (m=2). The one-dot-chain lines designate representative pixels (sampling points) in the packed blocks (n=0, 1) of the fourth frame (m=3).

Since one packed block includes representative pixels of the four frames (m=0 through m=3), the distance between the pixels in one block corresponding to those in the original image becomes greater as the moving velocity of the original image increases.

Each packed block includes the pixels of the first frame. Accordingly, the pixels of the first frame in one packed block are separated from those in the other packed block by four pixels (when M=4) regardless of the moving velocity of the original image.

A through E on the graph shown in Fig. 18 indicate the intersecting points of the lines. When the moving velocity is higher than each of the points A through E, the positions of the pixel columns of the packed blocks are switched from those of the original image. For example, at point A, the moving velocity v is 2 (v=2).

When the moving velocity v is lower than 2 (v<2), the pixel column (n=1, m=0) is located farther rightward than the pixel column (n=0, m=2).

However, when the moving velocity v is 2 or higher (v≥2), the pixel column (n=1, m=0) is located farther leftward than the pixel column (n=0, m=2).

That is, when the moving velocity is 2 or higher, the positions of the pixel columns are switched from those in the original image. Similar phenomena are observed at points B through E.

Fig. 18 shows that as the moving velocity of the original image to be subjected to decimation processing and packing processing increases, switching of the positions of the pixel columns from those in the original image occurs more frequently.

Accordingly, in the moving picture conversion apparatus according to an embodiment of the present invention, the positions of the pixels of a packed block generated by packing processing, such as that shown in Fig. 10, are checked. That is, it is checked whether the pixel positions of the packed block are switched from those of the original image, and if there are some pixels shifted from those of the original image, correction processing (sorting processing) is performed so that the shifted pixel positions of the packed block are relocated to those of the original image. After being sorted, the packed block is output and coded in a coder, such as an MPEG coder. Thus, the packed block can be compressed with high compression efficiency. That is, in the packing processing in the moving picture conversion apparatus of this embodiment, the pixel positions of the packed block are corrected (relocated) to those of the original image so that the pixel order is rearranged to the original order.

Details of the configuration of the packing processor 140, i.e., the packing portion performing sorting processing, of the moving picture conversion apparatus are discussed below. The pixel positions of a packed block are switched from those of the original image only when spatial decimation processing is performed. When performing packing processing after temporal decimation, packed blocks are generated from only one frame, and thus, the replacement of pixel data does not occur.

That is, when performing packing processing on the data subjected to spatial decimation by the packing portion 141 or when performing packing processing on the data subjected to spatial and temporal decimation by the packing portion 143, it is possible that the pixel positions of a packed block be switched from those of the original image. Accordingly, sorting processing is performed in the packing portions 141 and 143.

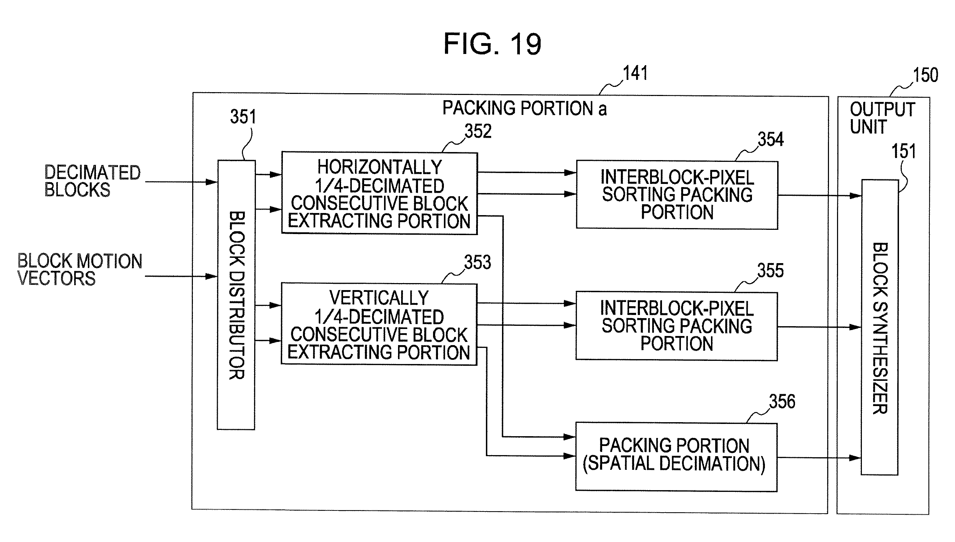

The configuration of the packing portion 141 and packing processing performed on the data subjected to spatial decimation performed by the block processing portion 131 are described below with reference to Fig. 19.

Block data subjected to spatial decimation processing by the block processing portion 131 is input into a block distributor 351 of the packing portion 141, and motion vector information concerning the amount of movement of each block detected by the amount-of-movement detecting portion 121 shown in Fig. 8 is also input into the block distributor 351.

The spatially decimated blocks input into the block distributor 351 are stored, together with the associated motion vectors, in a block/motion-vector storage portion (not shown) of the block distributor 351. The block distributor 351 outputs horizontally moving blocks to a horizontally 1/4-decimated consecutive block extracting portion 352 and outputs vertically moving blocks to a vertically 1/4-decimated consecutive block extracting portion 353. In this case, the motion vectors associated with the output blocks are also output as attribute information.

The horizontally 1/4-decimated consecutive block extracting portion 352 detects two or more horizontally consecutive blocks and outputs them to an interblock-pixel sorting packing portion 354. In this case, the motion vectors associated with the output blocks are also output as attribute information concerning the blocks. The interblock-pixel sorting packing portion 354 sorts the pixel columns. The blocks to be processed here are blocks subjected to decimation processing, and in this example, blocks having an amount of movement in the horizontal direction are selected in the block distributor 351 and, from those blocks, the two or more horizontally consecutive blocks subjected to spatial decimation are selected in the horizontally 1/4-decimated consecutive block extracting portion 352.

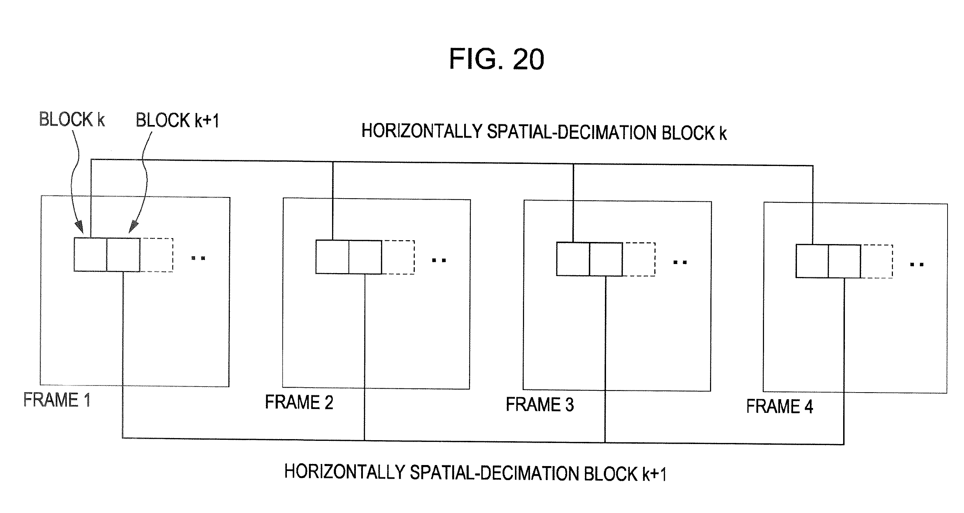

In this embodiment, blocks moving at a moving velocity of two pixels per frame are blacks to be subjected to spatial decimation processing by the block processing portion 131. The blocks subjected to spatial decimation and moving in the horizontal direction are to be processed by the interblock-pixel sorting packing portion 354. For example, when the decimation processing is performed for every four frames, as shown in Fig. 20, in frames 1 through 3, blocks k moving in the horizontal direction by two pixels or more per frame are subjected to spatial decimation processing in the block distributor 351, and blocks k+1 horizontally adjacent to the blocks k, which are also moving in the horizontal direction by two pixels or more per frame are also subjected to spatial decimation in the block distributor 351. Then, the decimated blocks k and k+1 are input into the interblock-pixel sorting packing portion 354. In other words, frames 1 through 4 subjected to decimation processing shown in Fig. 14 are input into the interblock-pixel sorting packing portion 354.

The vertically 1/4-decimated consecutive block extracting portion 353 detects two or more vertically consecutive blocks and outputs them to an interblock-pixel sorting packing portion 355. In this case, motion vectors associated with the output blocks are also output as attribute information concerning the blocks. The interblock-pixel sorting packing portion 355 sorts the pixel columns. The blocks to be processed here are blocks subjected to decimation processing, and in this example, blocks having an amount of movement in the vertical direction are selected in the block distributor 351 and, from those blocks, the two or more vertically consecutive blocks subjected to spatial decimation are selected in the vertically 1/4-decimated consecutive block extracting portion 353.

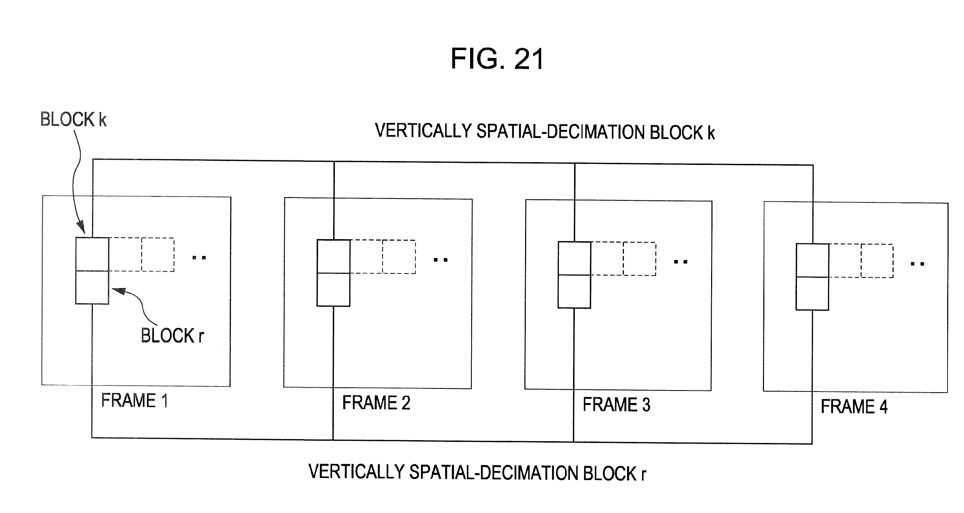

In this embodiment, blocks moving at a moving velocity of two pixels per frame are blocks to be subjected to spatial decimation processing by the block processing portion 131. The blocks subjected to spatial decimation and moving in the vertical direction are to be processed by the interblock-pixel sorting packing portion 355. For example, when the decimation processing is performed for every four frames, as shown in Fig. 21, in frames 1 through 3, blocks k moving in the vertical direction by two pixels or more per frame are subjected to spatial decimation processing in the block distributor 351, and blocks r vertically adjacent to the blocks k, which are also moving in the vertical direction by two pixels or more per frame, are also subjected to spatial decimation in the block distributor 351. Then, the decimated blocks k and r are input into the interblock-pixel sorting packing portion 355.

The blocks other than the consecutive blocks shown in Fig. 20 or 21 are input into a packing portion 356 and are subjected to packing processing without sorting processing. The packing portion 356 executes packing processing for packing (integrating) representative pixels, as discussed with reference to Fig. 9, as decimated pixel data, to generate a packed block, and then outputs it to the block synthesizer 151 of the output unit 150.

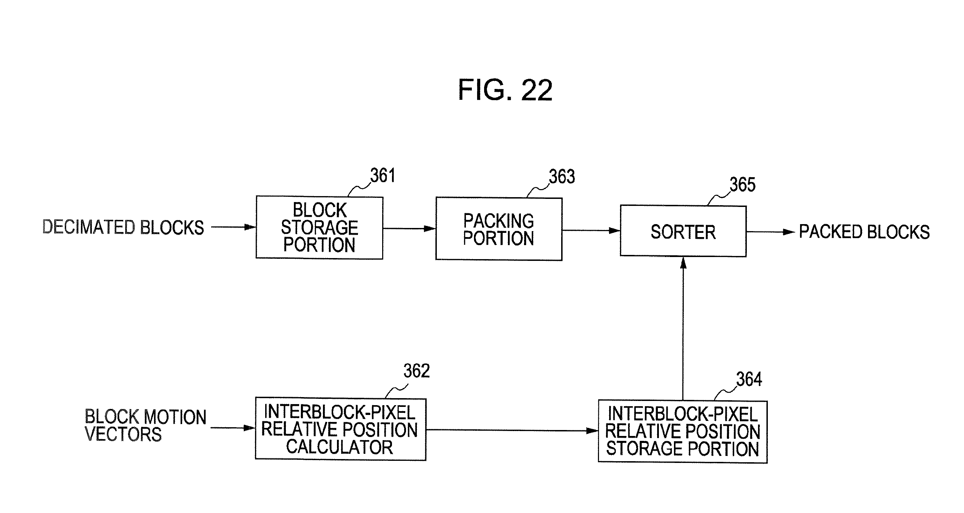

The interblock-pixel sorting packing portion 354 executes packing processing including sorting processing for correcting the packed block for switched pixel positions, and outputs the sorted packed block to the block synthesizer 151. The configuration and processing of the interblock-pixel sorting packing portion 354 are shown in Fig. 22.

In the interblock-pixel sorting packing portion 354 shown in Fig. 22, the received consecutive blocks are temporarily stored in a block storage portion 361. An interblock-pixel relative position calculator 362 calculates the relative pixel positions x of the pixel columns of each packed block in the original image starting from the head block by applying the motion vectors of the corresponding block according to the above-described equation (1) (x=mxv+4xn), and temporarily stores the calculated relative pixel positions x in an interblock-pixel relative position storage portion 364.

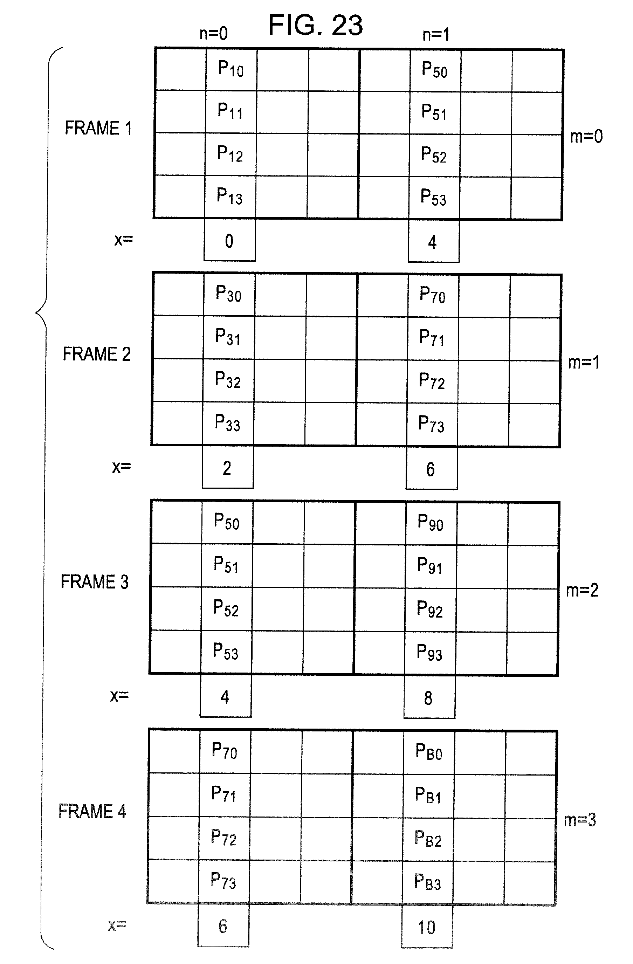

Calculation examples of the relative pixel positions x of the representative pixels of the frames included in the packed blocks shown in Fig. 14 are shown in Fig. 23. The interblock-pixel relative position calculator 362 calculates the relative pixel positions x of the representative pixel columns of frames 1 through 4 included in the horizontally decimated blocks according to equation (1) ($x = m \times v + 4 \times n$).

For example, the relative pixel positions x of the representative pixel columns of frame 1 are as follows.

(1a) n=0, m=0: $x = 0 \times 2 + 4 \times 0 = 0$

(1b) n=1, m=0: $x = 0 \times 2 + 4 \times 1 = 4$

The relative pixel positions x of the representative pixel columns of frame 2 are as follows.

(2a) n=0, m=1: $x = 1 \times 2 + 4 \times 0 = 2$

(2b) n=1, m=1: $x = 1 \times 2 + 4 \times 1 = 6$

The relative pixel positions x of the representative pixel columns of frame 3 are as follows.

(3a) n=0, m=2: $x = 2 \times 2 + 4 \times 0 = 4$

(3b) n=1, m=2: $x = 2 \times 2 + 4 \times 1 = 8$

The relative pixel positions x of the representative pixel columns of frame 4 are as follows.

(4a) n=0, m=3: $x = 3 \times 2 + 4 \times 0 = 6$

(4b) n=1, m=3: $x = 3 \times 2 + 4 \times 1 = 10$

The correspondences between the pixel columns of the packed blocks and those of the original image data are indicated by the double dotted arrows shown in Fig. 16.

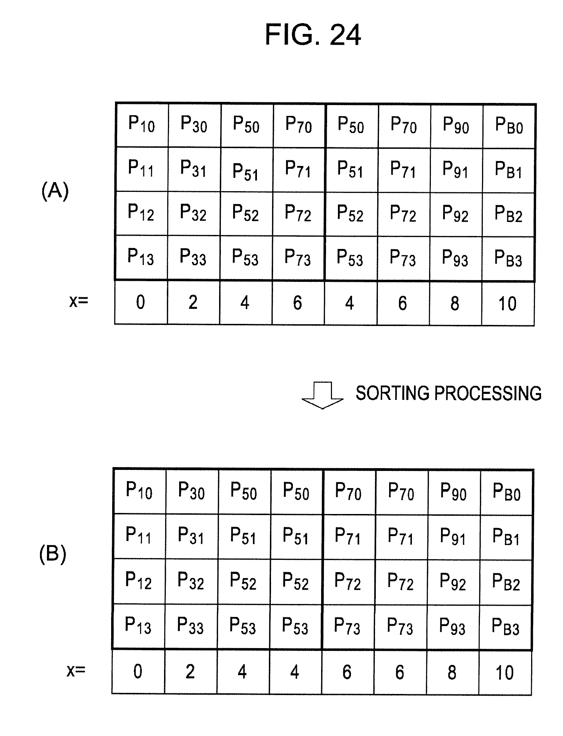

The consecutively decimated blocks stored in the block storage portion 361 are first subjected to general packing processing, i.e., the packing processing discussed with reference to Fig. 9, in a packing portion 363. An example of the initial packed blocks generated by performing the general packing processing on the two adjacent blocks shown in Fig. 23 is shown in (A) in Fig. 24.

In the example shown in (A) in Fig. 24, relative-pixel-position(x) information concerning the representative pixel columns of the frames calculated by the interblock-pixel relative position calculator 362 is associated with the initial packed blocks. The initial packed blocks are packed blocks in which the pixel positions are arranged in the order of frames. The initial packed blocks indicated in (A) in Fig. 24 have the pixel arrangement similar to that shown in (b) in Fig. 16, and the order of the pixel columns is switched from that of the original image indicated by (a) in Fig. 16.

The packed blocks generated by the packing processing in the packing portion 363 are the initial packed blocks shown in (A) in Fig. 24, and the initial packed blocks are input into a sorter 365. The sorter 365 receives, together with the initial packed blocks, the relative position information x from the interblock-pixel relative position storage portion 364. The sorter 365 sorts the pixel columns of the initial packed blocks based on the relative pixel positions x. That is, the relative pixel positions x of the pixel columns of the initial packed blocks in (A) in Fig. 24 are sorted in ascending order from the left side.

As a result of the sorting processing, the packed blocks shown in (B) in Fig. 24 are generated. In this manner, the sorter 365 sorts the pixel columns by using the relative position information x as the key. As a result, the fourth pixel column and the fifth pixel column in the example shown in (A) in Fig. 24 are switched from each other so that the packed blocks corrected to the original pixel positions shown in (B) in Fig. 24 are generated.

The processing shown in Fig. 24 is performed on the original image that moves toward the left side. By sorting the pixel columns in ascending order or in descending order by using the relative pixel position information x as the key depending on whether the original image is moving toward the left side or the right side, the packed blocks can be corrected similarly. In the interblock-pixel sorting packing portion 355 that performs processing on vertically moving blocks, sorting processing can be equally executed by using the vertical relative pixel position information y as the key so that packed blocks corrected to the pixel positions of the original image can be generated.

Pack processing performed on blocks subjected to spatial decimation processing and temporal decimation processing is discussed below. In this embodiment, when the amounts of movements both in the horizontal and vertical directions are one pixel or more and less than two pixels, the block processing portion 133 (see Fig. 8) performs spatial decimation processing and temporal decimation processing, as discussed with reference to Figs. 5 and 6.

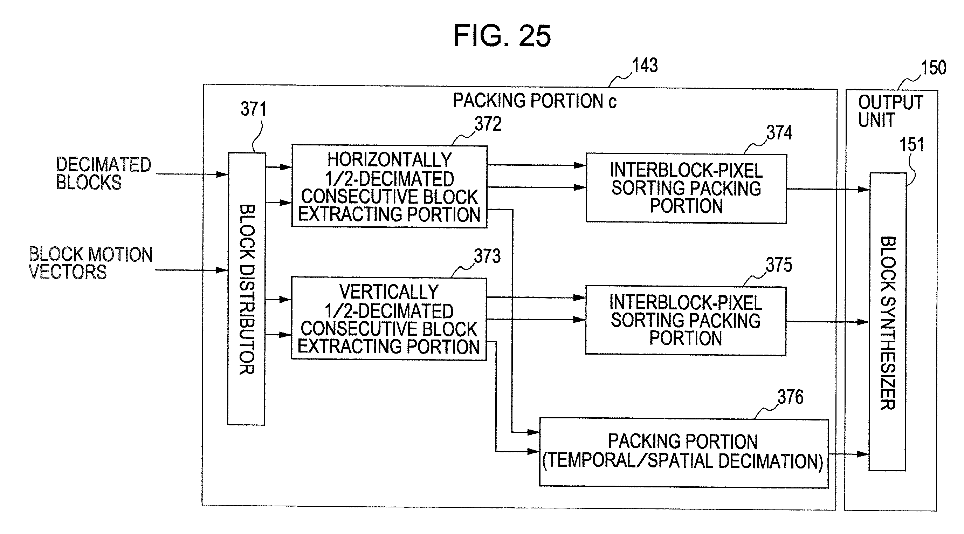

The packing portion 143 shown in Fig. 8 performs packing processing including sorting processing on the blocks subjected to the spatial decimation processing and temporal decimation processing. The configuration and processing of the packing portion 143 are described below with reference to the block diagram of Fig. 25.

A block distributor 371 receives decimated data, i.e., block data subjected to the spatial and temporal decimation processing, from the block processing portion 133. Motion vector information concerning the amounts of movements detected by the amount-of-movement detecting portion 121 shown in Fig. 8 is also input into the block distributor 371.

The spatially decimated blocks input into the block distributor 371 are stored, together with the motion vectors, in a block/motion-vector storage portion (not shown) in the block distributor 371. From among the blocks stored in the block/motion-vector storage portion, the block distributor 371 outputs horizontally moving blocks to a horizontally 1/2-decimated consecutive block extracting portion 372 and outputs vertically moving blocks to a vertically 1/2-decimated consecutive block extracting portion 373. In this case, the motion vectors associated with the output blocks are also output as attribute information concerning the output blocks.

The horizontally 1/2-decimated consecutive block extracting portion 372 detects two or more horizontally consecutive blocks and outputs them to an interblock-pixel sorting packing portion 374. In this case, the motion vectors associated with the output blocks are also output as attribute information concerning the output blocks. The interblock-pixel sorting packing portion 374 sorts the pixel columns. The blacks to be processed here are blocks subjected to decimation processing, and in this example, the blocks which are moving in the horizontal direction selected by the block distributor 371 and which are two or more horizontally consecutive blocks selected by the horizontally 1/2-decimated consecutive block extracting portion 372.

In this embodiment, blocks moving at a moving velocity of one pixel or more and less than two pixels per frame are to be decimated in the block processing portion 133. The blocks subjected to decimation processing and also consecutively moving in the horizontal direction are to be processed by the interblock-pixel sorting packing portion 374. Those blocks are similar to those discussed with reference to Fig. 20, except that the amount of movement is different.

The vertically 1/2-decimated consecutive block extracting portion 373 detects two or more vertically consecutive blocks and outputs them to an interblock-pixel sorting packing portion 375. In this case, the motion vectors associated with the output blocks are also output as attribute information concerning the output blocks. The interblock-pixel sorting packing portion 375 sorts the pixel columns. The blocks to be processed here are blocks subjected to decimation processing, and in this example, the blocks which are moving in the vertical direction selected by the block distributor 371 and which are two or more vertically consecutive blocks selected by the vertically 1/2-decimated consecutive block extracting portion 373. Those blocks are similar to those discussed with reference to Fig. 21, except that the amount of movement is different.

Blocks other than the consecutive blocks shown in Figs. 20 or 21 are input into a packing portion 376, and are subjected to packing processing without sorting processing. The packing portion 376 packs (integrates) representative pixels as decimated pixel data, as discussed with reference to Fig. 10, to generate packed blocks, and outputs them to the block synthesizer 151 of the output unit 150.

The interblock-pixel sorting packing portion 374 executes packing processing including sorting processing for correcting the packed blocks for the switched pixel positions to generate packed blocks, and outputs them to the block synthesizer 151 of the output unit 150. The configuration and processing of the interblock-pixel sorting packing portion 374 are discussed below with reference to Fig. 22 illustrating the configuration of the interblock-pixel sorting packing portion 354, since the configuration of the interblock-pixel sorting packing portion 374 is similar to that of the interblock-pixel sorting packing portion 354.

In the interblock-pixel sorting packing portion 374, the received consecutive blocks are temporarily stored in the block storage portion 361. The interblock-pixel relative position calculator 362 calculates the relative pixel positions x of the pixel columns of each packed block in the original image starting from the head block by applying the motion vectors of the corresponding block according to the equation for calculating the relative pixel positions. The interblock-pixel relative position calculator 362 then temporarily stores the calculated relative pixel positions x in the interblock-pixel relative position storage portion 364.

The equation for calculating the relative pixel positions of the packed blocks subjected to spatial decimation and temporal decimation in the original image are different from equation (1) for calculating the relative pixel positions of packed blocks subjected only to spatial decimation.

When the following parameters are set:

v: moving velocity of the subject image (original image) (v = pixels per frame);
m: frame number of the original image (m=0, 1, 2, and so on);
n: block number of the packed block (0, 1, 2, and so on); and
p: relative position in a packed block,

the relative pixel position x is calculated by the following equation.

$$x = m \times v + 4 \times n + p \qquad \qquad \ldots (2)$$

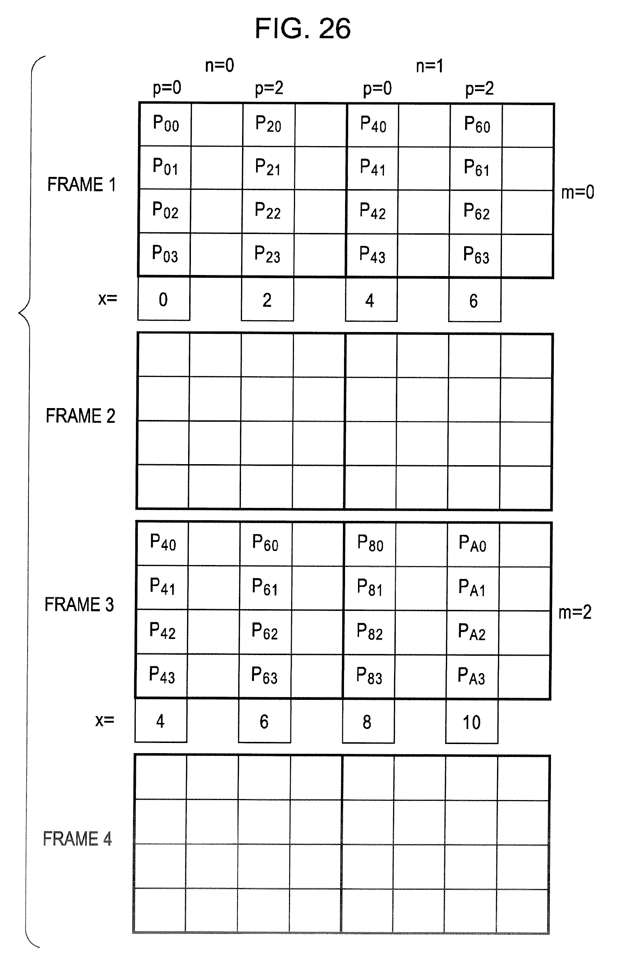

Calculation examples of the relative pixel positions x when two blocks ($4 \times 8$ pixels) moving toward the left side at a moving velocity of two pixels per frame shown in Fig. 12 are subjected to spatial decimation and temporal decimation are described below with reference to Fig. 26.

In Fig. 26, two adjacent blocks of frames 1 through 4 subjected to spatial decimation processing and temporal decimation processing are shown. As a result of temporal decimation processing, frames 2 and 4 are decimated, and as a result of spatial decimation processing, frames 1 and 3 are decimated by one half in the horizontal direction.

Among the consecutive frames 1 through 4, the interblock-pixel relative position calculator 362 calculates the relative pixel positions x of the representative pixel columns of frames 1 and 3 in the packed blocks according to equation (2), assuming that the moving velocity is two (v=2).

For example, the relative pixel positions x of the representative pixel columns of frame 1 are as follows.

(1a) n=0, m=0, p=0: x=0×2+4×0+0=0
(1b) n=0, m=0, p=2: x=0×2+4×0+2=2
(1c) n=1, m=0, p=0: x=0×2+4×1+0=4
(1d) n=1, m=0, p=2: x=0×2+4×1+2=6

The relative pixel positions x of the representative pixel columns of frame 3 are as follows.

(3a) n=0, m=2, p=0: x=2×2+4×0+0=4
(3b) n=0, m=2, p=2: x=2×2+4×0+2=6
(3c) n=1, m=2, p=0: x=2×2+4×1+0=8
(3d) n=1, m=2, p=2: x=2×2+4×1+2=10

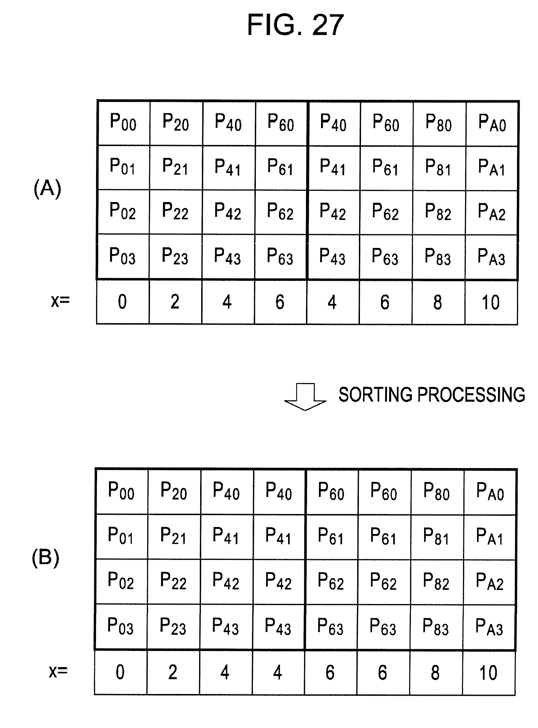

The decimated block stored in the block storage portion 361 is subjected to general packing processing, i.e., the packing processing discussed with reference to Fig. 10, in the packing portion 363. The initial packed blocks generated by performing the general packing processing on the two adjacent blocks shown in Fig. 26 are shown in (A) in Fig. 27.

In the example shown in (A) in Fig. 27, the relative-pixel-position(x) information concerning the representative pixel columns of the frames calculated by the interblock-pixel relative position calculator 362 are associated with the initial packed blocks. In the initial packed blocks shown in (A) in Fig. 27, the switching of the pixel positions from the original pixel positions has occurred.

As stated above, the packed blocks generated by performing the packing processing by the packing portion 363 are the initial packed blocks shown in (A) in Fig. 27, and the initial packed blocks are then input into the sorter 365. The sorter 365 receives the initial packed blocks and also receives the relative position information x from the interblock-pixel relative position storage portion 364. The sorter 365 sorts the pixel columns of the initial packed blocks based on the relative pixel positions x. That is, the sorter 365 executes sorting processing for sorting the relative pixel positions x corresponding to the pixel columns of the initial packed blocks shown in (A) in Fig. 27 in ascending order from the left.

As a result of the sorting processing, the packed blocks shown in (B) in Fig. 27 are generated. In this manner, the sorter 365 sorts the pixel columns by using the relative position information x concerning the pixel columns of the input initial packed blocks as the key. As a result, in the packed blocks shown in Fig. 27, the fourth column and the fifth column shown in (A) in Fig. 27 are switched from each other so that the packed blocks corrected to the original pixel positions shown in (B) in Fig. 27 are generated.

The processing shown in Fig. 27 is performed on the original image that moves toward the left side. By sorting the pixel columns in ascending order or in descending order by using the relative pixel position information x as the key depending on whether the original image is moving toward the left side or the right side, the packed blocks can be corrected similarly. In the interblock-pixel sorting packing portion 375 that performs processing on vertically moving blocks, sorting processing can be equally executed by using the vertical relative pixel position information y as the key so that packed blocks corrected to the pixel positions of the original image can be generated.

The above-described sorting processing is not restricted to specific techniques, and a known technique, such as quick sorting or merge sorting, may be employed.

A description is given below of another technique for performing packing processing for correcting the order of pixel positions of a packed image to that of the original image. In this technique, the sorting processing employed in the previous processing is omitted by not making perfect corrections for blocks that do not appear unnatural in the resulting image. As a result, the processing performance can be improved.

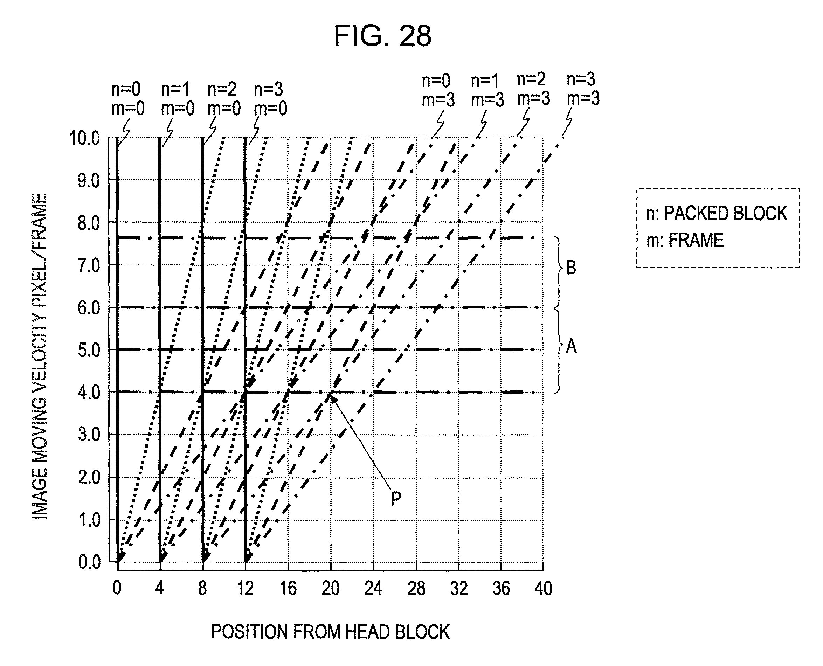

The basic concept of this processing is described below. The graph indicating the correlation between the moving velocity and the relative pixel position x shown in Fig. 18 is the correlation when the number of adjacent blocks is two. The correlation between the moving velocity and the relative pixel position x when the number of adjacent blocks is four is shown in Fig. 28.

As in the graph shown in Fig. 18, in Fig. 28, the vertical axis represents the moving velocity (amount of movement) v, and the horizontal axis designates the relative pixel position x. The intersecting points of the lines indicate the points at which the relative pixel positions x are switched from those of the original image. For example, the intersecting point P indicates the point at which the relative pixel positions x corresponding to the fourth column of the third block and the third column of the fourth block are switched from those of the original image.

By focusing attention on the intersecting points of the lines, the moving velocities of the original image corresponding to the intersecting points take discrete values. For example, intersecting points are observed when the moving velocity is four pixels per frame, and the next intersecting points are observed when the moving velocity is 6 pixels per frame.

The order of the pixel columns is changed from that of the original image at the moving velocities associated with the intersecting points. In other words, in the ranges of the moving velocities without intersecting points, for example, in the range A of the moving velocity of 4 to 6 pixels per frame, the order of the pixel columns in the packed blocks is not changed from that of the original image. The same applies to the range B of the moving velocity. In this manner, the moving velocities associated with the intersecting points at which the order of the pixel columns is switched are discrete.

As discussed above, the switching of pixel columns occurs only at specific moving velocities v. This theory has proved that the order of the pixel columns in the original image, i.e., the pixel arrangement in the packed blocks, can be estimated based on information concerning the moving velocity range of the corresponding blocks in the original image without the need to determine the relative pixel positions x of the original image.

By estimating the arrangement of the pixel columns set in the packed blocks as described above, it can be determined how the pixel positions are switched from those of the original image based on the moving velocity v without the need to calculate the relative pixel positions x or to perform sorting processing based on the relative pixel positions x. Then, the pixels can be rearranged so that packed blocks having the pixel order of the original image can be generated.

According to the above-described technique, the calculation processing for the relative pixel positions x and the sorting processing based on the relative pixel positions x can be omitted so that the processing performance can be enhanced.

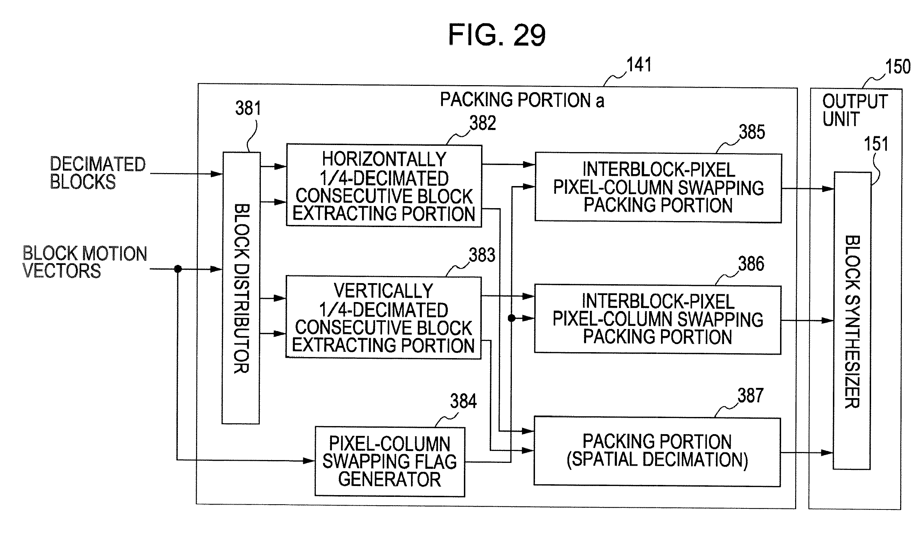

A description is now given, with reference to Fig. 29, of the configuration and processing of the packing portion 141 of the moving picture conversion apparatus shown in Fig. 8 when the packing portion 141 executes packing processing including pixel position swapping (hereinafter referred to as "pixel-column swapping processing") based on the moving velocity v.

In the packing portion 141, a block distributor 381 receives blocks subjected to only spatial decimation together with the associated motion vectors. The received blocks are stored, together with the motion vectors, in a block/motion-vector storage portion (not shown) in the block distributor 381. The motion vectors are also input into a pixel-column swapping flag generator 384, and the blocks are input into a motion vector storage portion (not shown) in the pixel-column swapping flag generator 384.

From among the stored blocks, the block distributor 381 outputs horizontally moving blocks to a horizontally 1/4-decimated consecutive block extracting portion 382 and outputs vertically moving blocks to a vertically 1/4-decimated consecutive block extracting portion 383. In this case, the motion vectors associated with the output blocks are also output.

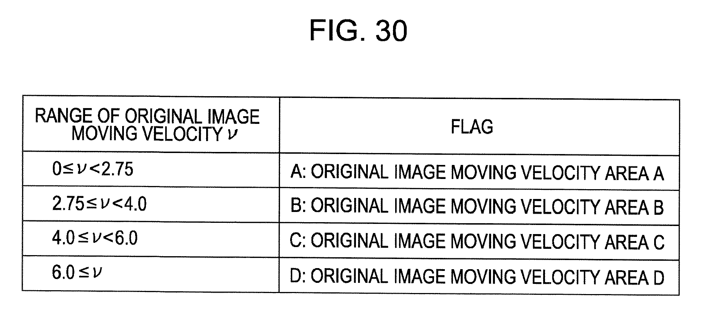

The pixel-column swapping flag generator 384 determines the moving velocity v (pixels per frame) based on the motion vectors of each block to determine to which velocity range the moving velocity v belongs in the graph indicating the correlation between the moving velocity (amount of movement) v and the relative pixel position x, and then sets the determination result as a pixel-column swapping flag. In this embodiment, the flags are set in association with the velocity ranges in the following manner, as shown in Fig. 30.

(1) $0 \leq v < 2.75 \rightarrow$ flag A
(2) $2.75 \leq v < 4.0 \rightarrow$ flag B
(3) $4.0 \leq v < 6.0 \rightarrow$ flag C
(4) $6.0 \leq v \rightarrow$ flag D

Those four flags are set in association with the moving velocity v.

Since blocks subjected only to temporal decimation processing or block subjected to temporal decimation processing and spatial decimation processing are not input into the packing portion 141 shown in Fig. 29, the range of moving velocities v lower than 2.75 is integrated into one flag. Also, in the range of moving velocity v of 6.0 or higher, motion blurring occurs since the movement of the images is fast, or such a range is considered to be narrow. Accordingly, this range is integrated into one flag. Flags may be segmented more precisely in accordance with the moving velocities.

In the packing portion 141 shown in Fig. 29, the harizantally 1/4-decimated consecutive block extracting portion 382 detects two or more horizontally consecutive blocks and outputs them to an interblock-pixel pixel-column swapping packing portion 385. In this case, the pixel-column swapping flags associated with the output blocks are also output from the pixel-column swapping flag generator 384. Non-consecutive blocks are output to a packing portion 387.

Similarly, the vertically 1/4-decimated consecutive block extracting portion 383 detects two or more vertically consecutive blocks and outputs them to an interblock-pixel pixel-column swapping packing portion 386. In this case, the pixel-column swapping flags associated with the output blocks are also output from the pixel-column swapping flag generator 384. Non-consecutive blocks are output to the packing portion 387.

The packing portion 387 performs the packing processing shown in Fig. 9, and outputs the resulting blocks to the block synthesizer 151.

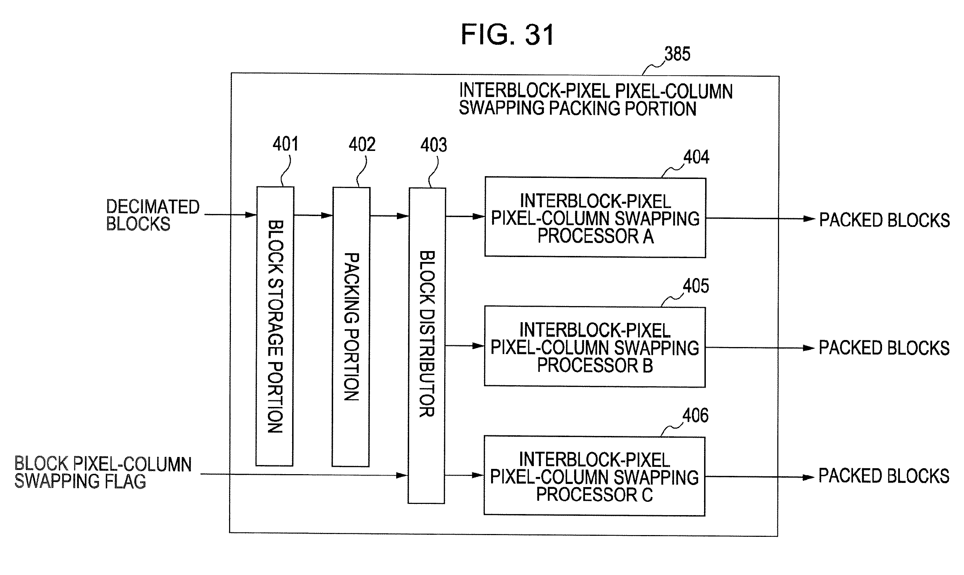

The interblock-pixel pixel-column swapping packing portion 385 performs packing processing for correcting the packed image for the switched pixel positions by using the above-described pixel-column rearrangement, and outputs the corrected packed image to the block synthesizer 151. The configuration and processing of the interblock-pixel pixel-column swapping packing portion 385 are described below with reference to Fig. 31.

In the interblock-pixel pixel-column swapping packing portion 385 shown in Fig. 31, a block storage portion 401 temporarily stores the consecutively decimated blocks. The consecutive blocks are then subjected to the packing processing shown in Fig. 9 in a packing portion 402.

The resulting blocks are then distributed to an interblock-pixel pixel-column swapping processor 404, 405, or 406 (interblock-pixel pixel-column swapping processors A, B, and C) according to the pixel-column swapping flag (A, B, C, or D) generated in the above-described pixel-column swapping flag generator 384. The distribution conditions in this embodiment are as follows.

(1) $0 \leq v < 2.75 \rightarrow$ flag A $\rightarrow$ swapping processor 404
(2) $2.75 \leq v < 4.0 \rightarrow$ flag B $\rightarrow$ swapping processor 405
(3) $4.0 \leq v < 6.0 \rightarrow$ flag C $\rightarrow$ swapping processor 406
(4) $6.0 \leq v \rightarrow$ flag D $\rightarrow$ swapping processor 406

The blocks grouped into the original-image moving velocity areas C and D are processed in the same interblock-pixel pixel-column swapping processor 406. The reason for this is as follows. In the velocity area D, motion blurring occurs since the movement of the images is fast, or such a range is considered to be narrow. Accordingly, there is no problem even if the blocks associated with the velocity area D and the blocks associated with the velocity area C are subjected to the same processing. Alternatively, the blocks associated with the velocity area D may be processed differently from those associated with the velocity area C.

The blocks distributed to the interblock-pixel pixel-column swapping processor 404, 405, or 406 are subjected to the corresponding pixel-column swapping processing so that packed blocks having the relative pixel positions of the original image can be generated. In this case, the pixel swapping mode is determined based on the moving velocity x of the original image. The packed blocks generated in the interblock-pixel pixel-column swapping processor 404, 405, or 406 are output as corrected packed blocks.

The packed blocks input into the interblock-pixel pixel-column swapping processor 404 are packed blocks which are subjected to 1/4 spatial decimation processing and subjected to packing processing shown in Fig. 9 in the packing portion 402 shown in Fig. 31 and whose moving velocity v is in $0 \leq v < 2.75$.

The packed blocks input into the interblock-pixel pixel-column swapping processor 405 are packed blocks which are subjected to 1/4 spatial decimation processing and subjected to packing processing shown in Fig. 9 in the packing portion 402 shown in Fig. 31 and whose moving velocity v is in $2.75 \leq v < 4.0$.

The packed blocks input into the interblock-pixel pixel-column swapping processor 406 are packed blocks which are subjected to 1/4 spatial decimation processing and subjected to packing processing shown in Fig. 9 in the packing portion 402 shown in Fig. 31 and whose moving velocity v is in $4.0 \leq v$.

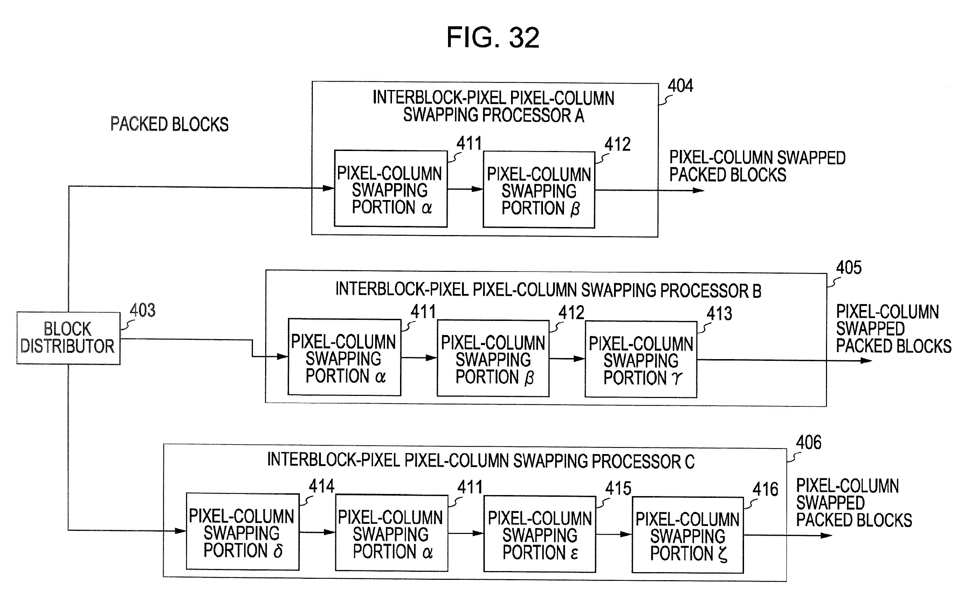

The configuration and processing of each of the interblock-pixel pixel-column swapping processors 404, 405, and 406 are described below with reference to Figs. 32 through 38. The interblock-pixel pixel-column swapping processor 404, 405, or 406 is formed of a combination of pixel-column swapping portions $\alpha$411 through $\zeta$416 that execute pixel-column swapping processing in accordance with different pixel swapping rules.

The packed blocks input into the interblock-pixel pixel-column swapping processor 404 are subjected to pixel-column swapping processing by the pixel-column swapping portions $\alpha$411 and $\beta$412 in accordance with corresponding pixel swapping rules. The packed blocks input into the interblock-pixel pixel-column swapping processor 405 are subjected to pixel-column swapping processing by the pixel-column swapping portions $\alpha$411 through $\gamma$413 in accordance with corresponding pixel swapping rules. The packed blocks input into the interblock-pixel pixel-column swapping processor 405 are subjected to pixel-column swapping processing by the pixel-column swapping portions $\delta$414 through $\zeta$416 in accordance with corresponding pixel swapping rules.

By performing composite pixel-column swapping processing by the pixel-column swapping portions, packed blocks having the relative pixel arrangement of the original image are generated and output.

The pixel-column swapping processing operations performed in accordance with different pixel-column swapping rules associated with the pixel-column swapping portions $\alpha$411 through $\zeta$416 are described below.

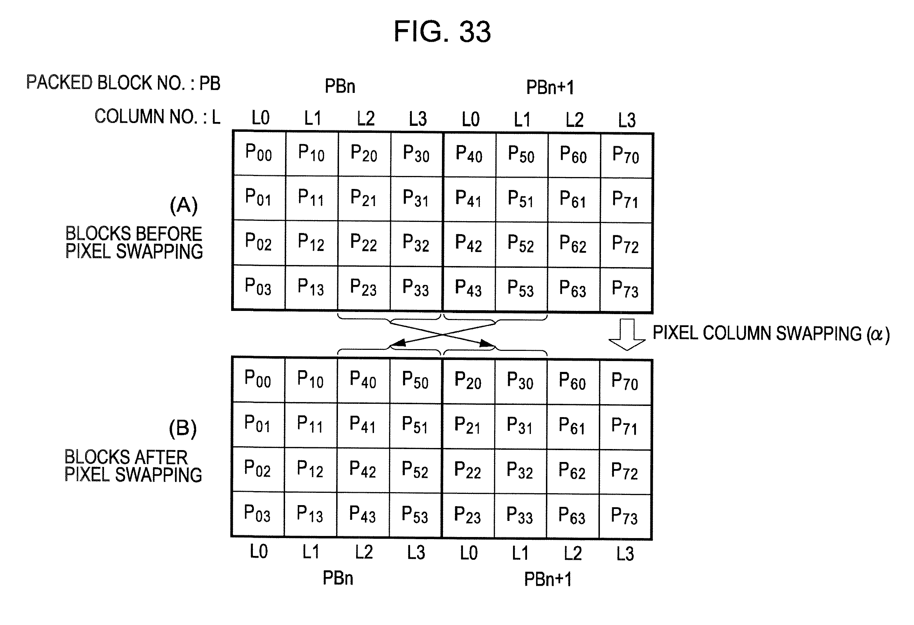

The pixel-column swapping processing performed by the pixel-column swapping portion $\alpha$411 is discussed below with reference to Fig. 33. The pixel-column swapping portion $\alpha$411 swaps two pixel columns of one block with two pixel columns of the adjacent block across the boundary of the two blocks. Two horizontally consecutive packed blocks are shown in Fig. 33.

In Fig. 33, the packed blocks indicated in (A) in Fig. 33 are the initial packed blocks generated by performing the basic packing processing discussed with reference to Fig. 9 by the packing portion 402 shown in Fig. 31 on the horizontally adjacent blocks discussed with reference to Fig. 20. The packed blocks indicated in (B) in Fig. 33 are packed blocks generated by performing the pixel-column swapping processing by the pixel-column swapping portion $\alpha$411.

In Fig. 33, the block numbers of the packed blocks are set as PB0, PB1, and so on, from the left side, and the packed block columns are numbered by L0, L1, L2, and L3 from the left. The pixel-column swapping processing executed by the pixel-column swapping portion $\alpha$411 is the processing for swapping the two pixel columns of the block $PB_n$ with the two pixel columns of the block $PB_{n+1}$ at the boundary of the two adjacent blocks $PB_n$ and $PB_{n+1}$, i.e., the pixel columns L2 and L3 of the packed block $PB_n$ are swapped with the pixel columns L0 and L1 of the packed block $PB_{n+1}$.

The pixel-column swapping portion $\alpha$411 performs the pixel-column swapping processing on all the consecutive blocks input into the pixel-column swapping portion $\alpha$411 in accordance with the pixel-column swapping rules ($\alpha$).

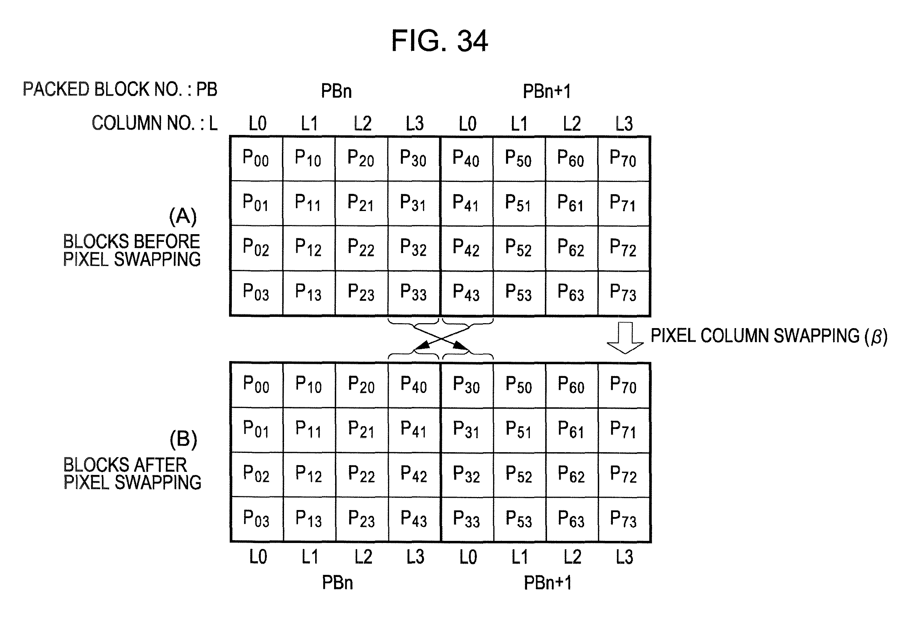

The pixel-column swapping processing performed by the pixel-column swapping portion $\beta$412 is discussed below with reference to Fig. 34. The pixel-column swapping portion $\beta$412 swaps one pixel column of one block with one pixel column of the adjacent block across the boundary of the two blocks. Two horizontally consecutive blocks are shown in Fig. 34. The blocks shown in (A) in Fig. 34 are blocks before pixel swapping, and the blocks shown in (B) in Fig. 34 are blocks after pixel swapping.

The pixel-column swapping processing executed by the pixel-column swapping portion $\beta$412 is the processing for swapping the one pixel column of the block $PB_n$ with the one pixel column of the block $PB_{n+1}$ at the boundary of the two adjacent blocks $PB_n$ and $PB_{n+1}$, i.e., the pixel column L3 of the packed block $PB_n$ with the pixel column L0 of the packed block $PB_{n+1}$. The pixel-column swapping portion $\beta$412 performs the pixel-column swapping processing on all the consecutive blocks input into the pixel-column swapping portion $\beta$412 in accordance with the pixel-column swapping rules ($\beta$).

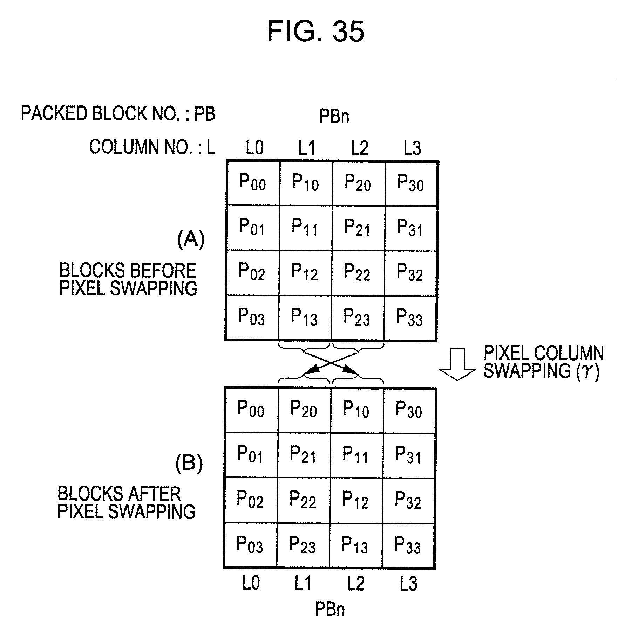

The pixel-column swapping processing performed by the pixel-column swapping portion γ413 is discussed below with reference to Fig. 35. The pixel-column swapping portion γ413 swaps two pixel columns located at the center of each of the consecutive blocks other than the head block or the final block. An example of the block other than the head block or the final block is shown in Fig. 35. The block shown in (A) in Fig. 35 is the block before pixel swapping, and the block shown in (B) in Fig. 35 is the block after pixel swapping.

The pixel-column swapping processing executed by the pixel-column swapping portion γ413 is the processing for swapping the two central pixel columns of each of the consecutive blocks other than the head block or the final block. Another block is located at the left or right side of the block $PB_n$. More specifically, the pixel-column swapping portion γ413 swaps the pixel column L1 with the pixel column L2 of the packed block $PB_n$. The pixel-column swapping portion γ413 performs the pixel-column swapping processing on all the consecutive blocks input into the pixel-column swapping portion γ413 in accordance with the pixel-column swapping rules (γ).

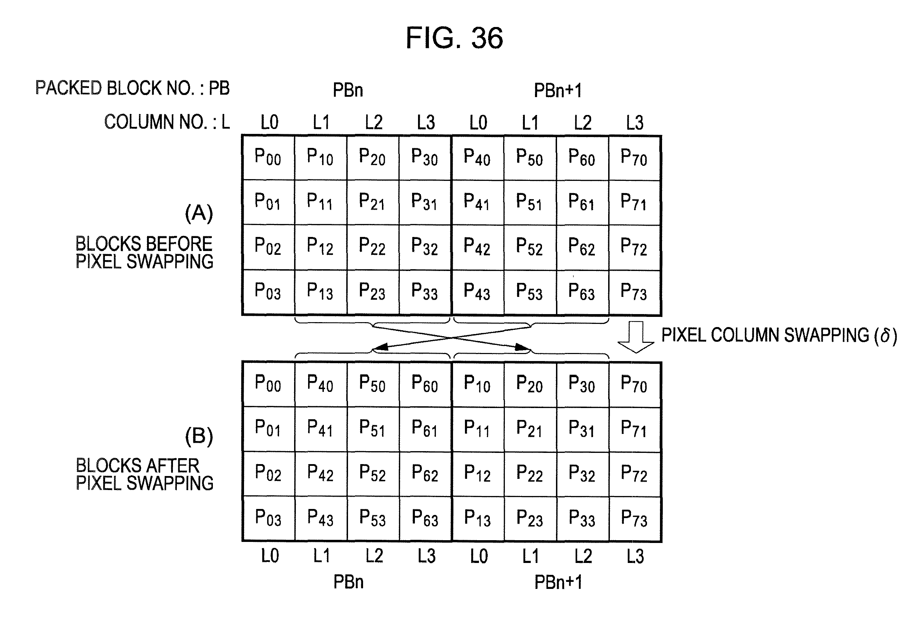

The pixel-column swapping processing performed by the pixel-column swapping portion δ414 is discussed below with reference to Fig. 36. The pixel-column swapping portion δ414 swaps three pixel columns of one block with three pixel columns of the adjacent block across the boundary of the two blocks. Two horizontally consecutive blocks are shown in Fig. 36. The blocks shown in (A) in Fig. 36 are blocks before pixel swapping, and the blocks shown in (B) in Fig. 36 are blocks after pixel swapping.

The pixel-column swapping processing executed by the pixel-column swapping portion δ414 is the processing for swapping the three pixel columns of the block $PB_n$ with the three pixel columns of the block $PB_{n+1}$ at the boundary of the two adjacent blocks $PB_n$ and $PB_{n+1}$, i.e., the pixel columns L1 through L3 of the packed block $PB_n$ with the pixel columns L0 through L2 of the packed block $PB_{n+1}$. The pixel-column swapping portion δ414 performs the pixel-column swapping processing on all the consecutive blocks input into the pixel-column swapping portion δ414 in accordance with the pixel-column swapping rules (δ).

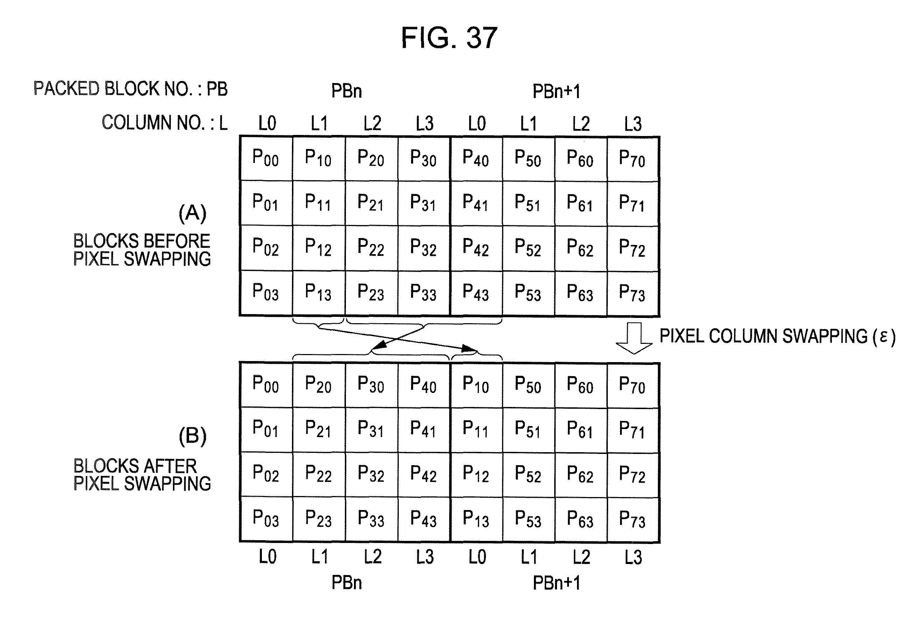

The pixel-column swapping processing performed by the pixel-column swapping portion ε415 is discussed below with reference to Fig. 37. The pixel-column swapping portion ε415 rotates four pixel columns of consecutive two blocks across the boundary. Two horizontally consecutive blocks are shown in Fig. 37. The blocks shown in (A) in Fig. 37 are the blocks before pixel swapping, and the blocks shown in (B) in Fig. 37 are the blocks after pixel swapping.

The pixel-column swapping processing executed by the pixel-column swapping portion ε415 is the processing for rotating the four pixel columns at the boundary of the two adjacent blocks $PB_n$ and $PB_{n+1}$, i.e., rotating the pixel columns L1 through L3 of the packed block $PB_n$ and the pixel column L0 of the packed block $PB_{n+1}$ by one pixel column. In this rotating processing, the pixel columns L2 and L3 of the block $PB_n$ and the pixel column L0 of the block $PB_{n+1}$ are shifted to the left, and the pixel column L1 of the packed block $PB_n$ is inserted into the space formed in the block $PB_{n+1}$. That is, the pixel-column swapping processing is performed in the following rotation mode.

Pixel column: PB0-L1 → pixel column: PB1-L0
Pixel column: PB0-L2 → pixel column: PBO-L1
Pixel column: PB0-L3 → pixel column: PBO-L2
Pixel column: PB1-L0 → pixel column: PBO-L3

The pixel-column swapping portion ε415 performs the pixel-column swapping processing on all the consecutive blocks input into the pixel-column swapping portion ε415 in accordance with the pixel-column swapping rules (ε).

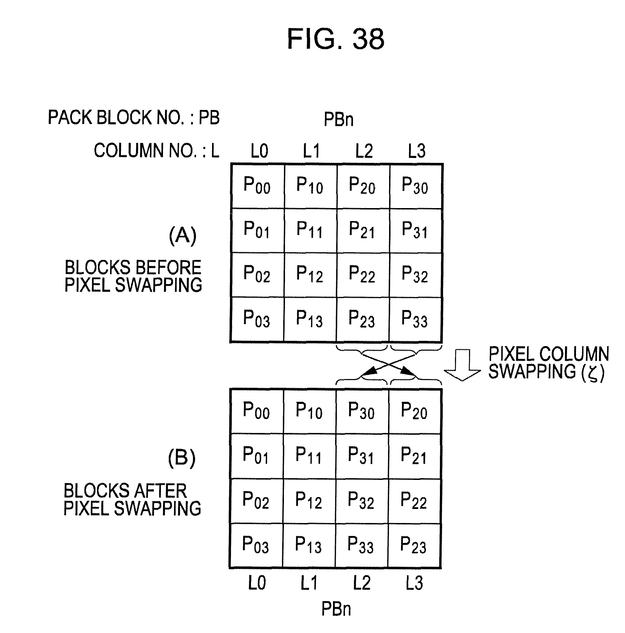

The pixel-column swapping processing performed by the pixel-column swapping portion ζ416 is discussed below with reference to Fig. 38. The pixel-column swapping portion ζ416 swaps the last two pixel columns of the block one before the final block. The block $PB_n$ one before the final block is shown in Fig. 38. The block shown in (A) in Fig. 38 is the block before pixel swapping, and the block shown in (B) in Fig. 38 is the block after pixel swapping.

The pixel-column swapping processing executed by the pixel-column swapping portion ζ416 is the processing for swapping the last two pixel columns of the block $PB_n$ one before the final block. Only one block (final block) is located at the right side of the block $PB_n$.

The pixel-column swapping portion ζ416 swaps the pixel columns L2 and L3 of the packed block $PB_n$. The pixel-column swapping portion ζ416 performs the pixel-column swapping processing on all the consecutive blocks input into the pixel-column swapping portion ζ416 in accordance with the pixel-column swapping rules (ζ).

The pixel-column swapping processing operations by the pixel-column swapping portions α411 through ζ416 are performed when the original image is moving toward the left side. If the original image is moving toward the right side, the directions of the above-described pixel-column swapping processing operations can be changed. Alternatively, the pixel columns in the packing processing by the packing portion 402 shown in Fig. 31 may be packed in the column order opposite to the column order described above, in which case, it is not necessary to change the directions of the pixel-column swapping processing by the pixel-column swapping portions α411 through ζ416.

If swapping processing is performed on vertically moving blocks, instead of the pixel-column swapping processing by the pixel-column swapping portions α411 through ζ416, the pixel-column swapping processing is rotated by 90 degrees to perform pixel-row swapping processing. For example, by substituting the leftward direction and the rightward direction by the upward direction and the downward direction, respectively, similar pixel swapping can be performed so that packed blocks having the pixel arrangement corresponding to the relative positions of the original image can be generated.

A description is given below of the packing processing for packing blocks subjected to spatial decimation processing and temporal decimation processing by the packing portion 143 of the motion-picture conversion apparatus shown in Fig. 8, i.e., processing for generating packed blocks by using the predetermined pixel-column swapping rules in accordance with the moving velocity v.

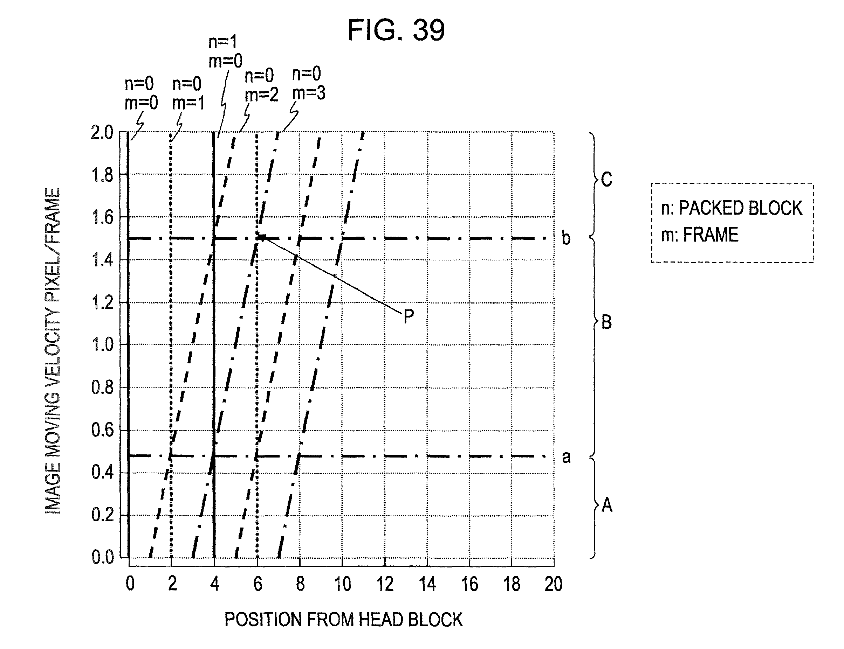

The correlation between the moving velocity (amount of movement) v and the relative pixel position x of the packed blocks in the original image when 1/4 spatial decimation is performed has been discussed with reference to Fig. 28. The correlation between the moving velocity (amount of movement) v and the relative pixel position x of the packed blocks in the original image when 1/2 temporal decimation and 1/2 spatial decimation are performed is shown in Fig. 39.

In Fig. 39, the vertical axis represents the moving velocity v, and the horizontal axis designates the relative pixel position x in the original image. The intersecting points of the lines indicate the points at which the relative pixel positions x of the packed blocks are switched from those of the original image. For example, the point P is the point at which the pixel columns of the packed blocks are switched from those of the original image.

As in the packed blocks generated by performing 1/4 spatial decimation processing, the switching of the pixel columns occurs only at specific moving velocities of the original image, i.e., the moving velocities associated with the lines a and b in Fig. 39.

As in the packed blocks subjected only to spatial decimation processing, Fig. 39 shows that in the moving velocity ranges (A, B, and C) without intersecting points, the order of the pixel columns of the packed blocks is not changed from that of the original image.

Accordingly, as in the packed blocks subjected only to spatial decimation processing, the predetermined pixel swapping processing in accordance with the moving velocity v can be performed on the packed blocks subjected to spatial decimation processing and temporal decimation processing so that the pixel arrangement of the packed blocks can be corrected to the pixel arrangement of the original image. With this arrangement, the sorting processing employed in the above-described embodiment can be omitted, and the processing performance can be enhanced.

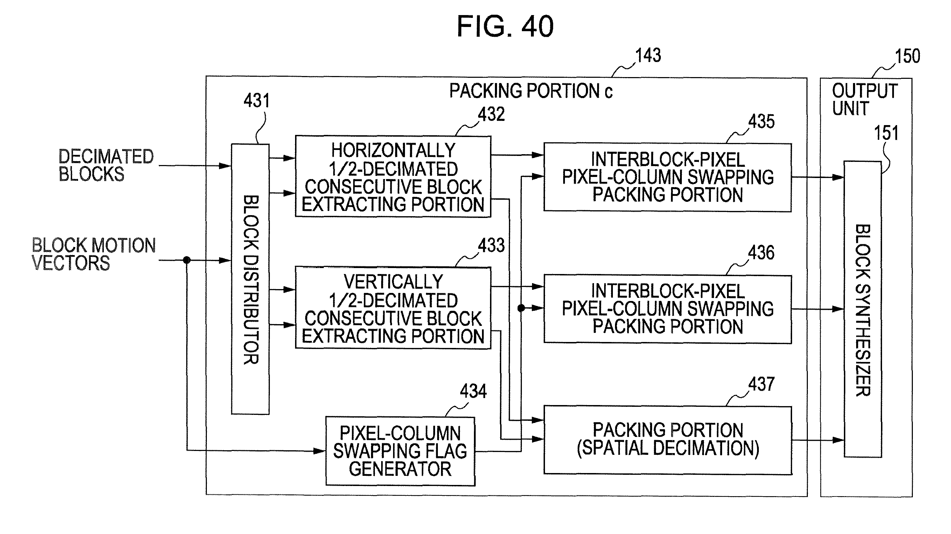

The configuration and processing of the packing portion 143 that sets the pixel arrangement of the packed blocks to that of the relative pixel positions of the original image by the predetermined pixel swapping processing in accordance with the moving velocity v are described below with reference to Figs. 40 through 43.

In the packing portion 143, blocks subjected to spatial and temporal decimation processing are input into a block distributor 431 together with the motion vectors of the blocks. The input blocks are stored, together with the motion vectors, in a block/motion-vector storage portion (not shown) in the block distributor 431. The motion vectors are also input into a pixel-column swapping flag generator 434, and the input blocks are stored in a motion-vector storage portion (not shown) in the pixel-column swapping flag generator 434.

From among the stored blocks, the block distributor 431 outputs horizontally moving blocks to a horizontally 1/2-decimated consecutive block extracting portion 432 and outputs vertically moving blocks to a vertically 1/2-decimated consecutive block extracting portion 433. In this case, the motion vectors associated with the output blocks are also output.

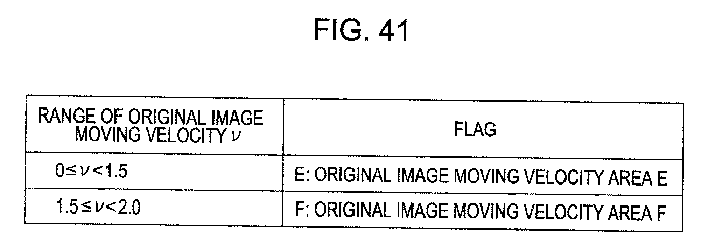

The pixel-column swapping flag generator 434 determines the moving velocity v (pixels per frame) based on the motion vectors of each block to determine to which velocity range the moving velocity v belongs in the graph representing the correlation between the moving velocity v and the relative pixel position x, and sets the determination result as the pixel-column swapping flag. In this embodiment, the flags are set, as shown in Fig. 41, in association with the velocity ranges in the following manner.

(1) $0 \leq v < 1.5 \rightarrow$ flag E
(2) $1.5 \leq v < 2.0 \rightarrow$ flag F

Those two flags are set in association with the moving velocity v.

Blocks subjected only to temporal decimation processing or blocks subjected only to spatial decimation processing are not input into the packing portion 143 shown in Fig. 40. Since in this embodiment blocks having the moving velocity v of one pixel or more and less than two pixels are subjected to spatial and temporal decimation processing, the range of the moving velocity v of the blocks input into the packing portion 143 is from 1.0 to 2.0. Accordingly, the intersecting points of the lines in the graph shown in Fig. 39 are associated with the moving velocity v of 1.5 pixels per frame. Thus, it is sufficient if the two pixel swapping modes are set, and the flags are set in accordance with the moving velocity ranges. Flags may be set more precisely in accordance with the moving velocities.

The horizontally 1/2-decimated consecutive block extracting portion 432 detects two or more horizontally consecutive blocks and outputs them to an interblock-pixel pixel-column swapping portion 435. In this case, the pixel-column swapping flags associated with the output blocks are also output from the pixel-column swapping flag generator 434.

Non-consecutive blocks are output to a packing portion 437.

Similarly, the vertically 1/2-decimated consecutive block extracting portion 433 detects two or more vertically consecutive blocks and outputs them to an interblock-pixel pixel-column swapping portion 436. In this case, the pixel-column swapping flags associated with the output blocks are also output from the pixel-column swapping flag generator 434. Non-consecutive blocks are output to the packing portion 437.

The packing portion 437 performs the packing processing discussed with reference to Fig. 10, and outputs the resulting blocks to the block synthesizer 151.

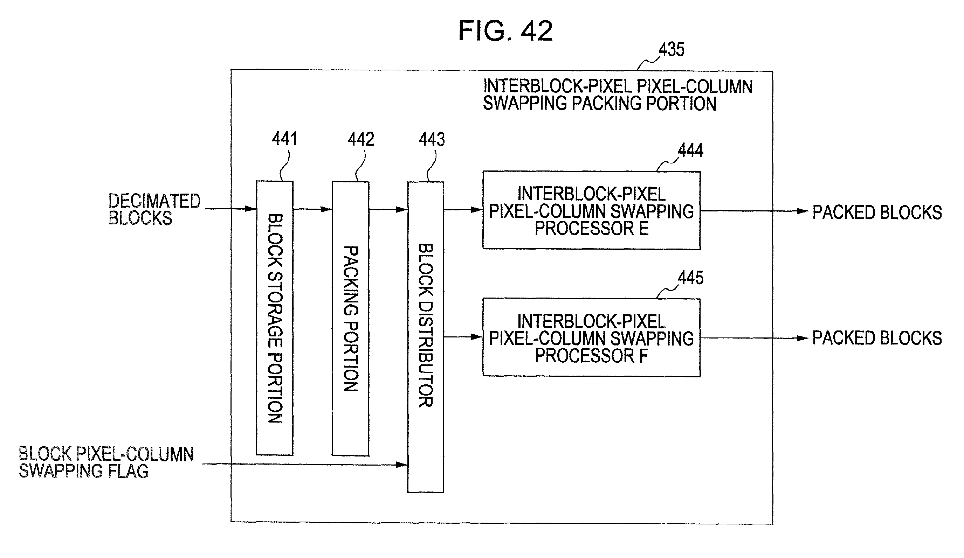

The interblock-pixel pixel-column swapping portion 435 performs packing processing for correcting the packed image for the switched pixel positions to the pixel positions of the original image by using the above-described swapping processing of the pixel columns, and outputs the corrected packed image to the block synthesizer 151. The configuration and processing of the interblock-pixel pixel-column swapping portion 435 are described below with reference to Fig. 42.

In the interblock-pixel pixel-column swapping portion 435 shown in Fig. 42, the consecutively decimated blocks are temporarily stored in a block storage portion 441. The blocks are then subjected to the packing processing discussed with reference to Fig. 10 in a packing portion 442.

A block distributor 443 distributes the resulting blocks to an interblock-pixel pixel-column swapping processor 444 or 445 according to the pixel-column swapping flag generated in the pixel-column swapping flag generator 434. In this embodiment, the distribution conditions are as follows.

(1) $0 \leq v < 1.5 \rightarrow$ flag E $\rightarrow$ swapping processor 444
(2) $1.5 \leq v < 2.0 \rightarrow$ flag F $\rightarrow$ swapping processor 445

The blocks distributed to the interblock-pixel pixel-column swapping processor 444 or 445 are subjected to the corresponding pixel-column swapping processing so that packed blocks having the relative pixel positions of the original image can be generated. In this case, the pixel swapping mode is determined based on the moving velocity x of the original image. The packed blocks generated in the interblock-pixel pixel-column swapping processor 444 or 445 are output as corrected packed blocks.

The packed blocks input into the interblock-pixel pixel-column swapping processor 444 are packed blocks which are subjected to 1/2 spatial decimation processing and 1/2 temporal decimation processing and subjected to packing processing shown in Fig. 10 in the packing portion 442 shown in Fig. 42 and whose moving velocity v ranges in $0 \leq v < 1.5$.

The packed blocks input into the interblock-pixel pixel-column swapping processor 445 are packed blocks which are subjected to 1/2 spatial decimation processing and 1/2 temporal decimation processing and subjected to packing processing shown in Fig. 10 in the packing portion 442 shown in Fig. 42 and whose moving velocity v ranges in $1.5 \leq v < 2.0$.

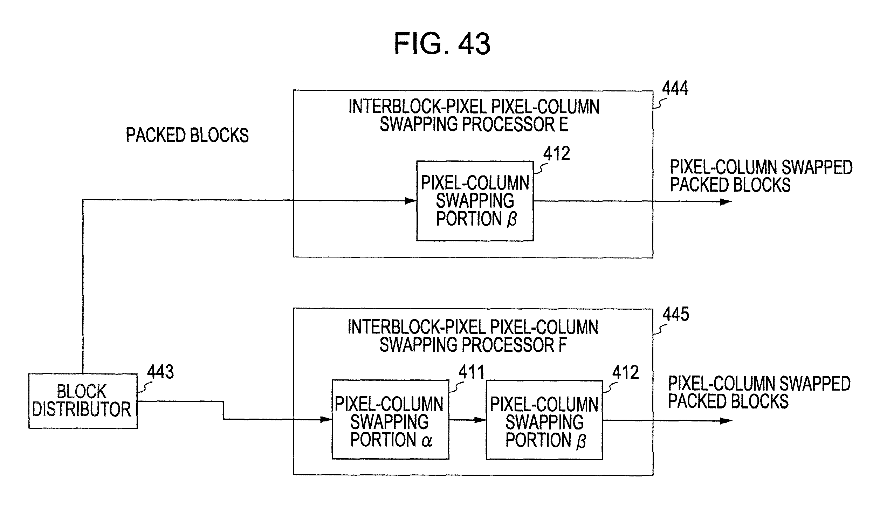

The configuration and processing of the interblock-pixel pixel-column swapping processor 444 or 445 are described below with reference to Fig. 43. The interblock-pixel pixel-column swapping processor 444 or 445 is formed of, as shown in Fig. 43, a combination of at least one of pixel-column swapping portions $\alpha$411 and $\beta$412. The pixel-column swapping portions $\alpha$411 and $\beta$412 perform pixel-column swapping processing in accordance with the corresponding pixel-column swapping rules.

The packed blocks input into the interblock-pixel pixel-column swapping processor 444 are subjected to pixel-column swapping processing by the pixel-column swapping portion $\beta$412 according to the preset pixel-column swapping rules. The packed blocks input into the interblock-pixel pixel-column swapping processor 445 are subjected to pixel-column swapping processing by the pixel-column swapping portions $\alpha$411 and $\beta$412 according to the preset corresponding pixel-column swapping rules.

As a result of the composite pixel-column swapping processing, the packed blocks having the relative pixel arrangement of the original image are generated and output.

The processing performed by the pixel-column swapping portion $\beta$412 is equal to the pixel-column swapping processing discussed with reference to Fig. 34, and processing performed by the pixel-column swapping portion $\alpha$411 is equal to the pixel-column swapping processing discussed with reference to Fig. 33.

The pixel-column swapping processing operations of the pixel-column swapping portions $\alpha$411 and $\beta$412 are performed when the original image is moving toward the left side. If the original image is moving toward the right side, the directions of the above-described pixel-column swapping processing operations can be changed. Alternatively, the pixel columns in the packing processing by the packing portion 442 shown in Fig. 42 may be packed in the column order opposite to the column order described above, in which case, it is not necessary to change the directions of the pixel-column swapping processing by the pixel-column swapping portions $\alpha$411 through $\beta$412.

If processing is performed on vertically moving blocks, instead of the pixel-column swapping processing by the pixel-column swapping portions $\alpha$411 and $\beta$412, the pixel-column swapping processing is rotated by 90 degrees to perform pixel-row swapping processing. For example, by substituting the leftward direction and the rightward direction by the upward direction and the downward direction, respectively, similar pixel swapping can be performed so that packed blocks having the relative pixel arrangement of the original image can be generated.

As described above, in the moving picture conversion apparatus of this embodiment, the pixel order of packed blocks is corrected when performing packing processing so that the corrected packed image becomes faithful to the original image, and then, the resulting packed image is coded by a general coding method, such as MPEG, Motion, or JPEG. Accordingly, the packed image becomes smooth image data which is faithful to the original image. With this configuration, the compression ratio of the coding method, such as MPEG, Motion, or JPEG, can be enhanced, and the quantity of data can be reduced more efficiently.

3. Apparatus and Method for Performing Moving Picture Decompression According to Embodiment of the Invention

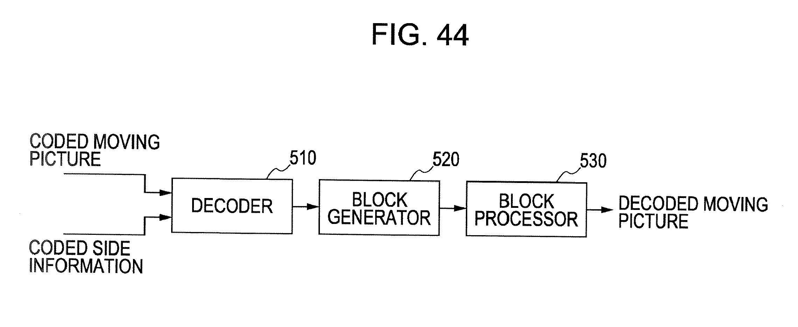

The configuration and processing of a moving picture reconstruction apparatus that performs moving picture decompression are described below with reference to Figs. 44 through 64. Fig. 44 is a block diagram illustrating the schematic configuration of the moving picture reconstruction apparatus.

The moving picture reconstruction apparatus of this embodiment decodes and decompresses data coded by a general coding method, such as MPEG, Motion, or JPEG after being subjected to spatial decimation or/and temporal decimation based on the amounts of movements of blocks as discussed in 1. Basic Configuration of Moving Picture Conversion Apparatus Utilizing Super-Resolution Effect and after being subjected to packing processing as discussed in 2. Apparatus and Method for Performing Moving picture Compression According to Embodiment of the Invention.

In the moving picture reconstruction apparatus shown in Fig. 44, coded moving picture data and side information are input into a decoder 510 and are decoded therein. The coded moving picture data is the coded block data including packed blocks generated by performing sorting processing based on the relative pixel positions x or pixel swapping processing based on the moving velocity v. The side information includes a block distribution flag indicating the decimation or packing processing mode and the amount-of-movement information.

The decoder 510 decodes the moving picture data coded by a general coding method, such as MPEG, Motion, or JPEG, and also decodes the side information coded by a general coding method, such as LZH or Zip. The decoding processing mode corresponds to the coding processing mode.

A block generator 520 divides each frame of the decoded moving picture into blocks, which partition the pixels forming the moving picture, and supplies the divided blocks to a block processor 530 together with the decoded side information. In this case, the block size should be the same size when the blocks are generated in the coder.

The block processor 530 performs processing on each block which has been converted into the frame rate R/M by performing the packing processing by the coder to generate the moving picture having the original frame rate R (hereinafter such reverse processing is referred to as "unpacking processing"), and outputs the resulting moving picture as the decoded moving picture. In this unpacking processing, the original moving picture before being subjected to the packing processing in the coder is reconstructed on the basis of the side information decoded by the decoder 510. The decoded moving picture output from the block processor 530 is the moving picture having a decreased image quality based on the human visual characteristics, as described above.

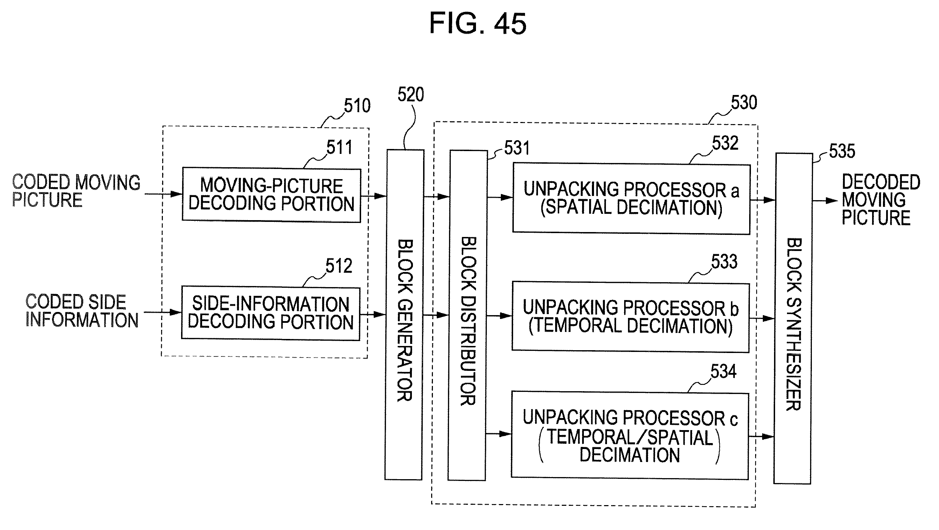

The configurations of the decoder 510, the block generator 520, and the block processor 530 are discussed below with reference to the block diagram in Fig. 45.

After being input into the moving picture reconstruction apparatus, the coded moving picture is decoded by a moving picture decoding portion 511, and the coded side information is decoded by a side-information decoding portion 512. The decoded moving picture is divided into blocks having a certain size (for example, 8x8 or 16x16 pixels) by the block generator 520, and blocks for one frame is stored in a storage portion (not shown) in the block generator 520. The decoded moving picture for one frame and the associated side information are supplied to a block distributor 531 of the block processor 530.

The block distributor 531 distributes the blocks to unpacking processor 532, 533, or 534 (unpacking processor a, b, or c), the unpacking processors 532, 533, and 534 performing corresponding different unpacking operations. The block distributor 531 receives the side information and the block image data for one frame output from the block generator 520.

When dividing the blocks for one frame into the unpacking processor 532, 533, or 534 according to the side information, the block distributor 531 should distribute the blocks based on the side information to the unpacking processor which performs unpacking processing to reconstruct the original image data.

In this embodiment, the side information includes the block distribution flag indicating to which block processing portion 131, 132, or 133 in the moving picture conversion apparatus shown in Fig. 8 each block has been distributed. The block distributor 531 distributes each block to the unpacking processor 532, 533, or 534 based an the block distribution flag. Blocks subjected to spatial decimation processing in the block processing portion 131 are distributed to the unpacking processor 532, blacks subjected to temporal decimation processing in the block processing portion 132 are distributed to the unpacking processor 533, and blocks subjected to spatial and temporal decimation processing in the block processing portion 133 are distributed to the unpacking processor 534.

The unpacking processor 532, 533, or 534 receives the blocks which have been converted into the frame rate R/M by performing the packing processing in the coder, and performs the corresponding unpacking processing on the received blocks to reconvert the blocks into the frame rate R. In this embodiment, blocks packed in the packing portions 141, 142, and 143 of the moving picture conversion apparatus shown in Fig. 8 are unpacked in the unpacking processors 532, 533, and 534, respectively.

The blocks converted to the original frame rate R by the unpacking processor 532, 533, or 534 are combined into a frame image having the frame rate R by a block synthesizer 535. Since R is 240 fps and M is 4 in this embodiment, four frames of the moving picture of 60(240/4) fps are combined into one frame image. That is, the block synthesizer 535 serves to synthesize the original high-frame-rate moving picture that can be displayed from the decoded frames.

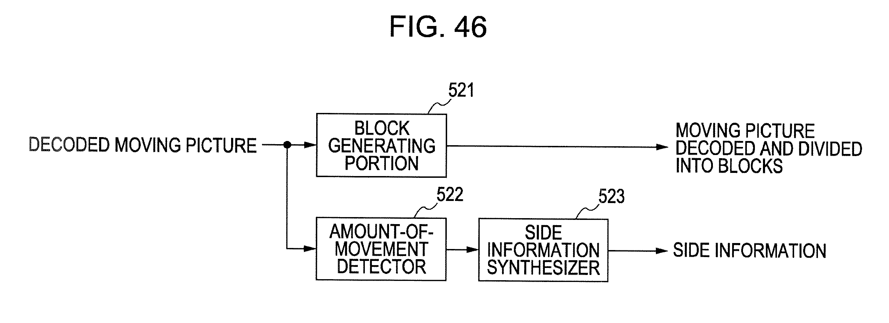

Another example of the configuration of the block generator 520 is shown in Fig. 46. The block generator 520 shown in Fig. 46 is different from that in Fig. 45 in that an amount-of-movement detector 522 and a side information synthesizer 523 are provided. The configuration shown in Fig. 46 copes with a situation where side information is not supplied to the decoder for some reason, for example, for further increasing the compression ratio.

The decoded moving picture data input into a block generating portion 521 is divided into blocks having a certain size (for example, 8x8 or 16x16 pixels) by performing the processing similar to that of the block generator 520 shown in Fig. 45, and blocks for one frame are stored in a storage portion (not shown) in the block generating portion 521. The block image data is then output to the block distributor 531 shown in Fig. 45.

In the configuration shown in Fig. 46, the decoded moving picture data is also input into the amount-of-movement detector 522, and the number of images necessary for detecting the amount of movement are stored in an image storage portion (not shown) in the amount-of-movement detector 522. The amount-of-movement detector 522 determines the amount of movement of each block having a certain size (for example, 8x8 or 16x16 pixels) from the stored image, and outputs information concerning the amount of movement of one frame to the side information synthesizer 523. In this case, the block size should be the same size of the blocks divided in the block generating portion 521.

The side information synthesizer 523 generates side information based on the motion vectors of each block, and outputs the side information to the block distributor 531 of the block processor 530 shown in Fig. 45. In this case, it is necessary that the rules for generating the side information be associated with those generated in the coder.

The configuration and processing of the unpacking processor 532, 533, or 534 of the block processor 530 shown in Fig. 45 are described below. The unpacking processors 532, 533, and 534, which correspond to the packing portions 141, 142, and 143, respectively, of the moving picture conversion apparatus shown in Fig. 8, reconstruct the original image by unpacking the blocks packed by the packing portions 141, 142, and 143.

As in the packing processing by the packing portions 141, 142, and 143, the unpacking processing performed by the unpacking processors 532, 533, and 534 includes two unpacking processing modes. In one unpacking processing mode, sorting processing is performed based on the relative pixel positions x, and in the other unpacking processing mode, pixel swapping processing is performed based on the block moving velocity v according to predetermined pixel swapping rules. The two unpacking processing modes are as follows.

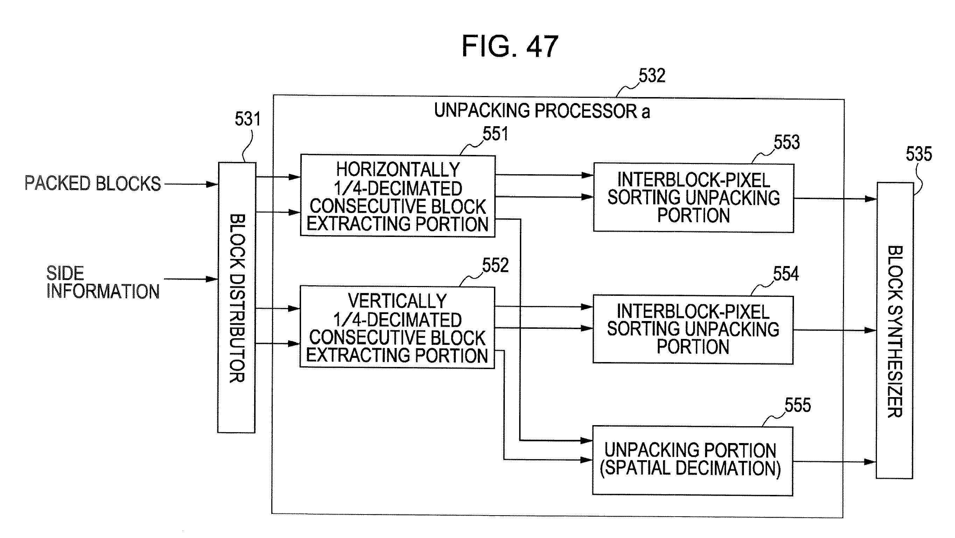

The unpacking processing performed by the sorting processing based on the relative pixel positions x is first discussed. The configuration and processing of the unpacking processor 532 associated with the packing portion 141 are described below with reference to Fig. 47.

The unpacking processor 532 receives the blocks output from the block distributor 531, and more specifically, the packed blocks, each formed of four blocks extracted from four frames, generated in the packing portion 141, i.e., the packed blocks corresponding to the spatially decimated data.

The packed block is the block packed from the four blocks obtained from the four frames in the interblock-pixel sorting packing portion 354 or 355, or the packing portion 356 shown in Fig. 19.

The packed block input into the unpacking processor 532 is supplied to the block distributor 531, and is stored, together with the side information, in a block/side-information storage portion (not shown) in the block distributor 531. From among the stored blocks, the block distributor 531 outputs horizontally moving blocks to a horizontally 1/4-decimated consecutive block extracting portion 551 and outputs vertically moving blocks to a vertically 1/4-decimated consecutive block extracting portion 552. In this case, the side information concerning the output blocks is also output.

The horizontally 1/4-decimated consecutive block extracting portion 551 detects two or more horizontally consecutive blocks and outputs them to an interblock-pixel sorting unpacking portion 553. In this case, the motion vectors of the output blocks are also output to the interblock-pixel sorting unpacking portion 553. Non-consecutive blocks are output to an unpacking portion 555.

Similarly, the vertically 1/4-decimated consecutive block extracting portion 552 detects two or more vertically consecutive blocks and outputs them to an interblock-pixel sorting unpacking portion 554. In this case, the motion vectors of the output blocks are also output to the interblock-pixel sorting unpacking portion 554. Non-consecutive blocks are output to the unpacking portion 555.

It is desirable that the distribution results obtained by the horizontally 1/4-decimated consecutive block extracting portion 551 and the vertically 1/4-decimated consecutive block extracting portion 552 be the same as the distribution results obtained by the packing processing discussed with reference to Figs. 8 and 19.

The packed block input into the unpacking portion 555 corresponds to the block 225 shown in Fig. 9. $1\times4$ pixels in the block 225, for example, the pixel set 235, are pixels P1 through P4 of the four frames packed in the packing portion 356 of the moving picture conversion apparatus shown in Fig. 19. The unpacking portion 555 expands the four pixels P1 through P4 into the blocks of the four frames to increase the number of frames by four times.

That is, the unpacking portion 555 receives the block 225 shown in Fig. 9, and expands the block 225 into four frames to reconstruct the four blocks 221 through 224 shown in Fig. 9. The above-described unpacking processing is performed when horizontal decimation processing is performed on $1\times4$ pixel units. Unpacking processing can be similarly performed when vertical decimation processing is performed on $4\times1$ pixel units.

It is necessary that the order of the pixels P1 through P4 assumed by the unpacking portion 555 be the same as the order of the pixels packed by the packing portion 356 of the moving picture conversion apparatus shown in Fig. 19.

The packed blocks input into the interblock-pixel sorting unpacking portion 553 are the blocks subjected to the sorting processing based on the relative pixel position information x, i.e., the blocks subjected to horizontally 1/4-spatial decimation processing and sorted based on the relative pixel position information x, for example, the packed blocks shown in (B) in Fig. 24.

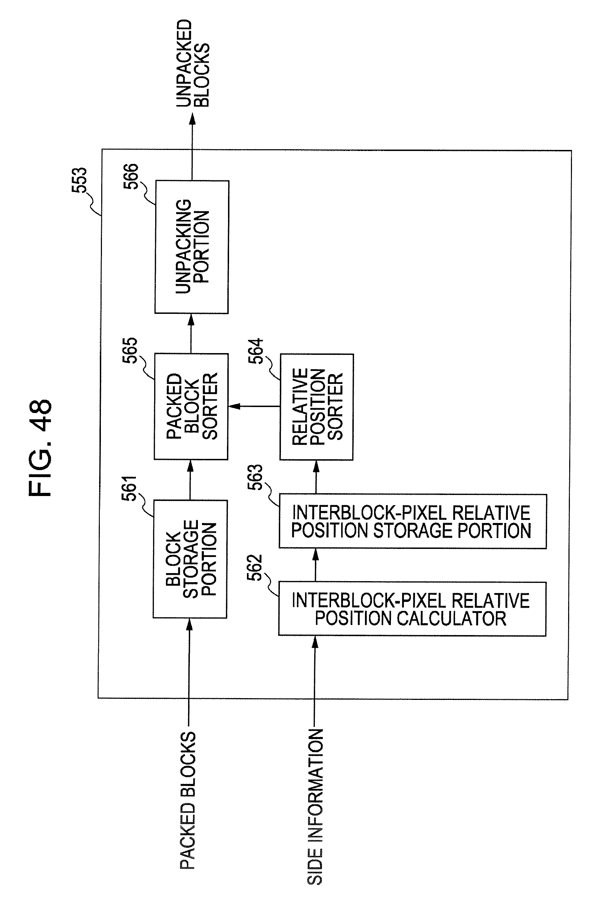

The pixels contained in the packed blocks, for example, pixels P10 through PB3 contained in the packed blocks shown in (B) in Fig. 24, are the pixels P10 through PB3 for the four frames packed by the interblock-pixel sorting packing portion 354 of the moving picture conversion apparatus shown in Fig. 19. The interblock-pixel sorting unpacking portion 553 expands the pixels P10 through PB3 into blocks for four frames to increase the number of frames by four times. That is, the interblock-pixel sorting unpacking portion 553 receives the packed blocks shown in (B) in Fig. 24, and expands them into the four frames to generate frames 1 through 4 shown in Fig. 23. The configuration and processing of the interblock-pixel sorting unpacking portion 553 are described below with reference to Fig. 48.

The interblock-pixel sorting unpacking portion 553 shown in Fig. 48 performs processing opposite to the processing executed by the interblock-pixel sorting packing portion 354 shown in Fig. 22 to reconstruct the blocks before being corrected by the sorting processing.

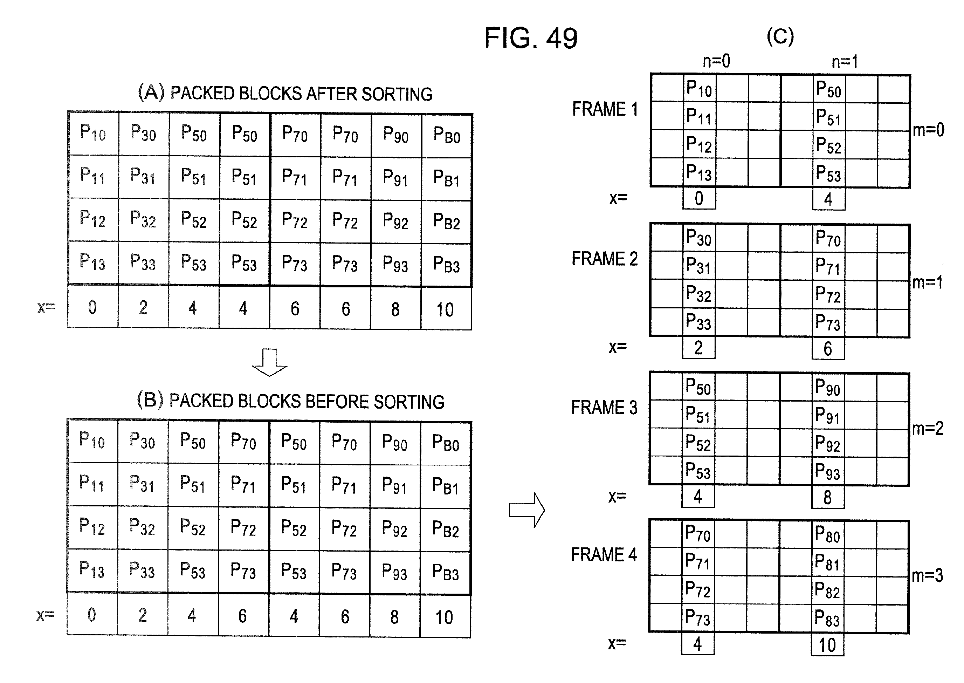

The processing performed by the interblock-pixel sorting unpacking portion 553 is discussed below with reference to Fig. 49. The packed blocks generated by sorting processing based on the relative pixel positions x, i.e., the packed blocks after being sorted, which correspond to the packed block shown in (B) in Fig. 24, are shown in (A) in Fig. 49. The initial packed blocks before being sorted, which correspond to the packed blocks shown in (A) in Fig. 24, are shown in (B) in Fig. 49, which are the initial packed blocks in which the pixel positions are arranged in the frame order.

The spatially decimated blocks before being packed, which correspond to the block data decimated from the corresponding frames shown in Fig. 23, are shown in (C) in Fig. 49. The interblock-pixel sorting unpacking portion 553 shown in Fig. 48 reconstructs the spatially decimated blocks shown in (C) in Fig. 49 based on the packed blocks shown in (A) in Fig. 49.

To reconstruct the blocks of the four frames shown in (C) in Fig. 49 from the packed blocks shown in (A) in Fig. 49 input into the interblock-pixel sorting unpacking portion 553, it is necessary to first reconstruct the initial packed blocks before being sorted shown in (B) in Fig. 49, i.e., the initial packed blocks in which the pixel positions are arranged in the frame order. The blocks of the four frames shown in (C) in Fig. 49 are reconstructed from the packed blocks before being sorted shown in (B) in Fig. 49 based on the predetermined unpacking rules.

The processing for reconstructing the initial packed blocks before being sorted shown in (B) in Fig. 49 from the packed blocks after being sorted shown in (A) in Fig. 49 is first discussed below. An interblock-pixel relative position calculator 562 of the interblock-pixel sorting unpacking portion 553 shown in Fig. 48 extracts the moving velocity v of each block contained in the side information to determine the relative pixel position x of each pixel column in the original image starting from the head block by using the above-described equation (1) (x=mxv+4xn). The interblock-pixel relative position calculator 562 then stores the calculated relative pixel positions x in an interblock-pixel relative position storage portion 563.

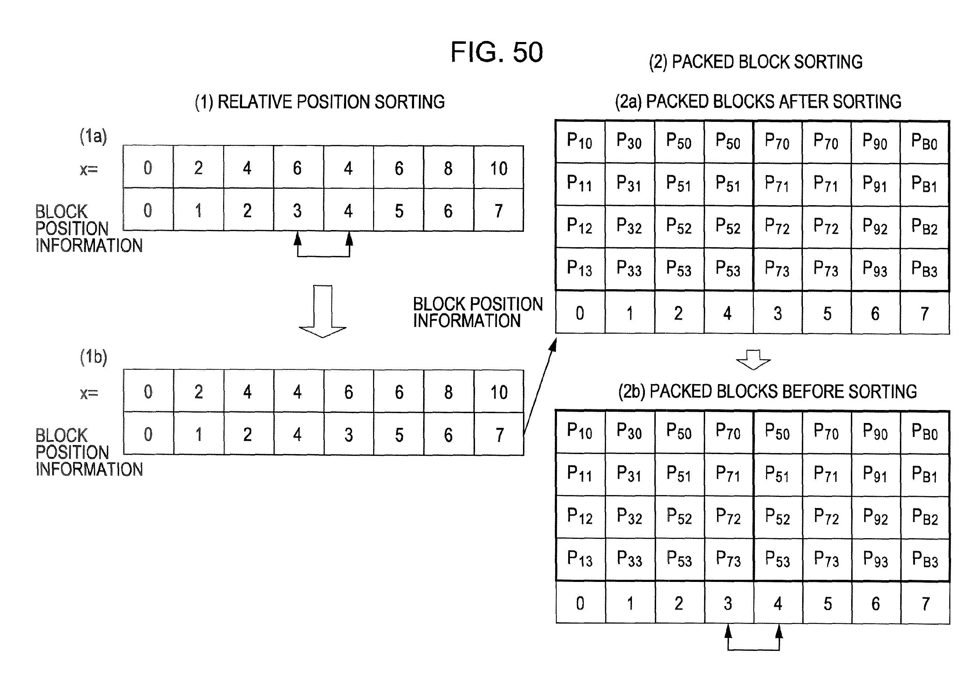

A relative position sorter 564 performs sorting processing based on the relative pixel positions x. An example of the sorting processing on the relative pixel positions x performed by the relative position sorter 564 is shown in (1) in Fig. 50. The calculated data concerning the relative pixel positions x indicated in (1a) in Fig. 50 is equal to the relative pixel positions x calculated when sorting packing processing performed by the moving picture conversion apparatus is executed, i.e., the same relative pixel positions x of the pixel columns of the packed blocks before being sorted shown in (B) in Fig. 49. In the packing processing, the relative pixel positions x shown in (B) in Fig. 49 are sorted, for example, in ascending order, to generate the sorted packed blocks shown in (A) in Fig. 49.

In the interblock-pixel sorting unpacking portion 553, the relative position sorter 564 performs sorting processing on the relative pixel positions x indicated in (1a) in Fig. 50 based on the relative pixel positions x. For the execution of the sorting processing, block position information, indicated by 0 through 7, shown below the relative pixel positions x in (1a) in Fig. 50, is associated with the relative pixel positions x.

The relative position sorter 564 performs sorting processing based on the relative pixel positions x while associating the block position information with the relative pixel positions x. The sorting result is indicated in (1b) in Fig. 50.

Then, the block position information obtained as a result of the sorting processing by the relative position sorter 564 is input into a packed block sorter 565. The packed block sorter 565 then performs sorting processing on the consecutive blocks input from the block storage portion 561 based on the block position information while associating the block position information with the pixel columns of the blocks. That is, the packed block sorter 565 sorts the packed blocks indicated in (2a) in Fig. 50 based on the block position information.

As a result of this sorting processing, block position 3 is swapped with block position 4, resulting in the packed blocks indicated in (2b) in Fig. 50 having the same pixel arrangement as that of the packed blocks before being sorted shown in (B) in Fig. 49. The packed block sorter 565 outputs the sorted packed blocks to an unpacking portion 566.

As discussed above, as in the interblock-pixel sorting packing portion 354, the interblock-pixel sorting unpacking portion 553 first calculates the pixel relative positions x from the moving velocity x of each block. Then, the interblock-pixel sorting unpacking portion 553 performs sorting processing on the relative pixel positions x while associating the block position information with the relative pixel positions x, and then sorts the packed blocks based on the resulting block position information while associating the block position information with the pixel columns of the packed blocks, thereby obtaining the packed blocks before being sorted.

The unpacking portion 566 performs processing similar to that performed by the packing portion 555 to convert the blocks into the original frame rate. The above-described processing is performed on the original image that moves toward the left side. By sorting the pixel columns in ascending order or in descending order by the relative position sorter 564 by using the relative pixel position information x as the key depending on whether the original image is moving toward the left side or the right side, the packed blocks can be sorted. To perform processing on vertically moving blocks, the above-described sorting processing can be vertically executed on the pixel rows by using the vertical relative pixel position information y as the key.

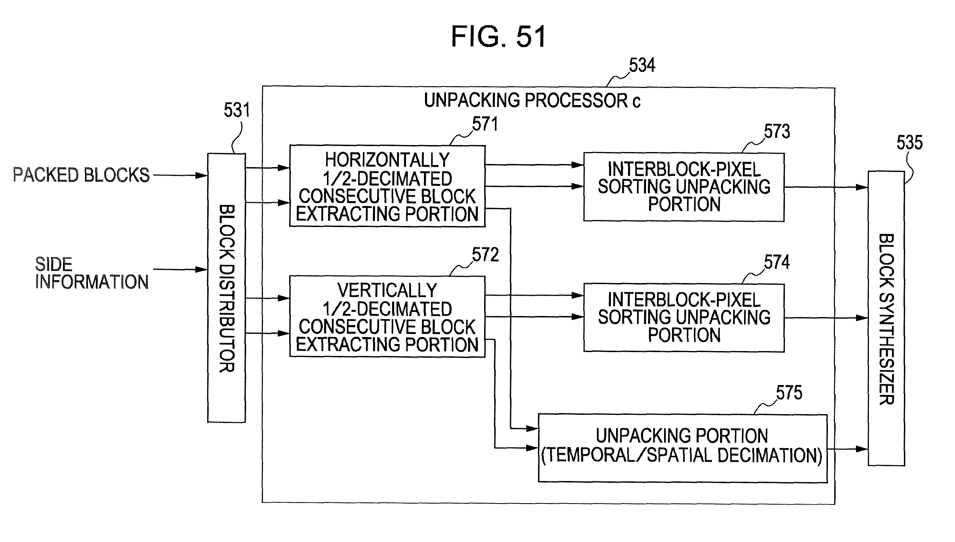

A description is now given, with reference to Figs. 51 through 54, of the configuration and processing of the unpacking processor 534 shown in Fig. 45 that performs unpacking processing on packed blocks which have been sorted after being subjected to 1/2 spatial decimation and 1/2 temporal decimation.

The unpacking processor 534 receives the blocks output from the block distributor 531, and more specifically, the blocks, each being packed from the four blocks extracted from the four frames in the packing portion 143 of the moving picture conversion apparatus shown in Fig. 8. In other words, the packed block is the block integrated from the four blocks extracted from the four frames in the interblock-pixel sorting packing portion 374 or 375, or the packing portion 376 in the packing portion 143 shown in Fig. 25.

The packed blocks input into the block distributor 531 are stored, together with the side information, in a block/side-information storage portion (not shown) in the block distributor 531. From among the stored blocks, the block distributor 531 outputs horizontally moving blocks to a horizontally 1/2-decimated consecutive block extracting portion 571 and outputs vertically moving blocks to a vertically 1/2-decimated consecutive block extracting portion 572. In this case, the side information concerning the output blocks is also output.

The horizontally 1/2-decimated consecutive block extracting portion 571 detects two or more horizontally consecutive blocks and outputs them to an interblock-pixel sorting unpacking portion 573. In this case, the motion vectors of the output blocks are also output. Non-consecutive blocks are output to an unpacking portion 575.

Similarly, the vertically 1/2-decimated consecutive block extracting portion 572 detects two or more vertically consecutive blocks and outputs them to an interblock-pixel sorting unpacking portion 574. In this case, the motion vectors of the output blocks are also output. Non-consecutive blocks are output to the unpacking portion 575.

It is desirable that the block distribution results obtained by the block distributor 531, the horizontally 1/2-decimated consecutive block extracting portion 571, and the vertically 1/2-decimated consecutive block extracting portion 572 be the same as those obtained by the packing processing discussed with reference to Figs. 8 and 25.

The packed block input into the unpacking portion 575 is the block 245 shown in Fig. 10. 1x2 pixels contained in the block, for example, the pixel set 255 contained in the block 245, are pixels P1 and P3 for four frames packed in the packing portion 376 of the moving picture conversion apparatus shown in Fig. 25. The unpacking portion 575 expands the two pixels P1 and P3 into the blocks for the four frames to increase the number of frames by twice.

That is, the unpacking portion 575 receives the block 245 shown in Fig. 10, and expands it into four frames to generate the four blocks 241 through 244. The above-described unpacking processing is performed when horizontal decimation processing is performed on $1 \times 2$ pixel units. Unpacking processing can be similarly performed when vertical decimation processing is performed on $2 \times 1$ pixel units.

It is necessary that the order of the pixels P1 and P3 assumed by the unpacking portion 575 be the same as the pixel order used by the packing portion 376 of the moving picture conversion apparatus shown in Fig. 25.

The packed blocks input into the interblock-pixel sorting unpacking portion 573 are the blocks subjected to the sorting processing based on the relative pixel position information x, i.e., the blocks subjected to horizontally 1/2-spatial decimation processing and 1/2 temporal decimation processing and sorted based on the relative pixel position information x, for example, the packed blocks shown in (B) in Fig. 27.

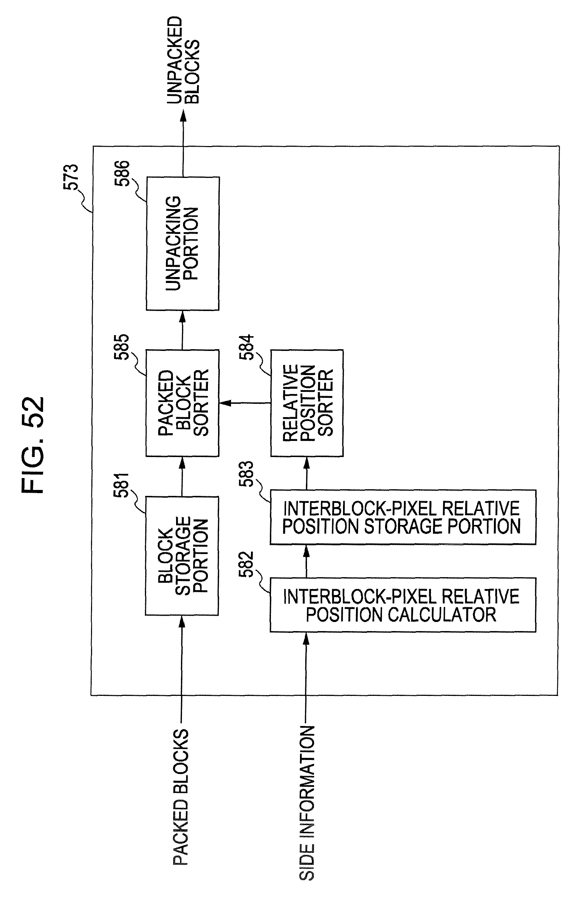

The pixels contained in the packed blocks, for example, pixels P00 through PA3 contained in the packed blocks shown in (B) in Fig. 27, are the pixels P00 through PA3 of the four frames packed by the interblock-pixel sorting unpacking portion 374 of the unpacking portion 143 shown in Fig. 25. The interblock-pixel sorting unpacking portion 573 expands the pixels P00 through PA3 into blocks for four frames to increase the number of frames by four times. That is, the interblock-pixel sorting unpacking portion 573 receives the packed blocks shown in (B) in Fig. 27, and expands them into the four frames to generate frames 1 through 4 shown in Fig. 26. The configuration and processing of the interblock-pixel sorting unpacking portion 573 are described below with reference to Fig. 52.

The interblock-pixel sorting unpacking portion 573 shown in Fig. 52 is configured similarly to the interblock-pixel sorting unpacking portion 553 for sorting the blocks subjected only to spatial decimation processing.

The interblock-pixel sorting unpacking portion 573 shown in Fig. 52 performs processing opposite to the processing executed by the interblock-pixel sorting packing portion 374 shown in Fig. 22 to reconstruct the blocks before being corrected by the sorting processing.

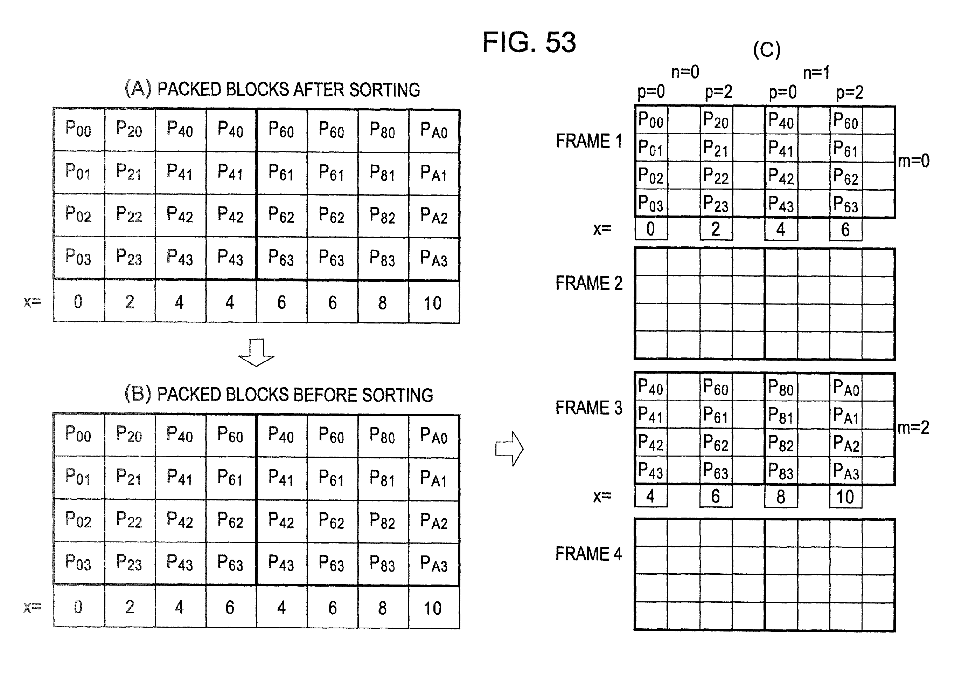

The processing performed by the interblock-pixel sorting unpacking portion 573 is discussed below with reference to Fig. 53. The packed blocks generated by performing sorting processing based on the relative pixel positions x, i.e., the packed blocks after being sorted, which correspond to the packed blocks shown in (B) in Fig. 27, are shown in (A) in Fig. 53. The initial packed blocks before being sorted, which correspond to the packed blocks shown in (A) in Fig. 27, are shown in (B) in Fig. 53, which are the initial packed blocks in which the pixel positions are arranged in the frame order.

The spatially decimated blocks before being packed, which correspond to the block data decimated from the corresponding frames shown in Fig. 26, are shown in (C) in Fig. 53. The interblock-pixel sorting unpacking portion 573 shown in Fig. 52 reconstructs the spatially decimated blocks shown in (C) in Fig. 53 based on the packed blocks shown in (A) in Fig. 53.

To reconstruct the blocks of the four frames shown in (C) in Fig. 53 from the packed blocks shown in (A) in Fig. 53 input into the interblock-pixel sorting unpacking portion 573, it is necessary to first reconstruct the initial packed blocks before being sorted shown in (B) in Fig. 53, i.e., the initial packed blocks in which the pixel positions are arranged in the frame order. The blocks of the four frames shown in (C) in Fig. 53 are reconstructed from the packed blocks before being sorted shown in (B) in Fig. 53 based on the predetermined unpacking rules.

The processing for reconstructing the initial packed blocks before being sorted shown in (B) in Fig. 53 from the packed blocks after being sorted shown in (A) in Fig. 53 is first discussed below. An interblock-pixel relative position calculator 582 of the interblock-pixel sorting unpacking portion 573 shown in Fig. 52 extracts the moving velocity v of each block contained in the side information to determine the relative pixel position x of each pixel column in the original image starting from the head block by using the above-described equation (2) (x=mxv+4xn+p). The interblock-pixel relative position calculator 582 then stores the calculated relative pixel positions x in an interblock-pixel relative position storage portion 583.

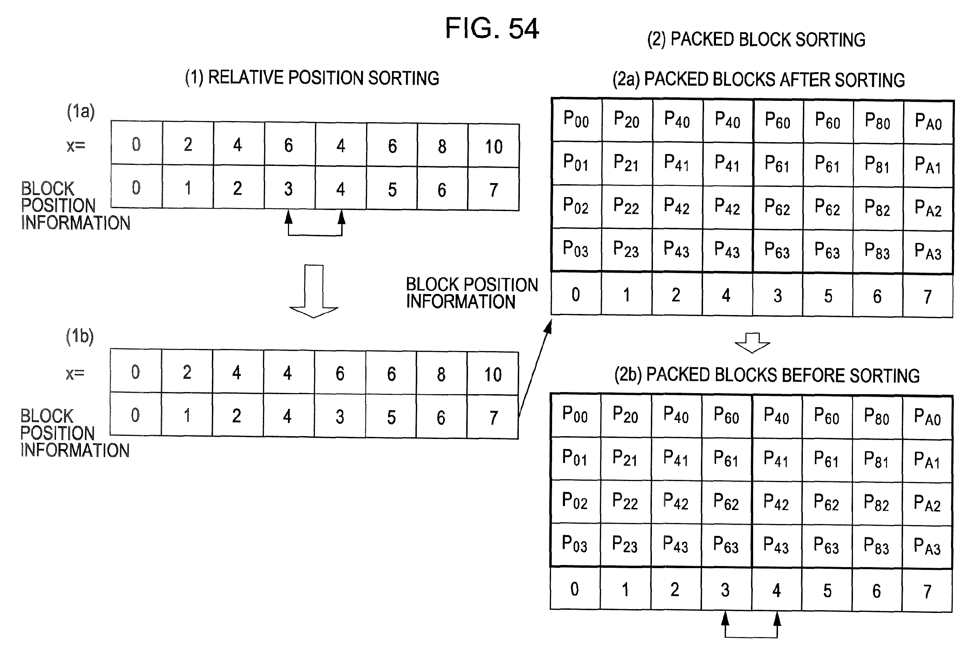

A relative position sorter 584 performs sorting processing on the relative pixel positions x based on the relative pixel positions x. An example of the sorting processing on the relative pixel positions x performed by the relative position sorter 584 is shown in (1) in Fig. 54. The calculated data concerning the relative pixel positions x indicated in (1a) in Fig. 54 is equal to the relative pixel positions x calculated when sorting packing processing performed by the moving picture conversion apparatus is executed, i.e., the same relative pixel positions x of the pixel columns of the packed blocks before being sorted shown in (B) in Fig. 53. In the packing processing, the relative pixel positions x shown in (B) in Fig. 53 are sorted, for example, in ascending order, to generate the sorted packed blocks shown in (A) in Fig. 53.

In the interblock-pixel sorting unpacking portion 573, the relative position sorter 584 performs sorting processing based on the relative pixel positions x indicated in (1a) in Fig. 54. For the execution of the sorting processing, block position information, indicated by 0 through 7, shown below the relative pixel positions x indicated in (1a) in Fig. 54, is associated with the relative pixel positions x.

The relative position sorter 584 performs sorting processing based on the relative pixel positions x while associating the block position information with the relative pixel positions x. The sorting result is indicated in (1b) in Fig. 54.

Then, the block position information obtained as a result of the sorting processing by the relative position sorter 584 is input into a packed block sorter 585. The packed block sorter 585 then performs sorting processing on the consecutive blocks input from the block storage portion 581 based on the block position information while associating the block position information with the pixel columns of the blocks. That is, the packed block sorter 585 sorts the packed blocks indicated in (2a) in Fig. 54 based on the block position information.

As a result of this sorting processing, block position 3 is swapped with block position 4, resulting in the packed blocks indicated in (2b) in Fig. 54 having the same pixel arrangement as that of the packed blocks before being sorted shown in (B) in Fig. 53. The packed block sorter 585 outputs the sorted packed blocks to an unpacking portion 586.

As discussed above, as in the interblock-pixel sorting packing portion 374, the interblock-pixel sorting unpacking portion 573 first calculates the pixel relative positions x from the moving velocity x of each block. Then, the interblock-pixel sorting unpacking portion 573 performs sorting processing on the relative pixel positions x while associating the block position information with the relative pixel positions x, and then sorts the packed blocks based on the resulting block position information while associating the block position information with the pixel columns of the packed blocks, thereby obtaining the packed blocks before being sorted.

The unpacking portion 586 performs processing similar to that performed by the packing portion 575 to convert the blocks into the original frame rate. The above-described processing is performed on the original image that moves toward the left side. By sorting the pixel columns in ascending order or in descending order by the relative position sorter 584 by using the relative pixel position information x as the key depending on whether the original image is moving toward the left side or the right side, the packed blocks can be sorted. To perform processing on vertically moving blocks, the above-described sorting processing can be vertically executed on the pixel rows by using the vertical relative pixel position information y as the key.

The above-described sorting processing is not restricted to specific techniques, and a known technique, such as quick sorting or merge sorting, may be employed.

The processing performed by the moving picture conversion apparatus for generating packed blocks by performing pixel swapping based on the moving velocity v of the block according to the predetermined pixel swapping rules has been described above with reference to Figs. 28 through 43. Unpacking processing executed by the moving picture reconstruction apparatus (hereinafter referred to as "pixel-column swapping unpacking processing") associated with the packing processing is described below.

In the packing processing discussed with reference to Figs. 28 through 43, instead of performing sorting processing based on the relative pixel positions x, pixel columns in packed blocks are swapped so that the pixels of the packed blocks are corrected to the relative pixel positions of the original image. To reconstruct the packed blocks before performing the pixel position correction, the moving picture reconstruction apparatus performs processing opposite to the swapping processing for the pixel columns performed by the moving picture conversion apparatus.

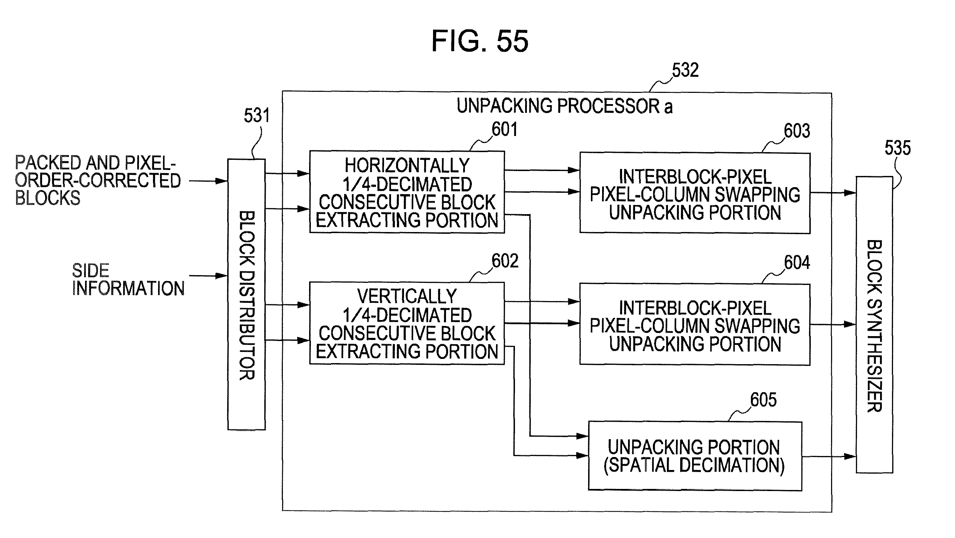

The unpacking processing opposite to the packing processing performed by the packing portion 141 of the moving picture conversion apparatus shown in Fig. 8 is executed by the unpacking processor 532 of the block processor 530 shown in Fig. 45. The configuration and processing of the unpacking processor 532 are described below with reference to Fig. 55. The unpacking processor 532 unpacks the packed blocks generated by the packing portion 141 shown in Fig. 19.

The unpacking processor 532 receives the blocks output from the block distributor 531, and more specifically, the packed blocks integrated from the four blocks extracted from the four frames in the packing portion 141 of the moving picture conversion apparatus shown in Fig. 8, that is, the spatially decimated packed blocks.

As discussed with reference to Fig. 19, those packed blocks are the blocks integrated from the four blocks extracted from the four frames in the interblock-pixel sorting packing portion 354 or 355, or the packing portion 356 shown in Fig. 19.

The packed block is supplied to the block distributor 531, and is stored, together with the side information, in a block/side-information storage portion (not shown) in the block distributor 531. From among the stored blocks, the block distributor 531 outputs horizontally moving blocks to a horizontally 1/4-decimated consecutive block extracting portion 601 and outputs vertically moving blocks to a vertically 1/4-decimated consecutive block extracting portion 602. In this case, the side information concerning the output blocks is also output.

The horizontally 1/4-decimated consecutive block extracting portion 601 detects two or more horizontally consecutive blocks and outputs them to an interblock-pixel swapping unpacking portion 603. In this case, the motion vectors of the output blocks are also output to the interblock-pixel swapping unpacking portion 603. Non-consecutive blocks are output to an unpacking portion 605.

Similarly, the vertically 1/4-decimated consecutive block extracting portion 602 detects two or more vertically consecutive blocks and outputs them to an interblock-pixel swapping unpacking portion 604. In this case, the motion vectors of the output blocks are also output to the interblock-pixel swapping unpacking portion 604. Non-consecutive blocks are output to the unpacking portion 605.

It is desirable that the distribution results obtained by the block distributor 531, the horizontally 1/4-decimated consecutive block extracting portion 601 and the vertically 1/4-decimated consecutive block extracting portion 602 be the same as the distribution results obtained by the packing processing discussed with reference to Figs. 8 and 24.

The packed block input into the unpacking portion 605 corresponds to the block 225 shown in Fig. 9. $1\times4$ pixels in the block 225, for example, the pixel set 235, are pixels P1 through P4 of the four frames packed in the packing portion 356 of the moving picture conversion apparatus shown in Fig. 19. The unpacking portion 605 expands the four pixels P1 through P4 to the blocks of the four frames to increase the number of frames by four times, and outputs the expanded blocks to the block synthesizer 535.

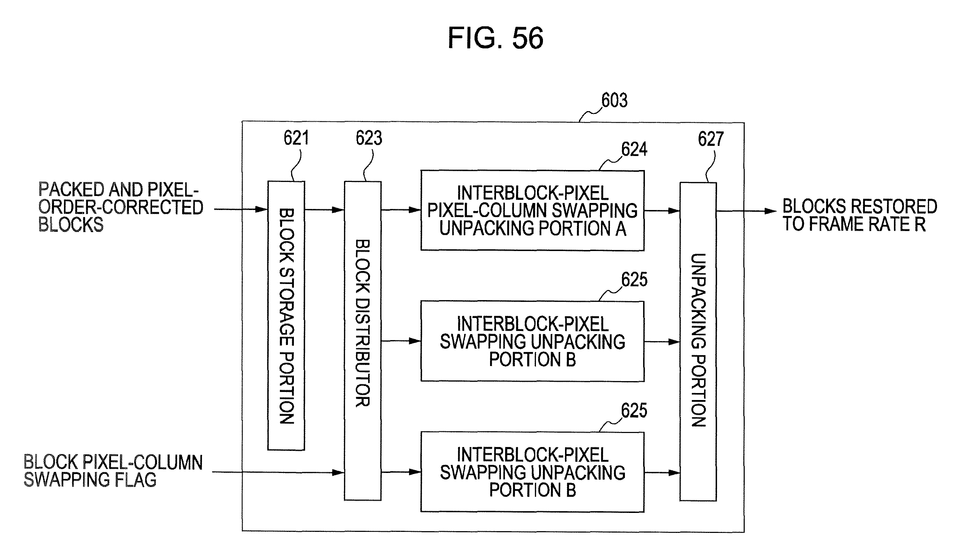

The interblock-pixel swapping unpacking portion 603 performs unpacking processing on the packed blocks generated by the pixel-column swapping processing based on the moving velocity v of each block in accordance with the predetermined pixel swapping rules, and outputs the resulting blocks to the block synthesizer 535. The configuration and processing of the interblock-pixel swapping unpacking portion 603 are described below with reference to Fig. 56.

In the interblock-pixel swapping unpacking portion 603 shown in Fig. 56, the input packed blocks are temporarily stored in a block storage portion 621. A block distributor 623 extracts the moving velocity v of each block contained in the input side information, and distributes the packed blocks to an interblock-pixel pixel-column swapping unpacking portion 624, 625, or 626 (interblock-pixel pixel-column swapping unpacking portion A, B, or C) according to the pixel-column swapping flag determined by the moving velocity v. In this case, it is desirable that the distribution conditions are the same as those employed for the packing processing.

The conditions for generating the packed blocks are those shown in Fig. 30. The interblock-pixel swapping unpacking portion 603 performs unpacking processing in accordance with those conditions. More specifically, the interblock-pixel swapping unpacking portion 603 distributes the packed blocks to the interblock-pixel pixel-column swapping unpacking portion 624, 625, or 626 according to the pixel-column swapping flag A, B, C, or D determined by the moving velocity v in the following manner.

(1) $0 \leq v < 2.75 \rightarrow$ flag A $\rightarrow$ unpacking portion 624
(2) $2.75 \leq v < 4.0 \rightarrow$ flag B $\rightarrow$ unpacking portion 625
(3) $4.0 \leq v < 6.0 \rightarrow$ flag C $\rightarrow$ unpacking portion 626
(4) $6.0 \leq v \rightarrow$ flag D $\rightarrow$ unpacking portion 626

The interblock-pixel pixel-column swapping unpacking portion 624, 625, or 626 performs pixel-column swapping unpacking processing opposite to the pixel-column swapping packing processing to reconstruct the original pixel order, and then outputs the image as packed blocks before being corrected.

The packed blocks input into the interblock-pixel pixel-column swapping unpacking portion 624 are blocks subjected to 1/4-spatial decimation processing and the packing processing by the packing portion 402 shown in Fig. 31 according to the packing technique shown in Fig. 9, and also subjected to the pixel-column swapping processing in the interblock-pixel pixel-column swapping processor 404 shown in Fig. 31, and whose moving velocity v is in $0 \leq v < 2.75$.

The packed blocks input into the interblock-pixel pixel-column swapping unpacking portion 625 are blocks subjected to 1/4-spatial decimation processing and the packing processing by the packing portion 402 shown in Fig. 31 according to the packing technique shown in Fig. 9, and also subjected to the pixel-column swapping processing in the interblock-pixel pixel-column swapping processor 405 shown in Fig. 31, and whose moving velocity v is in $2.75 \leq v < 4.0$.

The packed blocks input into the interblock-pixel pixel-column swapping unpacking portion 626 are blocks subjected to 1/4-spatial decimation processing and the packing processing by the packing 402 according to the packing technique shown in Fig. 9, and also subjected to the pixel-column swapping processing in the interblock-pixel pixel-column swapping processor 406 shown in Fig. 31, and whose moving velocity v is in $4.0 \leq v$.

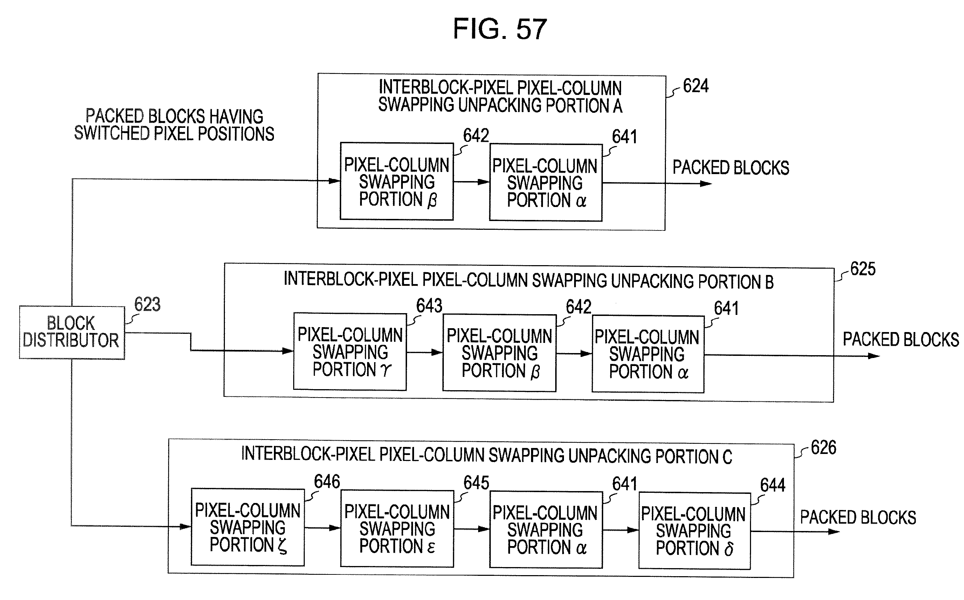

The configuration and processing of the interblock-pixel pixel-column swapping unpacking portions 624, 625, and 626 is described below with reference to Fig. 57. The interblock-pixel pixel-column swapping unpacking portion 624, 625, or 626 is formed of a combination of pixel-column swapping portions $\alpha$641 through $\zeta$646 that execute pixel-column swapping processing in accordance with different pixel swapping rules.

The pixel-column swapping portions $\alpha$641 through $\zeta$646 execute processing operations similar to those performed by the pixel-column swapping portions $\alpha$411 through $\zeta$416, respectively, shown in Fig. 32.

More specifically, the pixel-column swapping portions $\alpha$641 through $\zeta$646 perform pixel-column swapping processing operations in accordance with the pixel-column swapping rules discussed with reference to Figs. 33 through 38, respectively.

The interblock-pixel pixel-column swapping unpacking portion 624, 625, or 626 configured as shown in Fig. 57 performs processing in the reverse order of the processing shown in Fig. 32. In this manner, the interblock-pixel pixel-column swapping unpacking portions 624, 625, and 626 reconstruct the pixel order of the packed blocks by performing processing opposite to the processing shown in Fig. 32.

The unpacking portion 627 shown in Fig. 56 performs processing similar to that executed by the unpacking portion 575 shown in Fig. 51. More specifically, the unpacking portion 627 receives the block 225 shown in Fig. 9 from the interblock-pixel pixel-column swapping unpacking portion 624, 625, or 626, and expands the four pixels P1 through P4 contained in the block 225 to the blocks of four frames to increase the number of frames by four times, and outputs the unpacked blocks to the block synthesizer 535.

As in the packing processing in the moving picture conversion apparatus, the above-described pixel-column swapping processing by using the pixel swapping rules is performed when the original image is moving toward the left side. If the original image is moving toward the right side, the pixel-column swapping processing is rotated by 90 degrees to perform pixel-row swapping processing. For example, by substituting the leftward direction and the rightward direction by the upward direction and the downward direction, respectively, similar pixel swapping can be performed so that packed blocks having the relative pixel arrangement of the original image can be generated.

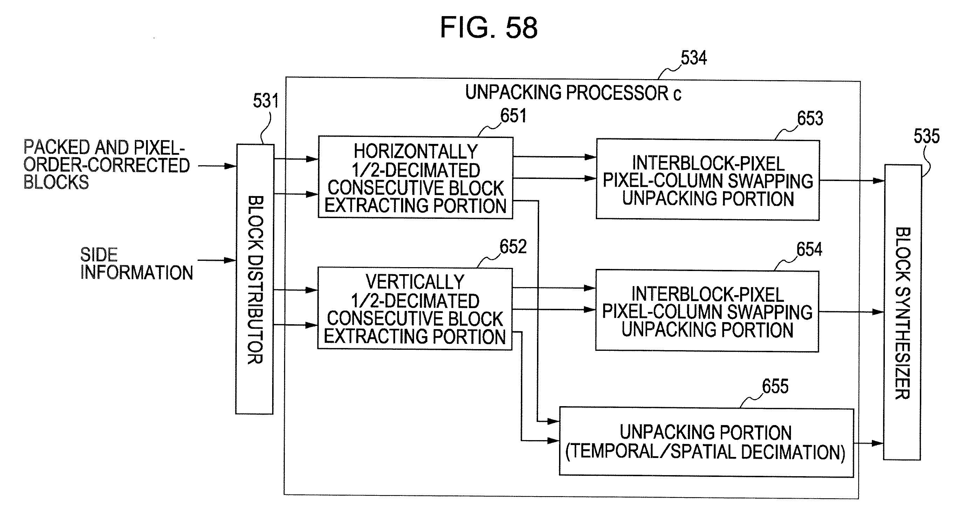

A description of now given, with reference to Fig. 58, of the unpacking processing on packed blocks subjected to spatial decimation and temporal decimation processing, that is, packed blocks generated by using the predetermined pixel-column swapping rules in accordance with the moving velocity v in the packing portion 143 shown in Fig. 8.

As in the blocks subjected to spatial decimation processing, the predetermined pixel swapping processing based on the moving velocity v can be performed on the packed blocks subjected to spatial decimation and temporal decimation processing, as discussed with reference to Figs. 39 through 43, so that the blocks having the pixel arrangement of the original image can be generated. The unpacking processing executed on those packed blocks is discussed below.

The unpacking processor 534 receives the blocks output from the block distributor 531, and more specifically, the packed blocks integrated from the four blocks extracted from the four frames in the packing portion 143 of the moving picture conversion apparatus shown in Fig. 8, that is, the spatially and temporally decimated packed blocks subjected to the pixel swapping processing according to the pixel swapping rules determined by the moving velocity v.

Those packed blocks are the blocks integrated from the four blocks extracted from the four frames in the interblock-pixel pixel-column swapping packing portions 435 or 436, or the packing portion 437 of the packing portion 143 shown in Fig. 40.

The packed blocks input into the unpacking processor 534 are supplied to the block distributor 531, and is stored, together with the side information, in a block/side-information storage portion (not shown) in the block distributor 531. From among the stored blocks, the block distributor 531 outputs horizontally moving blocks to a horizontally 1/2-decimated consecutive block extracting portion 651 and outputs vertically moving blocks to a vertically 1/2-decimated consecutive block extracting portion 652. In this case, the side information concerning the output blocks is also output.

The horizontally 1/2-decimated consecutive block extracting portion 651 detects two or more horizontally consecutive blocks and outputs them to an interblock-pixel pixel-column swapping unpacking portion 653. In this case, the motion vectors of the output blocks are also output to the interblock-pixel pixel-column swapping unpacking portion 653. Non-consecutive blocks are output to an unpacking portion 655.

Similarly, the vertically 1/2-decimated consecutive block extracting portion 652 detects two or more vertically consecutive blocks and outputs them to an interblock-pixel pixel-column swapping unpacking portion 654. In this case, the motion vectors of the output blocks are also output to the interblock-pixel pixel-column swapping unpacking portion 654. Non-consecutive blocks are output to the unpacking portion 655.

It is desirable that the distribution results obtained by the block distributor 531, the horizontally 1/2-decimated consecutive block extracting portion 651, and the vertically 1/2-decimated consecutive block extracting portion 652 be the same as the distribution results obtained by the packing processing discussed with reference to Figs. 8 and 40.

The packed block input into the unpacking portion 655 corresponds to the block 245 shown in Fig. 10. $1\times2$ pixels in the block 245, for example, the pixel set 255, are pixels P1 and P3 of the four frames packed in the packing portion 376 of the moving picture conversion apparatus shown in Fig. 25. The unpacking portion 655 expands the two pixels P1 and P3 to the blocks of the four frames to increase the number of frames by twice, and outputs the expanded blocks to the block synthesizer 535.

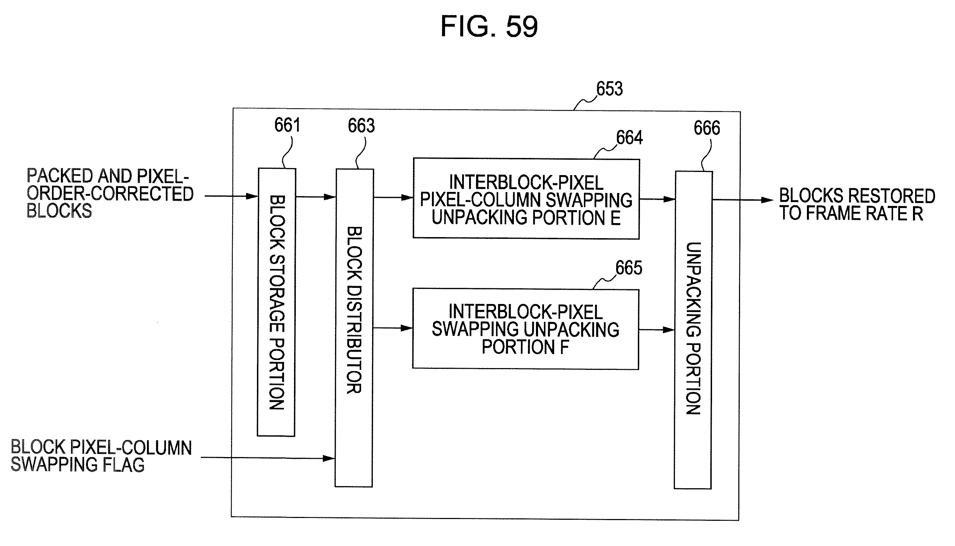

The interblock-pixel pixel-column swapping unpacking portion 653 performs unpacking processing on the packed blocks generated by the pixel-column swapping processing based on the moving velocity v of each block in accordance with the predetermined pixel swapping rules, and outputs the resulting blocks to the block synthesizer 535. The configuration and processing of the interblock-pixel pixel-column swapping unpacking portion 653 are described below with reference to Fig. 59.

In the interblock-pixel pixel-column swapping unpacking portion 653 shown in Fig. 59, the input packed blocks are temporarily stored in a block storage portion 661. A block distributor 663 extracts the moving velocity v of each block contained in the input side information, and distributes the packed blocks to an interblock-pixel pixel-column swapping unpacking portion 664 or 665 (interblock-pixel pixel-column swapping unpacking portion E of F) according to the pixel-column swapping flag determined by the moving velocity v. In this case, it is desirable that the distribution conditions are the same as those employed for the packing processing.

The conditions for generating the packed blocks are those shown in Fig. 41. The interblock-pixel pixel-column swapping unpacking portion 653 performs unpacking processing in accordance with those conditions. More specifically, the interblock-pixel pixel-column swapping unpacking portion 653 distributes the packed blocks to the interblock-pixel pixel-column swapping unpacking portion 664 or 665 according to the pixel-column swapping flag (E or F) determined by the moving velocity v in the following manner

(1) $0 \leq v < 1.5 \rightarrow$ flag E $\rightarrow$ unpacking portion 664
(2) $1.5 \leq v\ 2.0 \rightarrow$ flag F $\rightarrow$ unpacking portion 665

The interblock-pixel pixel-column swapping unpacking portion 664 or 665 performs pixel-column swapping unpacking processing opposite to the pixel-column swapping packing processing to reconstruct the original pixel order, and then outputs the image as packed blocks before being corrected.

The packed blocks input into the interblock-pixel pixel-column swapping unpacking portion 664 are blocks subjected to 1/2-spatial decimation and 1/2 temporal decimation processing and the packing processing by the packing portion 402 shown in Fig. 31 according to the packing technique shown in Fig. 10, and also subjected to the pixel-column swapping processing in the interblock-pixel pixel-column swapping processor 444 shown in Fig. 42, and whose moving velocity v is in $0 \leq v < 1.5$.

The packed blocks input into the interblock-pixel pixel-column swapping unpacking portion 665 are blocks subjected to 1/2-spatial decimation and 1/2-temporal decimation processing and the packing processing by the packing portion 402 shown in Fig. 31 according to the packing technique shown in Fig. 10, and also subjected to the pixel-column swapping processing in the interblock-pixel pixel-column swapping processor 445 shown in Fig. 42, and whose moving velocity v is in $1.5 \leq v < 2.0$.

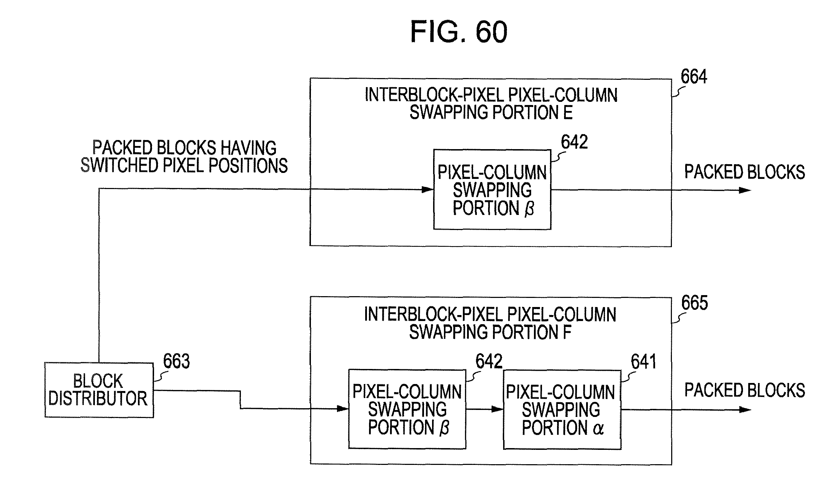

The configuration and processing of the interblock-pixel pixel-column swapping unpacking portion 664 or 665 are described below with reference to Fig. 60. The interblock-pixel pixel-column swapping unpacking portion 664 or 665 is formed of a combination of pixel-column swapping portions $\alpha$641 and $\beta$642 that execute pixel-column swapping processing in accordance with different pixel swapping rules. The pixel-column swapping portions $\alpha$641 and $\beta$642 execute processing operations similar to those performed by the pixel-column swapping portions $\alpha$411 through $\beta$412, respectively, shown in Fig. 43.

More specifically, the pixel-column swapping portions $\alpha$641 and $\beta$642 perform pixel-column swapping processing operations in accordance with the pixel-column swapping rules discussed with reference to Figs. 33 and 34, respectively.

The interblock-pixel pixel-column swapping unpacking portion 664 or 665 performs processing in the reverse order of the processing shown in Fig. 43. In this manner, the interblock-pixel pixel-column swapping unpacking portions 664 and 665 reconstruct the pixel order of the packed blocks by performing processing opposite to the processing shown in Fig. 43.

The unpacking portion 666 shown in Fig. 59 performs processing similar to that executed by the unpacking portion 655 shown in Fig. 58. More specifically, the unpacking portion 666 receives the block 245 shown in Fig. 10 from the interblock-pixel pixel-column swapping unpacking portion 664 or 665, and expands the two pixels P1 and P3 contained in the block 245 to the blocks of four frames to increase the number of frames by twice, and outputs the unpacked blocks to the block synthesizer 535.

As in the packing processing in the moving picture conversion apparatus, the above-described pixel-column swapping processing by using the pixel swapping rules is performed when the original image is moving toward the left side. If the original image is moving toward the right side, the pixel-column swapping processing is rotated shown in Fig. 60 by 90 degrees to perform pixel-row swapping processing. For example, by substituting the leftward direction and the rightward direction by the upward direction and the downward direction, respectively, similar pixel swapping can be performed so that packed blocks having the relative pixel arrangement of the original image can be generated.

4. Apparatus and Method for Performing Moving Picture Decompression for Low-Frame-Rate Devices

An apparatus and method for performing moving picture decompression processing for low-frame-rate devices are described below.

According to the embodiment discussed in 3. Apparatus and Method for Performing Moving Picture Decompression According to Embodiment of the Invention, optimally reconstructed images can be displayed on a display device if the decoding display device copes with high-frame-rate displaying. If the decoding display device does not cope with high-frame-rate displaying, it is necessary to convert high-frame-rate images into low-frame-rate images.

The apparatus and method for performing moving picture decompression processing by converting high-frame-rate images into low-frame-rate images are as follows. The moving picture reconstruction apparatus discussed below also performs decoding and decompression on data generated by the processing discussed in 2. Apparatus and Method for Performing Moving Picture Compression According to Embodiment of the Invention, i.e., compression-coded data subjected to spatial decimation and/or temporal decimation processing in accordance with the amount of movement of each block.

In the packing processing discussed in 2. Apparatus and Method for Performing Moving Picture Compression According to Embodiment of the Invention, i.e., in the packing processing for correcting switched pixel positions of a packed image, the pixel order of the packed image becomes faithful to that of the original image so that the compression ratio in the data compression method, such as MPEG, Motion, or JPEG, can be enhanced. In this packing processing, the original image having the frame rate R is converted to the frame rate R/M, and also, the pixel positions are corrected so that packed blocks having the pixel order faithful to that of the original image can be generated. In this case, as stated above, R indicates the original frame rate, and the number of frames packed by the packing processor is M.

Accordingly, the frame rate of each frame of the moving picture output as the packed blocks generated by the moving picture conversion apparatus is reduced to R/M of the original frame rate R.

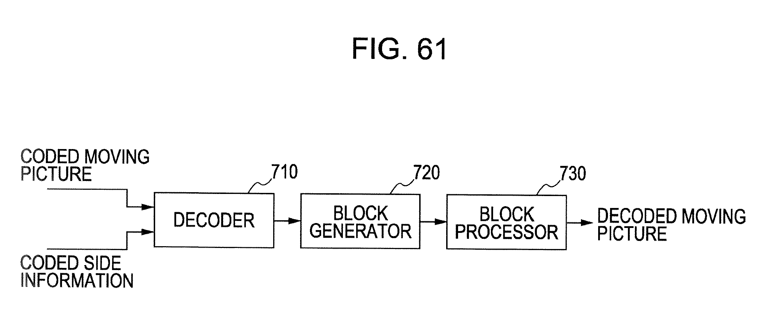

The configuration and processing of the moving picture reconstruction apparatus of this embodiment are described below with reference to the block diagram in Fig. 61.

In the moving picture reconstruction apparatus shown in Fig. 61, coded moving picture data and side information are input into a decoder 710 and are decoded therein. The coded moving picture data is coded block data including packed blocks generated by performing sorting processing based on the relative pixel positions x or pixel swapping processing based on the moving velocity v. The side information includes a block distribution flag indicating the decimation or packing processing mode and the amount-of-movement information.

The decoder 710 decodes the moving picture data coded by a general coding method, such as MPEG, Motion, or JPEG, and also decodes the side information coded by a general coding method, such as LZH or Zip. The decoding processing mode corresponds to the coding processing mode.

A block generator 720 divides each frame of the decoded moving picture into blocks, which partition the pixels forming the moving picture, and supplies the divided blocks to a block processor 730 together with the decoded side information. In this case, the block size should be the same size when the blocks are generated in the coder.

The block processor 730 reconverts the blocks converted into the frame rate R/M to a desired frame rate and performs filtering processing so that the resulting image does not appear unnatural, and outputs the resulting moving picture as the decoded moving picture. In this case, it is desired that the frame rate conversion processing and filtering processing be suitably performed based on the side information output from the decoder 710. The decoded moving picture output from the block processor 730 is faithful to the original image.

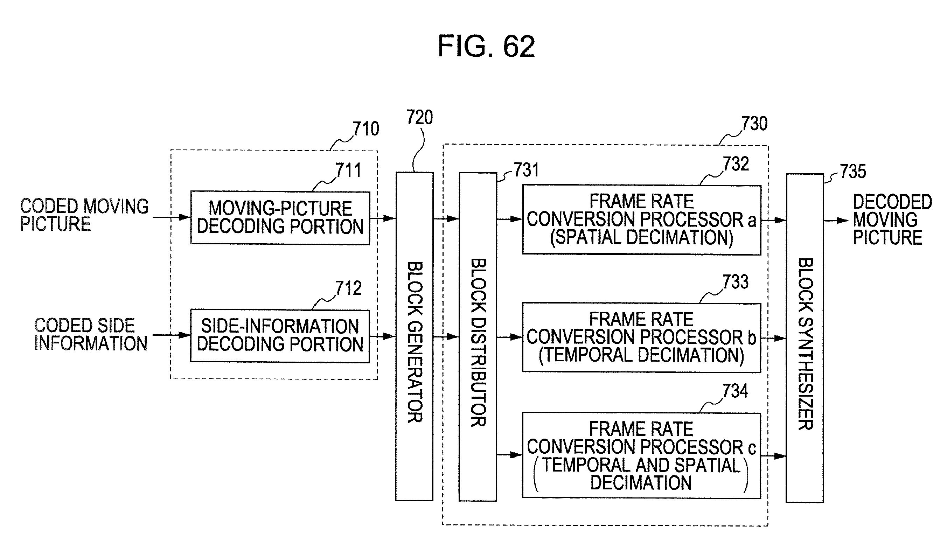

The configuration of the decoder 710, the block generator 720, and the block processor 730 is discussed below with reference to the block diagram in Fig. 62.

After being input into the moving picture reconstruction apparatus, the coded moving picture is decoded by a moving picture decoding portion 711, and the coded side information is decoded by a side-information decoding portion 712. The decoded moving picture is divided into blocks having a certain size (for example, 8x8 or 16x16 pixels) by the block generator 720, and blocks for one frame are stored in a storage portion (not shown) in the block generator 720. The decoded moving picture for one frame and the associated side information are supplied to a block distributor 731 of the block processor 730.

The block distributor 731 distributes the blocks to a frame rate conversion processor 732, 733, or 734 (frame rate conversion processor a, b, or c), the frame rate conversion processors 732, 733, and 734 performing corresponding different frame rate conversion operations. The block distributor 731 receives the side information and the block image data for one frame output from the block generator 720.

Although the three frame rate conversion processors 732, 733, and 734 are shown in Fig. 62, the number of frame rate conversion processors is not restricted. For example, if the image data is divided into more blocks, the number of frame rate conversion processors may be increased. Alternatively, only one frame rate conversion processor may be provided.

In this embodiment, the side information includes the block distribution flag indicating to which block processing portion 131, 132, or 133 and packing portions 141, 142, or 143 in the moving picture conversion apparatus shown in Fig. 8 each block has been distributed. The block distributor 731 distributes each block to the frame rate conversion processor 732, 733, or 734 based on the block distribution flag. Blocks subjected to spatial decimation processing in the block processing portion 131 are distributed to the frame rate conversion processor 732, blocks subjected to temporal decimation processing in the block processing portion 132 are distributed to the frame rate conversion processor 733, and blocks subjected to spatial and temporal decimation processing in the block processing partian 133 are distributed to the frame rate conversion processor 734.

The frame rate conversion processor 732, 733, or 734 receives the blocks which have been converted into the frame rate R/M, and performs frame rate conversion processing and filtering processing on the input blocks to reconvert the blocks into a desired frame rate. In this embodiment, blocks packed in the packing portions 141, 142, and 143 of the moving picture conversion apparatus shown in Fig. 8 are subjected to frame rate conversion processing and filtering processing in the frame rate conversion processors 732, 733, and 734, respectively.

The blocks converted to the desired frame rate by the frame rate conversion processor 732, 733, or 734 are combined into a frame image having the desired frame rate by a block synthesizer 735. It is now assumed that the blocks are combined into a frame image having a frame rate of 60 fps. That is, the block synthesizer 735 can generate and output a frame-rate moving picture that can be displayed on a low-frame-rate device.

The frame rate conversion processors 732, 733, and 734 execute processing on the packed blocks generated by the packing portions 141, 142, and 143, respectively, in the moving picture conversion apparatus shown in Fig. 8. That is, the frame rate conversion processors 732, 733, and 734 perform frame rate conversion processing on the blocks packed by the packing portions 141, 142, and 143, respectively.

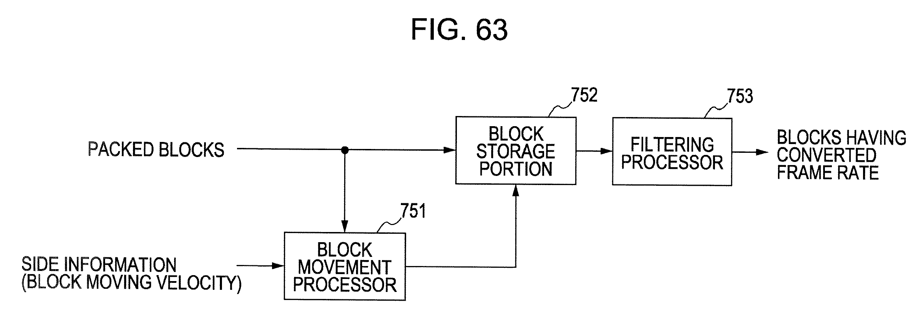

The configuration of the frame rate conversion processor 732, 733, or 734 is shown in Fig. 63. The frame rate conversion processor 732, 733, or 734 receives blocks output from the block distributor 731, and more specifically, blocks, each being packed from the four blocks of the four frames obtained in the packing processor of the moving picture conversion apparatus shown in Fig. 8, that is, the packed blocks having the relative pixel arrangement of the original image generated by the sorting processing based on the relative pixel positions x or the pixel swapping rules based on the moving velocity v.

Those packed blocks are packed blocks converted into the frame rate R/M when the original frame rate of the input moving picture is R and when the number of frames packed in the packing processor is M. The processing performed on the packed blocks is different depending on the relationship between the frame rate R/M and the converted frame rate S.

If R/M ≥ S, the blocks input into the frame rate conversion processor 732, 733, or 734 are stored in a block storage portion 752. If R/M < S, the input blocks are supplied to a block movement processor 751 and the block storage portion 752.

If the number of blocks received when R/M < S is not sufficient, the block movement processor 751 generates blocks by shifting the received blocks by using the moving velocity and direction of the blocks obtained from the side information, and outputs the generated blocks to the block storage portion 752.

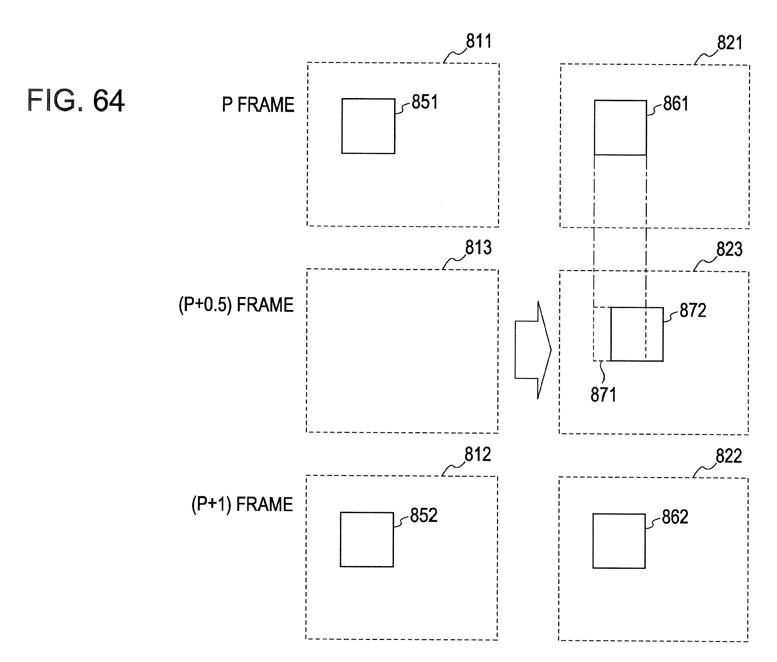

A specific example of the processing by the block movement processor 751 is described below with reference to Fig. 64, assuming that S=(R/M)×2. When the blocks input into the block movement processor 751 are blocks 851 and 852 and when the frames of the blocks 851 and 852 are P frame 811 and (P+1) frame 812, respectively, it is necessary to increase the number of input frames to S in order to increase the frame rate to S (R/M<S).

In the image shown in Fig. 64, since S=(R/M)x2, an intermediate frame 813 should be inserted between the P frame 811 and the (P+1) frame 812.

Then, the block movement processor 751 generates a new frame based on the input blocks and sets a block in the generated frame. More specifically, the block movement processor 751 generates a new block 872 in a new frame 823, as shown in (B) in Fig. 64, by shifting the input block 861 by an amount of movement 871 of the block by using the moving velocity and direction obtained from the side information. As a result, the frame rate of the generated image is increased to S.

The moving velocity of the input blocks obtained from the side information should be adjusted to the converted frame rate. In this embodiment, in the image having the frame rate S, P frame 821 and (P+1) frame 822 are set similarly to the input P frame 811 and (P+1) frame 812, respectively, and the blocks 861 and 862 are the same as the input blocks 851 and 852, respectively.

The generated block 872 is stored in the block storage portion 752 in the order of frames, and is subjected to filtering processing in a filtering processor 753 so that the resulting image does not appear unnatural. When R/M<S, the filtering processor 753 reduces the number of frames by filtering the frames in the time axis direction to covert the frames into the frame rate S.

Principally, a low-pass filter is used in the filtering processor 753. In this embodiment, blurring processing, which is specific processing by using a low-pass filter, is performed. In the blurring processing in this embodiment, the output pixel values are calculated from the input pixel values according to the following equation (3):

$$out_f(x,y) = \frac{1}{4} \sum_{f=f-f \bmod 4}^{f-f \bmod 4+3} in_f(x,y)$$

$$\dots (3)$$

where in() represents the input pixel of the filtering processor 753 output from the block storage portion 752, out() designates the output pixel, f indicates the frame number, x and y designate inter-frame pixel coordinate values, and mod represents the modulus operator.

The filtering processing by the filtering processor 753 is performed only on decimation processing, that is, blocks input into the frame rate conversion blocks subjected to spatial processor 732 or blocks input into the frame rate conversion processor 734. Concerning the blocks input into the frame rate conversion processor 733, since the amounts of movement both in the horizontal and vertical directions are less than one pixel, the amount of movement of the for N frames is small, and also, packing processing is performed on blocks only subjected to temporal frame decimation. Accordingly, the filtering processing is not necessary. The filtering processing may be low-pass filter processing other than that expressed by equation (3).

According to the moving picture reconstruction apparatus and method of this embodiment, each frame forming moving picture data is divided into blocks, and the amount of movement of each block is detected. Then, at least one of spatial decimation processing and temporal decimation processing is performed in accordance with the amount of movement to reconstruct packed blocks having the pixel arrangement of the original image. Based on the generated packed blocks, the moving picture data that can cope with the output frame rate is generated. It is thus possible to perform moving picture decompression processing so that images can be displayed in a low-frame-rate device.

A series of processing operations described in this specification may be executed by hardware or software or a combination thereof. If software is used, a program recording a processing sequence thereon may be installed into a memory of a computer built in dedicated hardware or a general-purpose computer that can execute various processing operations.

The program may be prerecorded on a hard disk or a read only memory (ROM) as a recording medium. Alternatively, the program may be temporarily or permanently stored (recorded) on a removable recording medium, such as a flexible disk, a compact disc read only memory (CD-ROM), a magneto-optical (MO) disk, a digital versatile disc (DVD), a magnetic disk, or a semiconductor memory. The removable medium can be provided as so-called package software.

As stated above, the program may be installed into a computer from the above-described removable recording medium. Alternatively, the program may be transferred from a download site to a computer by wireless means or wired means, such as a network, for example, a local area network (LAN) or the Internet. The computer then receives the program and installs it in a recording medium, such as a built-in hard disk.

The various processing operations disclosed in the specification may be executed in chronological order described in the specification. Alternatively, they may be executed in parallel or individually according to the performance of an apparatus executing the processing operations or according to the necessity. In this specification, the system is a logical set of a plurality of apparatuses, and it is not necessary that the apparatuses be disposed in the same housing.

It should be understood by those skilled in the art that various modifications, combinations, sub-combinations and alterations may occur depending on design requirements and other factors insofar as they are within the scope of the appended claims or the equivalents thereof.

**Claims**

1. A moving picture conversion apparatus (100) for performing data conversion processing on moving picture data, comprising:

 a block generator (110) configured to generate blocks by dividing each frame forming the moving picture data into the blocks;
 an amount-of-movement detector (120) configured to detect an amount of movement of a subject corresponding to each block generated by the block generator (110);
 a block processor (130) configured to receive the blocks generated by the block generator (110) and information concerning the amount of movement detected by the amount-of-movement detector (120) to perform decimation processing on the blocks; and
 a packing processor (140) configured to receive the blocks decimated by the block processor (130) to generate a packed block including pixel data forming the decimated blocks,

 wherein the packing processor (140) generates a packed block by correcting positions of pixels forming the packed block substantially to relative positions of the corresponding pixels forming an original image which is before converting the moving picture data.

2. The moving picture conversion apparatus according to claim 1, wherein the packing processor (140) generates a packed block by selecting a plurality of consecutively located blocks which are subjected to decimation processing including spatial decimation processing of a certain processing mode performed by the block processor (130) and by correcting the positions of the selected plurality of consecutively located blocks.

3. The moving picture conversion apparatus according to claim 1, wherein the packing processor (140) generates a packed block by calculating the relative positions of the pixels forming the original image and by sorting the pixels forming the packed block based on the calculated relative positions of the pixels forming the original image.

4. The moving picture conversion apparatus according to claim 1, wherein the packing processor (140) corrects the position of the pixels forming the packed block by a pixel swapping rule preset in accordance with a moving velocity of the blocks corresponding to the packed block.

5. The moving picture conversion apparatus according to claim 1, further comprising:

a (170) coder configured to receive the packed block generated by the packing processor (140) and to perform coding processing on the packed block.

6. The moving picture conversion apparatus according to claim 1, wherein side information including information concerning a processing mode used in the block processor (130) is generated and output.

7. The moving picture conversion apparatus according to claim 6, wherein the side information includes information concerning a decimation processing mode for the blocks and information concerning the amount of movement of the blocks.

8. A moving picture reconstruction apparatus for performing reconstruction processing on converted moving picture data, comprising:

an unpacking processor (532) configured to unpack a packed block generated based on decimated data,

wherein the unpacking processor (532) reconstructs, on the basis of the packed block having pixels located substantially at relative positions of pixels forming an original image which is before converting the moving picture data, an initial packed block in which pixel positions are arranged in the of frames, and generates a plurality of blocks including frame pixels before being packed on the basis of the reconstructed initial packed block.

9. The moving picture reconstruction apparatus according to claim 8, wherein the unpacking processor (532) selects a packed block corresponding to a plurality of consecutively located blocks which are subjected to decimation processing including spatial decimation of a certain processing mode, and reconstructs the initial packed block corresponding to the selected packed block.

10. The moving picture reconstruction apparatus according to claim 8, wherein the unpacking processor (532) reconstructs the initial packed block by receiving relative pixel positions set for the pixels forming the packed block located substantially at the relative positions of the pixels forming the original image, and by sorting the relative pixel positions in ascending order or in descending order, and by changing the pixel positions of the packed block corresponding to the relative pixel positions changed by the sorting.

11. The moving picture reconstruction apparatus according to claim 8, wherein the unpacking processor (532) reconstructs the initial packed block by correcting the positions of the pixels forming the packed block by a pixel swapping rule preset in accordance with a moving velocity of the blocks corresponding to the packed block.

12. The moving picture reconstruction apparatus according to claim 8, further comprising:

a decoder (510) configured to decode coded data which is coded by a moving picture conversion apparatus (100) based on the packed block,

wherein the unpacking processor (532) receives the packed block decoded by the decoder to unpack the packed block.

13. The moving picture reconstruction apparatus according to claim 8, wherein the unpacking processor (532) determines an unpacking processing mode by using information concerning a decimation processing mode for the blocks employed in a moving picture conversion apparatus (100) and information concerning an amount of movement of the blocks.

14. A moving picture reconstruction apparatus for performing reconstruction processing on converted moving picture data, comprising:

a block processor (530) configured to receive a packed block having pixels located substantially at relative positions of pixels forming an original image which is before converting the moving picture data and to convert a frame rate based on the packed block,

wherein, if it is necessary to increase the number of frames of the packed block to generate frame data from the packed block, the block processor (530) generates a new frame by shifting the packed block on the basis of information concerning an amount of movement of the blocks corresponding to the packed block to convert the frame rate, thereby generating moving picture data having the converted frame rate.

15. The moving picture reconstruction apparatus according to claim 14, further comprising:

a filtering processor (753) configured to perform blurring processing on the moving picture data having the converted frame rate formed from the packed block.

16. A moving picture conversion method for performing data conversion processing on moving picture data, comprisin the steps of:

generating blocks by dividing each frame forming the moving picture data into the blocks;
detecting an amount of movement of a subject corresponding to each of the generated blocks;
decimating the generated blocks by receiving the generated blocks and information concerning the detected amount of movement; and
generating a packed block including pixel data forming the decimated blocks by receiving the decimated blocks,

wherein, a packed block is generated by correcting positions of pixels forming the packed block substantially to relative positions of the corresponding pixels forming an original image which is before converting the moving picture data.

17. The moving picture conversion method according to claim 16, wherein a packed block is generated by selecting a plurality of consecutively located blocks which are subjected to decimation processing including spatial decimation processing of a certain processing mode and by correcting the positions of the selected plurality of consecutively located blocks.

18. The moving picture conversion method according to claim 16, wherein a packed block is generated by calculating the relative positions of the pixels forming the original image and by sorting the pixels forming the packed block based on the calculated relative positions of the pixels forming the original image.

19. The moving picture conversion method according to claim 16, wherein, in generating a packed block, the position of the pixels forming the packed block are corrected by a pixel swapping rule preset in accordance with a moving velocity of the blocks corresponding to the packed block.

20. The moving picture conversion method according to claim 16, further comprising the step of:

receiving and coding the generated packed block.

21. The moving picture conversion method according to claim 16, further comprising the step of:

generating and outputting side information including information concerning a processing mode used for decimating the block.

22. The moving picture conversion method according to claim 21, wherein the side information includes information concerning a decimation processing mode for the blocks and information concerning the amount of movement of the blocks.

23. A moving picture reconstruction method for performing reconstruction processing on converted moving picture data, comprising the step of:

unpacking a packed block generated based on decimated data,

wherein, in unpacking a packed block, on the basis of the packed block having pixels located substantially at relative positions of pixels forming an original image which is before converting the moving picture data, an initial packed

38

block in which pixel positions are arranged in the order of frames is reconstructed, and a plurality of blocks including frame pixels before being packed are generated on the basis of the reconstructed initial packed block.

24. The moving picture reconstruction method according to claim 23, wherein, in unpacking a packed block, a packed block corresponding to a plurality of consecutively located blocks which are subjected to decimation processing including spatial decimation of a certain processing mode is selected, and the initial packed block corresponding to the selected packed block is reconstructed.

25. The moving picture reconstruction method according to claim 23, wherein, in unpacking a packed block, the initial packed block is reconstructed by receiving relative pixel positions set for the pixels forming the packed block located substantially at the positions of the pixels forming the original image, and by sorting the relative pixel positions in ascending order or in descending order, and by changing the pixel positions of the packed block corresponding to the relative pixel positions changed by the sorting.

26. The moving picture reconstruction method according to claim 23, wherein, in unpacking a packed block, the initial packed block is reconstructed by correcting the positions of the pixels forming the packed block by a pixel swapping rule preset in accordance with a moving velocity of the blocks corresponding to the packed block.

27. The moving picture reconstruction method according to claim 23, further comprising:

decoding coded data which is coded by a moving picture conversion apparatus based on the packed block,

wherein, in unpacking a packed block, the decoded packed block is received and unpacked.

28. The moving picture reconstruction method according to claim 23, wherein, in unpacking a packed block, an unpacking processing mode is determined by using information concerning a decimation processing mode for the blocks employed in a moving picture conversion apparatus and information concerning an amount of movement of the blocks.

29. A moving picture reconstruction method for performing reconstruction processing on converted moving picture data, comprising:

converting a frame rate based on a packed block having pixels located substantially at relative positions of pixels forming an original image which is before converting the moving picture data,

wherein, in converting a frame rate, if it is necessary to increase the number of frames of the packed block to generate frame data from the packed block, the frame rate is converted by generating a new frame by shifting the packed block on the basis of information concerning an amount of movement of the blocks corresponding to the packed block, thereby generating moving picture data having the converted frame rate.

30. The moving picture reconstruction method according to claim 29, further comprising:

performing filtering processing by performing blurring processing on the moving picture data having the converted frame rate formed from the packed block.

31. A computer program allowing a computer to execute data conversion processing on moving picture data, comprising the steps of:

generating blocks by dividing each frame forming the moving picture data into the blocks;
detecting an amount of movement of a subject corresponding to each of the generated blocks;
decimating the generated blocks by receiving the generated blocks and information concerning the detected amount of movement; and
generating a packed block including pixel data forming the decimated blocks by receiving the decimated blocks,

wherein, a packed block is generated by correcting positions of pixels forming the packed block substantially to relative positions of the corresponding pixels forming an original image which is before converting the moving picture data.

**32.** A computer program allowing a computer to execute reconstruction processing on converted moving picture data, comprising the step of:

unpacking a packed block generated based on decimated data,

wherein, in unpacking a packed block, on the basis of the packed block having pixels located substantially at relative positions of pixels forming an original image which is before converting the moving picture data, an initial packed block in which pixel positions are arranged in the order of frames is reconstructed, and a plurality of blocks including frame pixels before being packed are generated on the basis of the reconstructed initial packed block.

# FIG. 1

EP 1 725 041 A2

FIG. 2

EP 1 725 041 A2

# FIG. 3

(a)

REPRESENTATIVE PIXEL
(SAMPLING POINT)

(b)

REPRESENTATIVE PIXEL
(SAMPLING POINT)

(c)

EP 1 725 041 A2

# FIG. 4

BLOCK Bi OF FRAME F1

BLOCK Bi OF FRAME F2

BLOCK Bi OF FRAME F3

BLOCK Bi OF FRAME F1

BLOCK Bi OF FRAME F4

EP 1 725 041 A2

FIG. 5

(a)

$P_{00}$ $P_{10}$ $P_{20}$ $P_{30}$
$P_{01}$ $P_{11}$ $P_{21}$ $P_{31}$
$P_{02}$ $P_{12}$ $P_{22}$ $P_{32}$
$P_{03}$ $P_{13}$ $P_{23}$ $P_{33}$

$P_{00}$ $P_{20}$
$P_{01}$ $P_{21}$
$P_{02}$ $P_{22}$
$P_{03}$ $P_{23}$

(b)

$P_{00}$ $P_{10}$ $P_{20}$ $P_{30}$

$P_{02}$ $P_{12}$ $P_{22}$ $P_{32}$

REPRESENTATIVE PIXEL
(SAMPLING POINT)

(c)

EP 1 725 041 A2

45

# FIG. 6

BLOCK Bi OF FRAME F1

BLOCK Bi OF FRAME F2

BLOCK Bi OF FRAME F3

BLOCK Bi OF FRAME F1

BLOCK Bi OF FRAME F4

BLOCK Bi OF FRAME F3

# FIG. 7

EP 1 725 041 A2

```
                                                              100
┌──────────────────────────────────────────────────────────────────────┐
│                                                                        │
│        110          120          130          140          150         │
│   ┌─────────┐  ┌──────────┐  ┌──────────┐  ┌──────────┐  ┌────────┐    │
│   │  BLOCK  │  │AMOUNT-OF-│  │  BLOCK   │  │ PACKING  │  │ OUTPUT │    │
│ ─▶│GENERATOR│─▶│ MOVEMENT │─▶│PROCESSOR │─▶│PROCESSOR │─▶│  UNIT  │─▶ CODER
│   │         │  │ DETECTOR │  │          │  │          │  │        │    │
│   └─────────┘  └──────────┘  └──────────┘  └──────────┘  └────────┘    │
│                                                                        │
└──────────────────────────────────────────────────────────────────────┘
```

# FIG. 8

# FIG. 9

221 — $P_1$ $P_1$ $P_1$ $P_1$
231

222 — $P_2$ $P_2$ $P_2$ $P_2$
232

223 — $P_3$ $P_3$ $P_3$ $P_3$
233

224 — $P_4$ $P_4$ $P_4$ $P_4$
234

$P_1$ $P_2$ $P_3$ $P_4$
235 — 225

# FIG. 10

# FIG. 11

EP 1 725 041 A2

## FIG. 12

BLOCK, PIXEL

| $P_{00}$ | $P_{10}$ | $P_{20}$ | $P_{30}$ | $P_{40}$ | $P_{50}$ | $P_{60}$ | $P_{70}$ | $P_{80}$ | $P_{90}$ | $P_{A0}$ | $P_{B0}$ | $P_{C0}$ | $P_{D0}$ | $P_{E0}$ | $P_{F0}$ |
| $P_{01}$ | $P_{11}$ | $P_{21}$ | $P_{31}$ | $P_{41}$ | $P_{51}$ | $P_{61}$ | $P_{71}$ | $P_{81}$ | $P_{91}$ | $P_{A1}$ | $P_{B1}$ | $P_{C1}$ | $P_{D1}$ | $P_{E1}$ | $P_{F1}$ |
| $P_{02}$ | $P_{12}$ | $P_{22}$ | $P_{32}$ | $P_{42}$ | $P_{52}$ | $P_{62}$ | $P_{72}$ | $P_{82}$ | $P_{92}$ | $P_{A2}$ | $P_{B2}$ | $P_{C2}$ | $P_{D2}$ | $P_{E2}$ | $P_{F2}$ |
| $P_{03}$ | $P_{13}$ | $P_{23}$ | $P_{33}$ | $P_{43}$ | $P_{53}$ | $P_{63}$ | $P_{73}$ | $P_{83}$ | $P_{93}$ | $P_{A3}$ | $P_{B3}$ | $P_{C3}$ | $P_{D3}$ | $P_{E3}$ | $P_{F3}$ |

301, 302

52

## FIG. 13

**FRAME 1**

| | | | | | | | |
|---|---|---|---|---|---|---|---|
| $P_{00}$ | $P_{10}$ | $P_{20}$ | $P_{30}$ | $P_{40}$ | $P_{50}$ | $P_{60}$ | $P_{70}$ |
| $P_{01}$ | $P_{11}$ | $P_{21}$ | $P_{31}$ | $P_{41}$ | $P_{51}$ | $P_{61}$ | $P_{71}$ |
| $P_{02}$ | $P_{12}$ | $P_{22}$ | $P_{32}$ | $P_{42}$ | $P_{52}$ | $P_{62}$ | $P_{72}$ |
| $P_{03}$ | $P_{13}$ | $P_{23}$ | $P_{33}$ | $P_{43}$ | $P_{53}$ | $P_{63}$ | $P_{73}$ |

**FRAME 2**

| | | | | | | | |
|---|---|---|---|---|---|---|---|
| $P_{20}$ | $P_{30}$ | $P_{40}$ | $P_{50}$ | $P_{60}$ | $P_{70}$ | $P_{80}$ | $P_{90}$ |
| $P_{21}$ | $P_{31}$ | $P_{41}$ | $P_{51}$ | $P_{61}$ | $P_{71}$ | $P_{81}$ | $P_{91}$ |
| $P_{22}$ | $P_{32}$ | $P_{42}$ | $P_{52}$ | $P_{62}$ | $P_{72}$ | $P_{82}$ | $P_{92}$ |
| $P_{23}$ | $P_{33}$ | $P_{43}$ | $P_{53}$ | $P_{63}$ | $P_{73}$ | $P_{83}$ | $P_{93}$ |

**FRAME 3**

| | | | | | | | |
|---|---|---|---|---|---|---|---|
| $P_{40}$ | $P_{50}$ | $P_{60}$ | $P_{70}$ | $P_{80}$ | $P_{90}$ | $P_{A0}$ | $P_{B0}$ |
| $P_{41}$ | $P_{51}$ | $P_{61}$ | $P_{71}$ | $P_{81}$ | $P_{91}$ | $P_{A1}$ | $P_{B1}$ |
| $P_{42}$ | $P_{52}$ | $P_{62}$ | $P_{72}$ | $P_{82}$ | $P_{92}$ | $P_{A2}$ | $P_{B2}$ |
| $P_{43}$ | $P_{53}$ | $P_{63}$ | $P_{73}$ | $P_{83}$ | $P_{93}$ | $P_{A3}$ | $P_{B3}$ |

**FRAME 4**

| | | | | | | | |
|---|---|---|---|---|---|---|---|
| $P_{60}$ | $P_{70}$ | $P_{80}$ | $P_{90}$ | $P_{A0}$ | $P_{B0}$ | $P_{C0}$ | $P_{D0}$ |
| $P_{61}$ | $P_{71}$ | $P_{81}$ | $P_{91}$ | $P_{A1}$ | $P_{B1}$ | $P_{C1}$ | $P_{D1}$ |
| $P_{62}$ | $P_{72}$ | $P_{82}$ | $P_{92}$ | $P_{A2}$ | $P_{B2}$ | $P_{C2}$ | $P_{D2}$ |
| $P_{63}$ | $P_{73}$ | $P_{83}$ | $P_{93}$ | $P_{A3}$ | $P_{B3}$ | $P_{C3}$ | $P_{D3}$ |

# FIG. 14

FRAME 1

| | $P_{10}$ | | | | $P_{50}$ | | |
|---|---|---|---|---|---|---|---|
| | $P_{11}$ | | | | $P_{51}$ | | |
| | $P_{12}$ | | | | $P_{52}$ | | |
| | $P_{13}$ | | | | $P_{53}$ | | |

FRAME 2

| | $P_{30}$ | | | | $P_{70}$ | | |
|---|---|---|---|---|---|---|---|
| | $P_{31}$ | | | | $P_{71}$ | | |
| | $P_{32}$ | | | | $P_{72}$ | | |
| | $P_{33}$ | | | | $P_{73}$ | | |

FRAME 3

| | $P_{50}$ | | | | $P_{90}$ | | |
|---|---|---|---|---|---|---|---|
| | $P_{51}$ | | | | $P_{91}$ | | |
| | $P_{52}$ | | | | $P_{92}$ | | |
| | $P_{53}$ | | | | $P_{93}$ | | |

FRAME 4

| | $P_{70}$ | | | | $P_{B0}$ | | |
|---|---|---|---|---|---|---|---|
| | $P_{71}$ | | | | $P_{B1}$ | | |
| | $P_{72}$ | | | | $P_{B2}$ | | |
| | $P_{73}$ | | | | $P_{B3}$ | | |

# FIG. 15

BLOCK A | BLOCK B

| $P_{10}$ | $P_{30}$ | $P_{50}$ | $P_{70}$ | $P_{50}$ | $P_{70}$ | $P_{90}$ | $P_{B0}$ |
|---|---|---|---|---|---|---|---|
| $P_{11}$ | $P_{31}$ | $P_{51}$ | $P_{71}$ | $P_{51}$ | $P_{71}$ | $P_{91}$ | $P_{B1}$ |
| $P_{12}$ | $P_{32}$ | $P_{52}$ | $P_{72}$ | $P_{52}$ | $P_{72}$ | $P_{92}$ | $P_{B2}$ |
| $P_{13}$ | $P_{33}$ | $P_{53}$ | $P_{73}$ | $P_{53}$ | $P_{73}$ | $P_{93}$ | $P_{B3}$ |

302  301

# FIG. 16

(a)

| X | −1 | 0 | 1 | 2 | 3 | 4 | 5 | 6 | 7 | 8 | 9 | 10 | 11 | 12 | 13 | 14 |
|---|----|----|----|----|----|----|----|----|----|----|----|----|----|----|----|----|
| | $P_{00}$ | $P_{10}$ | $P_{20}$ | $P_{30}$ | $P_{40}$ | $P_{50}$ | $P_{60}$ | $P_{70}$ | $P_{80}$ | $P_{90}$ | $P_{A0}$ | $P_{B0}$ | $P_{C0}$ | $P_{D0}$ | $P_{E0}$ | $P_{F0}$ |
| | $P_{01}$ | $P_{11}$ | $P_{21}$ | $P_{31}$ | $P_{41}$ | $P_{51}$ | $P_{61}$ | $P_{71}$ | $P_{81}$ | $P_{91}$ | $P_{A1}$ | $P_{B1}$ | $P_{C1}$ | $P_{D1}$ | $P_{E1}$ | $P_{F1}$ |
| | $P_{02}$ | $P_{12}$ | $P_{22}$ | $P_{32}$ | $P_{42}$ | $P_{52}$ | $P_{62}$ | $P_{72}$ | $P_{82}$ | $P_{92}$ | $P_{A2}$ | $P_{B2}$ | $P_{C2}$ | $P_{D2}$ | $P_{E2}$ | $P_{F2}$ |
| | $P_{03}$ | $P_{13}$ | $P_{23}$ | $P_{33}$ | $P_{43}$ | $P_{53}$ | $P_{63}$ | $P_{73}$ | $P_{83}$ | $P_{93}$ | $P_{A3}$ | $P_{B3}$ | $P_{C3}$ | $P_{D3}$ | $P_{E3}$ | $P_{F3}$ |

(b)

| $P_{10}$ | $P_{30}$ | $P_{50}$ | $P_{70}$ | $P_{50}$ | $P_{70}$ | $P_{90}$ | $P_{B0}$ |
|----|----|----|----|----|----|----|----|
| $P_{11}$ | $P_{31}$ | $P_{51}$ | $P_{71}$ | $P_{51}$ | $P_{71}$ | $P_{91}$ | $P_{B1}$ |
| $P_{12}$ | $P_{32}$ | $P_{52}$ | $P_{72}$ | $P_{52}$ | $P_{72}$ | $P_{92}$ | $P_{B2}$ |
| $P_{13}$ | $P_{33}$ | $P_{53}$ | $P_{73}$ | $P_{53}$ | $P_{73}$ | $P_{93}$ | $P_{B3}$ |

m FRAME   m=0   m=1   m=2   m=3   m=0   m=1   m=2   m=3
n BLOCK          n=0                       n=1

EP 1 725 041 A2

## FIG. 17

| MOVING VELOCITY v | PACKED BLOCK NO. n | FRAME NO. m | RELATIVE POSITION IN ORIGINAL IMAGE DATA $x = m \times v + 4 \times n$ |
|---|---|---|---|
| 2 | 0 | 0 | $x = 0 \times 2 + 4 \times 0 = 0$ |
| | | 1 | $x = 1 \times 2 + 4 \times 0 = 2$ |
| | | 2 | $x = 2 \times 2 + 4 \times 0 = 4$ |
| | | 3 | $x = 3 \times 2 + 4 \times 0 = 6$ |
| | 1 | 0 | $x = 0 \times 2 + 4 \times 1 = 4$ |
| | | 1 | $x = 1 \times 2 + 4 \times 1 = 6$ |
| | | 2 | $x = 2 \times 2 + 4 \times 1 = 8$ |
| | | 3 | $x = 3 \times 2 + 4 \times 1 = 10$ |

EP 1 725 041 A2

FIG. 18

# FIG. 19

PACKING PORTION a _141_

_351_

DECIMATED BLOCKS →

BLOCK MOTION VECTORS →

BLOCK DISTRIBUTOR

_352_
HORIZONTALLY 1/4-DECIMATED CONSECUTIVE BLOCK EXTRACTING PORTION

_353_
VERTICALLY 1/4-DECIMATED CONSECUTIVE BLOCK EXTRACTING PORTION

_354_
INTERBLOCK-PIXEL SORTING PACKING PORTION

_355_
INTERBLOCK-PIXEL SORTING PACKING PORTION

_356_
PACKING PORTION (SPATIAL DECIMATION)

OUTPUT UNIT _150_

_151_
BLOCK SYNTHESIZER

EP 1 725 041 A2

# FIG. 20

BLOCK k    BLOCK k+1

HORIZONTALLY SPATIAL-DECIMATION BLOCK k

FRAME 1

FRAME 2

FRAME 3

FRAME 4

HORIZONTALLY SPATIAL-DECIMATION BLOCK k+1

EP 1 725 041 A2

# FIG. 21

BLOCK k

VERTICALLY SPATIAL-DECIMATION BLOCK k

BLOCK r

FRAME 1  FRAME 2  FRAME 3  FRAME 4

VERTICALLY SPATIAL-DECIMATION BLOCK r

## FIG. 22

DECIMATED BLOCKS → BLOCK STORAGE PORTION (361) → PACKING PORTION (363) → SORTER (365) → PACKED BLOCKS

BLOCK MOTION VECTORS → INTERBLOCK-PIXEL RELATIVE POSITION CALCULATOR (362) → INTERBLOCK-PIXEL RELATIVE POSITION STORAGE PORTION (364) → SORTER

# FIG. 23

FIG. 23

# FIG. 24

(A)

| $P_{10}$ | $P_{30}$ | $P_{50}$ | $P_{70}$ | $P_{50}$ | $P_{70}$ | $P_{90}$ | $P_{B0}$ |
|---|---|---|---|---|---|---|---|
| $P_{11}$ | $P_{31}$ | $P_{51}$ | $P_{71}$ | $P_{51}$ | $P_{71}$ | $P_{91}$ | $P_{B1}$ |
| $P_{12}$ | $P_{32}$ | $P_{52}$ | $P_{72}$ | $P_{52}$ | $P_{72}$ | $P_{92}$ | $P_{B2}$ |
| $P_{13}$ | $P_{33}$ | $P_{53}$ | $P_{73}$ | $P_{53}$ | $P_{73}$ | $P_{93}$ | $P_{B3}$ |
| x= 0 | 2 | 4 | 6 | 4 | 6 | 8 | 10 |

⬇ SORTING PROCESSING

(B)

| $P_{10}$ | $P_{30}$ | $P_{50}$ | $P_{50}$ | $P_{70}$ | $P_{70}$ | $P_{90}$ | $P_{B0}$ |
|---|---|---|---|---|---|---|---|
| $P_{11}$ | $P_{31}$ | $P_{51}$ | $P_{51}$ | $P_{71}$ | $P_{71}$ | $P_{91}$ | $P_{B1}$ |
| $P_{12}$ | $P_{32}$ | $P_{52}$ | $P_{52}$ | $P_{72}$ | $P_{72}$ | $P_{92}$ | $P_{B2}$ |
| $P_{13}$ | $P_{33}$ | $P_{53}$ | $P_{53}$ | $P_{73}$ | $P_{73}$ | $P_{93}$ | $P_{B3}$ |
| x= 0 | 2 | 4 | 4 | 6 | 6 | 8 | 10 |

# FIG. 25

EP 1 725 041 A2

# FIG. 26

|  | n=0 |  |  | n=1 |  |
| p=0 | | p=2 | | p=0 | | p=2 |

FRAME 1

| $P_{00}$ | | $P_{20}$ | | $P_{40}$ | | $P_{60}$ | |
| $P_{01}$ | | $P_{21}$ | | $P_{41}$ | | $P_{61}$ | |
| $P_{02}$ | | $P_{22}$ | | $P_{42}$ | | $P_{62}$ | |
| $P_{03}$ | | $P_{23}$ | | $P_{43}$ | | $P_{63}$ | |

m=0

x= | 0 | 2 | 4 | 6

FRAME 2

FRAME 3

| $P_{40}$ | | $P_{60}$ | | $P_{80}$ | | $P_{A0}$ | |
| $P_{41}$ | | $P_{61}$ | | $P_{81}$ | | $P_{A1}$ | |
| $P_{42}$ | | $P_{62}$ | | $P_{82}$ | | $P_{A2}$ | |
| $P_{43}$ | | $P_{63}$ | | $P_{83}$ | | $P_{A3}$ | |

m=2

x= | 4 | 6 | 8 | 10

FRAME 4

# FIG. 27

(A)

| $P_{00}$ | $P_{20}$ | $P_{40}$ | $P_{60}$ | $P_{40}$ | $P_{60}$ | $P_{80}$ | $P_{A0}$ |
|---|---|---|---|---|---|---|---|
| $P_{01}$ | $P_{21}$ | $P_{41}$ | $P_{61}$ | $P_{41}$ | $P_{61}$ | $P_{81}$ | $P_{A1}$ |
| $P_{02}$ | $P_{22}$ | $P_{42}$ | $P_{62}$ | $P_{42}$ | $P_{62}$ | $P_{82}$ | $P_{A2}$ |
| $P_{03}$ | $P_{23}$ | $P_{43}$ | $P_{63}$ | $P_{43}$ | $P_{63}$ | $P_{83}$ | $P_{A3}$ |

x= | 0 | 2 | 4 | 6 | 4 | 6 | 8 | 10 |

⬇ SORTING PROCESSING

(B)

| $P_{00}$ | $P_{20}$ | $P_{40}$ | $P_{40}$ | $P_{60}$ | $P_{60}$ | $P_{80}$ | $P_{A0}$ |
|---|---|---|---|---|---|---|---|
| $P_{01}$ | $P_{21}$ | $P_{41}$ | $P_{41}$ | $P_{61}$ | $P_{61}$ | $P_{81}$ | $P_{A1}$ |
| $P_{02}$ | $P_{22}$ | $P_{42}$ | $P_{42}$ | $P_{62}$ | $P_{62}$ | $P_{82}$ | $P_{A2}$ |
| $P_{03}$ | $P_{23}$ | $P_{43}$ | $P_{43}$ | $P_{63}$ | $P_{63}$ | $P_{83}$ | $P_{A3}$ |

x= | 0 | 2 | 4 | 4 | 6 | 6 | 8 | 10 |

FIG. 28

## FIG. 29

# FIG. 30

| RANGE OF ORIGINAL IMAGE MOVING VELOCITY $\nu$ | FLAG |
|---|---|
| $0 \leq \nu < 2.75$ | A: ORIGINAL IMAGE MOVING VELOCITY AREA A |
| $2.75 \leq \nu < 4.0$ | B: ORIGINAL IMAGE MOVING VELOCITY AREA B |
| $4.0 \leq \nu < 6.0$ | C: ORIGINAL IMAGE MOVING VELOCITY AREA C |
| $6.0 \leq \nu$ | D: ORIGINAL IMAGE MOVING VELOCITY AREA D |

EP 1 725 041 A2

FIG. 31

385

INTERBLOCK-PIXEL PIXEL-COLUMN
SWAPPING PACKING PORTION

DECIMATED BLOCKS →

401 BLOCK STORAGE PORTION →

402 PACKING PORTION →

403 BLOCK DISTRIBUTOR

404 INTERBLOCK-PIXEL PIXEL-COLUMN SWAPPING PROCESSOR A → PACKED BLOCKS

405 INTERBLOCK-PIXEL PIXEL-COLUMN SWAPPING PROCESSOR B → PACKED BLOCKS

406 INTERBLOCK-PIXEL PIXEL-COLUMN SWAPPING PROCESSOR C → PACKED BLOCKS

BLOCK PIXEL-COLUMN SWAPPING FLAG

# FIG. 32

PACKED BLOCKS

INTERBLOCK-PIXEL PIXEL-COLUMN
SWAPPING PROCESSOR A _404_

| PIXEL-COLUMN SWAPPING PORTION $\alpha$ _411_ | → | PIXEL-COLUMN SWAPPING PORTION $\beta$ _412_ |

PIXEL-COLUMN SWAPPED
PACKED BLOCKS

INTERBLOCK-PIXEL PIXEL-COLUMN SWAPPING PROCESSOR B _405_

BLOCK DISTRIBUTOR _403_

| PIXEL-COLUMN SWAPPING PORTION $\alpha$ _411_ | → | PIXEL-COLUMN SWAPPING PORTION $\beta$ _412_ | → | PIXEL-COLUMN SWAPPING PORTION $\gamma$ _413_ |

PIXEL-COLUMN
SWAPPED
PACKED BLOCKS

INTERBLOCK-PIXEL PIXEL-COLUMN SWAPPING PROCESSOR C _406_

| PIXEL-COLUMN SWAPPING PORTION $\delta$ _414_ | → | PIXEL-COLUMN SWAPPING PORTION $\alpha$ _411_ | → | PIXEL-COLUMN SWAPPING PORTION $\varepsilon$ _415_ | → | PIXEL-COLUMN SWAPPING PORTION $\zeta$ _416_ |

PIXEL-COLUMN
SWAPPED
PACKED BLOCKS

EP 1 725 041 A2

# FIG. 33

PACKED BLOCK NO. : PB  PBn  PBn+1

(A)
BLOCKS BEFORE PIXEL SWAPPING

COLUMN NO. : L

| L0 | L1 | L2 | L3 | L0 | L1 | L2 | L3 |
|---|---|---|---|---|---|---|---|
| $P_{00}$ | $P_{10}$ | $P_{20}$ | $P_{30}$ | $P_{40}$ | $P_{50}$ | $P_{60}$ | $P_{70}$ |
| $P_{01}$ | $P_{11}$ | $P_{21}$ | $P_{31}$ | $P_{41}$ | $P_{51}$ | $P_{61}$ | $P_{71}$ |
| $P_{02}$ | $P_{12}$ | $P_{22}$ | $P_{32}$ | $P_{42}$ | $P_{52}$ | $P_{62}$ | $P_{72}$ |
| $P_{03}$ | $P_{13}$ | $P_{23}$ | $P_{33}$ | $P_{43}$ | $P_{53}$ | $P_{63}$ | $P_{73}$ |

PIXEL COLUMN SWAPPING ($\alpha$)

(B)
BLOCKS AFTER PIXEL SWAPPING

| L0 | L1 | L2 | L3 | L0 | L1 | L2 | L3 |
|---|---|---|---|---|---|---|---|
| $P_{00}$ | $P_{10}$ | $P_{40}$ | $P_{50}$ | $P_{20}$ | $P_{30}$ | $P_{60}$ | $P_{70}$ |
| $P_{01}$ | $P_{11}$ | $P_{41}$ | $P_{51}$ | $P_{21}$ | $P_{31}$ | $P_{61}$ | $P_{71}$ |
| $P_{02}$ | $P_{12}$ | $P_{42}$ | $P_{52}$ | $P_{22}$ | $P_{32}$ | $P_{62}$ | $P_{72}$ |
| $P_{03}$ | $P_{13}$ | $P_{43}$ | $P_{53}$ | $P_{23}$ | $P_{33}$ | $P_{63}$ | $P_{73}$ |

| L0 | L1 | L2 | L3 | L0 | L1 | L2 | L3 |
|---|---|---|---|---|---|---|---|

PBn  PBn+1

EP 1 725 041 A2

# FIG. 34

PACKED BLOCK NO. : PB

COLUMN NO. : L

**(A) BLOCKS BEFORE PIXEL SWAPPING**

PBn

| L0 | L1 | L2 | L3 |
|---|---|---|---|
| $P_{00}$ | $P_{10}$ | $P_{20}$ | $P_{30}$ |
| $P_{01}$ | $P_{11}$ | $P_{21}$ | $P_{31}$ |
| $P_{02}$ | $P_{12}$ | $P_{22}$ | $P_{32}$ |
| $P_{03}$ | $P_{13}$ | $P_{23}$ | $P_{33}$ |

PBn+1

| L0 | L1 | L2 | L3 |
|---|---|---|---|
| $P_{40}$ | $P_{50}$ | $P_{60}$ | $P_{70}$ |
| $P_{41}$ | $P_{51}$ | $P_{61}$ | $P_{71}$ |
| $P_{42}$ | $P_{52}$ | $P_{62}$ | $P_{72}$ |
| $P_{43}$ | $P_{53}$ | $P_{63}$ | $P_{73}$ |

⇒ PIXEL COLUMN SWAPPING ($\beta$)

**(B) BLOCKS AFTER PIXEL SWAPPING**

PBn

| L0 | L1 | L2 | L3 |
|---|---|---|---|
| $P_{00}$ | $P_{10}$ | $P_{20}$ | $P_{40}$ |
| $P_{01}$ | $P_{11}$ | $P_{21}$ | $P_{41}$ |
| $P_{02}$ | $P_{12}$ | $P_{22}$ | $P_{42}$ |
| $P_{03}$ | $P_{13}$ | $P_{23}$ | $P_{43}$ |

PBn+1

| L0 | L1 | L2 | L3 |
|---|---|---|---|
| $P_{30}$ | $P_{50}$ | $P_{60}$ | $P_{70}$ |
| $P_{31}$ | $P_{51}$ | $P_{61}$ | $P_{71}$ |
| $P_{32}$ | $P_{52}$ | $P_{62}$ | $P_{72}$ |
| $P_{33}$ | $P_{53}$ | $P_{63}$ | $P_{73}$ |

# FIG. 35

PACKED BLOCK NO. : PB      PBn

COLUMN NO. : L

(A)

BLOCKS BEFORE
PIXEL SWAPPING

| L0 | L1 | L2 | L3 |
|---|---|---|---|
| $P_{00}$ | $P_{10}$ | $P_{20}$ | $P_{30}$ |
| $P_{01}$ | $P_{11}$ | $P_{21}$ | $P_{31}$ |
| $P_{02}$ | $P_{12}$ | $P_{22}$ | $P_{32}$ |
| $P_{03}$ | $P_{13}$ | $P_{23}$ | $P_{33}$ |

PIXEL COLUMN
SWAPPING ($\gamma$)

(B)

BLOCKS AFTER
PIXEL SWAPPING

| $P_{00}$ | $P_{20}$ | $P_{10}$ | $P_{30}$ |
|---|---|---|---|
| $P_{01}$ | $P_{21}$ | $P_{11}$ | $P_{31}$ |
| $P_{02}$ | $P_{22}$ | $P_{12}$ | $P_{32}$ |
| $P_{03}$ | $P_{23}$ | $P_{13}$ | $P_{33}$ |

L0    L1    L2    L3

PBn

# FIG. 36

PACKED BLOCK NO. : PB

| | PBn | | | | PBn+1 | | |

COLUMN NO. : L

(A)
BLOCKS BEFORE
PIXEL SWAPPING

| L0 | L1 | L2 | L3 | L0 | L1 | L2 | L3 |
|---|---|---|---|---|---|---|---|
| $P_{00}$ | $P_{10}$ | $P_{20}$ | $P_{30}$ | $P_{40}$ | $P_{50}$ | $P_{60}$ | $P_{70}$ |
| $P_{01}$ | $P_{11}$ | $P_{21}$ | $P_{31}$ | $P_{41}$ | $P_{51}$ | $P_{61}$ | $P_{71}$ |
| $P_{02}$ | $P_{12}$ | $P_{22}$ | $P_{32}$ | $P_{42}$ | $P_{52}$ | $P_{62}$ | $P_{72}$ |
| $P_{03}$ | $P_{13}$ | $P_{23}$ | $P_{33}$ | $P_{43}$ | $P_{53}$ | $P_{63}$ | $P_{73}$ |

PIXEL COLUMN SWAPPING ($\delta$)

(B)
BLOCKS AFTER
PIXEL SWAPPING

| L0 | L1 | L2 | L3 | L0 | L1 | L2 | L3 |
|---|---|---|---|---|---|---|---|
| $P_{00}$ | $P_{40}$ | $P_{50}$ | $P_{60}$ | $P_{10}$ | $P_{20}$ | $P_{30}$ | $P_{70}$ |
| $P_{01}$ | $P_{41}$ | $P_{51}$ | $P_{61}$ | $P_{11}$ | $P_{21}$ | $P_{31}$ | $P_{71}$ |
| $P_{02}$ | $P_{42}$ | $P_{52}$ | $P_{62}$ | $P_{12}$ | $P_{22}$ | $P_{32}$ | $P_{72}$ |
| $P_{03}$ | $P_{43}$ | $P_{53}$ | $P_{63}$ | $P_{13}$ | $P_{23}$ | $P_{33}$ | $P_{73}$ |

| L0 | L1 | L2 | L3 | L0 | L1 | L2 | L3 |

PBn · PBn+1

EP 1 725 041 A2

# FIG. 37

PACKED BLOCK NO. : PB       PBn             PBn+1

COLUMN NO. : L

**(A) BLOCKS BEFORE PIXEL SWAPPING**

| L0 | L1 | L2 | L3 | L0 | L1 | L2 | L3 |
|---|---|---|---|---|---|---|---|
| $P_{00}$ | $P_{10}$ | $P_{20}$ | $P_{30}$ | $P_{40}$ | $P_{50}$ | $P_{60}$ | $P_{70}$ |
| $P_{01}$ | $P_{11}$ | $P_{21}$ | $P_{31}$ | $P_{41}$ | $P_{51}$ | $P_{61}$ | $P_{71}$ |
| $P_{02}$ | $P_{12}$ | $P_{22}$ | $P_{32}$ | $P_{42}$ | $P_{52}$ | $P_{62}$ | $P_{72}$ |
| $P_{03}$ | $P_{13}$ | $P_{23}$ | $P_{33}$ | $P_{43}$ | $P_{53}$ | $P_{63}$ | $P_{73}$ |

PIXEL COLUMN SWAPPING ($\varepsilon$)

**(B) BLOCKS AFTER PIXEL SWAPPING**

| $P_{00}$ | $P_{20}$ | $P_{30}$ | $P_{40}$ | $P_{10}$ | $P_{50}$ | $P_{60}$ | $P_{70}$ |
|---|---|---|---|---|---|---|---|
| $P_{01}$ | $P_{21}$ | $P_{31}$ | $P_{41}$ | $P_{11}$ | $P_{51}$ | $P_{61}$ | $P_{71}$ |
| $P_{02}$ | $P_{22}$ | $P_{32}$ | $P_{42}$ | $P_{12}$ | $P_{52}$ | $P_{62}$ | $P_{72}$ |
| $P_{03}$ | $P_{23}$ | $P_{33}$ | $P_{43}$ | $P_{13}$ | $P_{53}$ | $P_{63}$ | $P_{73}$ |

| L0 | L1 | L2 | L3 | L0 | L1 | L2 | L3 |
|---|---|---|---|---|---|---|---|

PBn             PBn+1

# FIG. 38

PACK BLOCK NO. : PB              PBn

COLUMN NO. : L          L0      L1      L2      L3

| $P_{00}$ | $P_{10}$ | $P_{20}$ | $P_{30}$ |
| $P_{01}$ | $P_{11}$ | $P_{21}$ | $P_{31}$ |
| $P_{02}$ | $P_{12}$ | $P_{22}$ | $P_{32}$ |
| $P_{03}$ | $P_{13}$ | $P_{23}$ | $P_{33}$ |

(A)

BLOCKS BEFORE
PIXEL SWAPPING

PIXEL COLUMN
SWAPPING ($\zeta$)

| $P_{00}$ | $P_{10}$ | $P_{30}$ | $P_{20}$ |
| $P_{01}$ | $P_{11}$ | $P_{31}$ | $P_{21}$ |
| $P_{02}$ | $P_{12}$ | $P_{32}$ | $P_{22}$ |
| $P_{03}$ | $P_{13}$ | $P_{33}$ | $P_{23}$ |

(B)

BLOCKS AFTER
PIXEL SWAPPING

L0      L1      L2      L3

PBn

# FIG. 39

EP 1 725 041 A2

## FIG. 40

PACKING PORTION c — 143

DECIMATED BLOCKS →

BLOCK MOTION VECTORS →

BLOCK DISTRIBUTOR — 431

HORIZONTALLY 1/2-DECIMATED CONSECUTIVE BLOCK EXTRACTING PORTION — 432

VERTICALLY 1/2-DECIMATED CONSECUTIVE BLOCK EXTRACTING PORTION — 433

PIXEL-COLUMN SWAPPING FLAG GENERATOR — 434

INTERBLOCK-PIXEL PIXEL-COLUMN SWAPPING PACKING PORTION — 435

INTERBLOCK-PIXEL PIXEL-COLUMN SWAPPING PACKING PORTION — 436

PACKING PORTION (SPATIAL DECIMATION) — 437

OUTPUT UNIT — 150

BLOCK SYNTHESIZER — 151

EP 1 725 041 A2

# FIG. 41

| RANGE OF ORIGINAL IMAGE MOVING VELOCITY $\nu$ | FLAG |
|---|---|
| $0 \leq \nu < 1.5$ | E: ORIGINAL IMAGE MOVING VELOCITY AREA E |
| $1.5 \leq \nu < 2.0$ | F: ORIGINAL IMAGE MOVING VELOCITY AREA F |

# FIG. 42

INTERBLOCK-PIXEL PIXEL-COLUMN SWAPPING PACKING PORTION — 435

441 BLOCK STORAGE PORTION

442 PACKING PORTION

443 BLOCK DISTRIBUTOR

444 INTERBLOCK-PIXEL PIXEL-COLUMN SWAPPING PROCESSOR E

445 INTERBLOCK-PIXEL PIXEL-COLUMN SWAPPING PROCESSOR F

DECIMATED BLOCKS

BLOCK PIXEL-COLUMN SWAPPING FLAG

PACKED BLOCKS

PACKED BLOCKS

EP 1 725 041 A2

## FIG. 43

PACKED BLOCKS

INTERBLOCK-PIXEL PIXEL-COLUMN
SWAPPING PROCESSOR E ⟍444

PIXEL-COLUMN
SWAPPING
PORTION β ⟍412

PIXEL-COLUMN SWAPPED
PACKED BLOCKS

BLOCK
DISTRIBUTOR ⟍443

INTERBLOCK-PIXEL PIXEL-COLUMN
SWAPPING PROCESSOR F ⟍445

PIXEL-COLUMN
SWAPPING
PORTION α ⟍411

PIXEL-COLUMN
SWAPPING
PORTION β ⟍412

PIXEL-COLUMN SWAPPED
PACKED BLOCKS

EP 1 725 041 A2

FIG. 44

CODED MOVING
PICTURE

CODED SIDE
INFORMATION

510
DECODER

520
BLOCK
GENERATOR

530
BLOCK
PROCESSOR

DECODED MOVING
PICTURE

# FIG. 45

CODED MOVING PICTURE → MOVING-PICTURE DECODING PORTION (511)

CODED SIDE INFORMATION → SIDE-INFORMATION DECODING PORTION (512)

510

520 BLOCK GENERATOR

530

531 BLOCK DISTRIBUTOR

UNPACKING PROCESSOR a (SPATIAL DECIMATION) 532

UNPACKING PROCESSOR b (TEMPORAL DECIMATION) 533

UNPACKING PROCESSOR c (TEMPORAL/SPATIAL DECIMATION) 534

535 BLOCK SYNTHESIZER → DECODED MOVING PICTURE

EP 1 725 041 A2

# FIG. 46

EP 1 725 041 A2

# FIG. 47

535 — BLOCK SYNTHESIZER

532 — UNPACKING PROCESSOR a

553 — INTERBLOCK-PIXEL SORTING UNPACKING PORTION

554 — INTERBLOCK-PIXEL SORTING UNPACKING PORTION

555 — UNPACKING PORTION (SPATIAL DECIMATION)

551 — HORIZONTALLY 1/4-DECIMATED CONSECUTIVE BLOCK EXTRACTING PORTION

552 — VERTICALLY 1/4-DECIMATED CONSECUTIVE BLOCK EXTRACTING PORTION

531 — BLOCK DISTRIBUTOR

PACKED BLOCKS

SIDE INFORMATION

# FIG. 48

PACKED BLOCKS →

BLOCK STORAGE PORTION (561) → PACKED BLOCK SORTER (565) → UNPACKING PORTION (566) → UNPACKED BLOCKS

SIDE INFORMATION →

INTERBLOCK-PIXEL RELATIVE POSITION CALCULATOR (562) → INTERBLOCK-PIXEL RELATIVE POSITION STORAGE PORTION (563) → RELATIVE POSITION SORTER (564)

553

EP 1 725 041 A2

# FIG. 49

## (A) PACKED BLOCKS AFTER SORTING

| | | | | | | | |
|---|---|---|---|---|---|---|---|
| $P_{10}$ | $P_{30}$ | $P_{50}$ | $P_{50}$ | $P_{70}$ | $P_{70}$ | $P_{90}$ | $P_{B0}$ |
| $P_{11}$ | $P_{31}$ | $P_{51}$ | $P_{51}$ | $P_{71}$ | $P_{71}$ | $P_{91}$ | $P_{B1}$ |
| $P_{12}$ | $P_{32}$ | $P_{52}$ | $P_{52}$ | $P_{72}$ | $P_{72}$ | $P_{92}$ | $P_{B2}$ |
| $P_{13}$ | $P_{33}$ | $P_{53}$ | $P_{53}$ | $P_{73}$ | $P_{73}$ | $P_{93}$ | $P_{B3}$ |
| x= 0 | 2 | 4 | 4 | 6 | 6 | 8 | 10 |

## (B) PACKED BLOCKS BEFORE SORTING

| | | | | | | | |
|---|---|---|---|---|---|---|---|
| $P_{10}$ | $P_{30}$ | $P_{50}$ | $P_{70}$ | $P_{50}$ | $P_{70}$ | $P_{90}$ | $P_{B0}$ |
| $P_{11}$ | $P_{31}$ | $P_{51}$ | $P_{71}$ | $P_{51}$ | $P_{71}$ | $P_{91}$ | $P_{B1}$ |
| $P_{12}$ | $P_{32}$ | $P_{52}$ | $P_{72}$ | $P_{52}$ | $P_{72}$ | $P_{92}$ | $P_{B2}$ |
| $P_{13}$ | $P_{33}$ | $P_{53}$ | $P_{73}$ | $P_{53}$ | $P_{73}$ | $P_{93}$ | $P_{B3}$ |
| x= 0 | 2 | 4 | 6 | 4 | 6 | 8 | 10 |

## (C)

n=0    n=1

FRAME 1

| $P_{10}$ | | $P_{50}$ | | m=0 |
| $P_{11}$ | | $P_{51}$ | | |
| $P_{12}$ | | $P_{52}$ | | |
| $P_{13}$ | | $P_{53}$ | | |

x= 0    4

FRAME 2

| $P_{30}$ | | $P_{70}$ | | m=1 |
| $P_{31}$ | | $P_{71}$ | | |
| $P_{32}$ | | $P_{72}$ | | |
| $P_{33}$ | | $P_{73}$ | | |

x= 2    6

FRAME 3

| $P_{50}$ | | $P_{90}$ | | m=2 |
| $P_{51}$ | | $P_{91}$ | | |
| $P_{52}$ | | $P_{92}$ | | |
| $P_{53}$ | | $P_{93}$ | | |

x= 4    8

FRAME 4

| $P_{70}$ | | $P_{80}$ | | m=3 |
| $P_{71}$ | | $P_{81}$ | | |
| $P_{72}$ | | $P_{82}$ | | |
| $P_{73}$ | | $P_{83}$ | | |

x= 4    10

EP 1 725 041 A2

# FIG. 50

## (1) RELATIVE POSITION SORTING

**(1a)**

| x= | 0 | 2 | 4 | 6 | 4 | 6 | 8 | 10 |
|---|---|---|---|---|---|---|---|---|
| BLOCK POSITION INFORMATION | 0 | 1 | 2 | 3 | 4 | 5 | 6 | 7 |

**(1b)**

| x= | 0 | 2 | 4 | 4 | 6 | 6 | 8 | 10 |
|---|---|---|---|---|---|---|---|---|
| BLOCK POSITION INFORMATION | 0 | 1 | 2 | 4 | 3 | 5 | 6 | 7 |

BLOCK POSITION INFORMATION

## (2) PACKED BLOCK SORTING

### (2a) PACKED BLOCKS AFTER SORTING

| $P_{10}$ | $P_{30}$ | $P_{50}$ | $P_{50}$ | $P_{70}$ | $P_{70}$ | $P_{90}$ | $P_{B0}$ |
|---|---|---|---|---|---|---|---|
| $P_{11}$ | $P_{31}$ | $P_{51}$ | $P_{51}$ | $P_{71}$ | $P_{71}$ | $P_{91}$ | $P_{B1}$ |
| $P_{12}$ | $P_{32}$ | $P_{52}$ | $P_{52}$ | $P_{72}$ | $P_{72}$ | $P_{92}$ | $P_{B2}$ |
| $P_{13}$ | $P_{33}$ | $P_{53}$ | $P_{53}$ | $P_{73}$ | $P_{73}$ | $P_{93}$ | $P_{B3}$ |
| 0 | 1 | 2 | 4 | 3 | 5 | 6 | 7 |

### (2b) PACKED BLOCKS BEFORE SORTING

| $P_{10}$ | $P_{30}$ | $P_{50}$ | $P_{70}$ | $P_{50}$ | $P_{70}$ | $P_{90}$ | $P_{B0}$ |
|---|---|---|---|---|---|---|---|
| $P_{11}$ | $P_{31}$ | $P_{51}$ | $P_{71}$ | $P_{51}$ | $P_{71}$ | $P_{91}$ | $P_{B1}$ |
| $P_{12}$ | $P_{32}$ | $P_{52}$ | $P_{72}$ | $P_{52}$ | $P_{72}$ | $P_{92}$ | $P_{B2}$ |
| $P_{13}$ | $P_{33}$ | $P_{53}$ | $P_{73}$ | $P_{53}$ | $P_{73}$ | $P_{93}$ | $P_{B3}$ |
| 0 | 1 | 2 | 3 | 4 | 5 | 6 | 7 |

EP 1 725 041 A2

# FIG. 51

# FIG. 52

PACKED BLOCKS → BLOCK STORAGE PORTION (581) → PACKED BLOCK SORTER (585) → UNPACKING PORTION (586) → UNPACKED BLOCKS

SIDE INFORMATION → INTERBLOCK-PIXEL RELATIVE POSITION CALCULATOR (582) → INTERBLOCK-PIXEL RELATIVE POSITION STORAGE PORTION (583) → RELATIVE POSITION SORTER (584)

573

EP 1 725 041 A2

# FIG. 53

(A) PACKED BLOCKS AFTER SORTING

| $P_{00}$ | $P_{20}$ | $P_{40}$ | $P_{40}$ | $P_{60}$ | $P_{60}$ | $P_{80}$ | $P_{A0}$ |
|---|---|---|---|---|---|---|---|
| $P_{01}$ | $P_{21}$ | $P_{41}$ | $P_{41}$ | $P_{61}$ | $P_{61}$ | $P_{81}$ | $P_{A1}$ |
| $P_{02}$ | $P_{22}$ | $P_{42}$ | $P_{42}$ | $P_{62}$ | $P_{62}$ | $P_{82}$ | $P_{A2}$ |
| $P_{03}$ | $P_{23}$ | $P_{43}$ | $P_{43}$ | $P_{63}$ | $P_{63}$ | $P_{83}$ | $P_{A3}$ |
| $x=$ 0 | 2 | 4 | 4 | 6 | 6 | 8 | 10 |

(B) PACKED BLOCKS BEFORE SORTING

| $P_{00}$ | $P_{20}$ | $P_{40}$ | $P_{60}$ | $P_{40}$ | $P_{60}$ | $P_{80}$ | $P_{A0}$ |
|---|---|---|---|---|---|---|---|
| $P_{01}$ | $P_{21}$ | $P_{41}$ | $P_{61}$ | $P_{41}$ | $P_{61}$ | $P_{81}$ | $P_{A1}$ |
| $P_{02}$ | $P_{22}$ | $P_{42}$ | $P_{62}$ | $P_{42}$ | $P_{62}$ | $P_{82}$ | $P_{A2}$ |
| $P_{03}$ | $P_{23}$ | $P_{43}$ | $P_{63}$ | $P_{43}$ | $P_{63}$ | $P_{83}$ | $P_{A3}$ |
| $x=$ 0 | 2 | 4 | 6 | 4 | 6 | 8 | 10 |

(C)

$n=0$    $n=1$
$p=0$  $p=2$   $p=0$  $p=2$

FRAME 1

| $P_{00}$ | $P_{20}$ | $P_{40}$ | $P_{60}$ | $m=0$ |
|---|---|---|---|---|
| $P_{01}$ | $P_{21}$ | $P_{41}$ | $P_{61}$ | |
| $P_{02}$ | $P_{22}$ | $P_{42}$ | $P_{62}$ | |
| $P_{03}$ | $P_{23}$ | $P_{43}$ | $P_{63}$ | |
| $x=$ 0 | 2 | 4 | 6 | |

FRAME 2

FRAME 3

| $P_{40}$ | $P_{60}$ | $P_{80}$ | $P_{A0}$ | $m=2$ |
|---|---|---|---|---|
| $P_{41}$ | $P_{61}$ | $P_{81}$ | $P_{A1}$ | |
| $P_{42}$ | $P_{62}$ | $P_{82}$ | $P_{A2}$ | |
| $P_{43}$ | $P_{63}$ | $P_{83}$ | $P_{A3}$ | |
| $x=$ 4 | 6 | 8 | 10 | |

FRAME 4

# FIG. 54

## (1) RELATIVE POSITION SORTING

(1a)

| x= | 0 | 2 | 4 | 6 | 4 | 6 | 8 | 10 |
|----|---|---|---|---|---|---|---|----|

BLOCK POSITION INFORMATION

| 0 | 1 | 2 | 3 | 4 | 5 | 6 | 7 |
|---|---|---|---|---|---|---|---|

(1b)

| x= | 0 | 2 | 4 | 4 | 6 | 6 | 8 | 10 |
|----|---|---|---|---|---|---|---|----|

BLOCK POSITION INFORMATION

| 0 | 1 | 2 | 4 | 3 | 5 | 6 | 7 |
|---|---|---|---|---|---|---|---|

## (2) PACKED BLOCK SORTING

### (2a) PACKED BLOCKS AFTER SORTING

| $P_{00}$ | $P_{20}$ | $P_{40}$ | $P_{40}$ | $P_{60}$ | $P_{60}$ | $P_{80}$ | $P_{A0}$ |
|----|----|----|----|----|----|----|----|
| $P_{01}$ | $P_{21}$ | $P_{41}$ | $P_{41}$ | $P_{61}$ | $P_{61}$ | $P_{81}$ | $P_{A1}$ |
| $P_{02}$ | $P_{22}$ | $P_{42}$ | $P_{42}$ | $P_{62}$ | $P_{62}$ | $P_{82}$ | $P_{A2}$ |
| $P_{03}$ | $P_{23}$ | $P_{43}$ | $P_{43}$ | $P_{63}$ | $P_{63}$ | $P_{83}$ | $P_{A3}$ |
| 0 | 1 | 2 | 4 | 3 | 5 | 6 | 7 |

BLOCK POSITION INFORMATION

### (2b) PACKED BLOCKS BEFORE SORTING

| $P_{00}$ | $P_{20}$ | $P_{40}$ | $P_{60}$ | $P_{40}$ | $P_{60}$ | $P_{80}$ | $P_{A0}$ |
|----|----|----|----|----|----|----|----|
| $P_{01}$ | $P_{21}$ | $P_{41}$ | $P_{61}$ | $P_{41}$ | $P_{61}$ | $P_{81}$ | $P_{A1}$ |
| $P_{02}$ | $P_{22}$ | $P_{42}$ | $P_{62}$ | $P_{42}$ | $P_{62}$ | $P_{82}$ | $P_{A2}$ |
| $P_{03}$ | $P_{23}$ | $P_{43}$ | $P_{63}$ | $P_{43}$ | $P_{63}$ | $P_{83}$ | $P_{A3}$ |
| 0 | 1 | 2 | 3 | 4 | 5 | 6 | 7 |

EP 1 725 041 A2

# FIG. 55

PACKED AND PIXEL-
ORDER-CORRECTED
BLOCKS

SIDE
INFORMATION

BLOCK DISTRIBUTOR — 531

UNPACKING PROCESSOR a — 532

HORIZONTALLY
1/4-DECIMATED
CONSECUTIVE BLOCK
EXTRACTING PORTION — 601

INTERBLOCK-PIXEL
PIXEL-COLUMN SWAPPING
UNPACKING PORTION — 603

VERTICALLY
1/4-DECIMATED
CONSECUTIVE BLOCK
EXTRACTING PORTION — 602

INTERBLOCK-PIXEL
PIXEL-COLUMN SWAPPING
UNPACKING PORTION — 604

UNPACKING PORTION
(SPATIAL DECIMATION) — 605

BLOCK SYNTHESIZER — 535

EP 1 725 041 A2

# FIG. 56

PACKED AND PIXEL-ORDER-CORRECTED BLOCKS →

603

621 — BLOCK STORAGE PORTION

623 — BLOCK DISTRIBUTOR

624 — INTERBLOCK-PIXEL PIXEL-COLUMN SWAPPING UNPACKING PORTION A

625 — INTERBLOCK-PIXEL SWAPPING UNPACKING PORTION B

625 — INTERBLOCK-PIXEL SWAPPING UNPACKING PORTION B

627 — UNPACKING PORTION

→ BLOCKS RESTORED TO FRAME RATE R

BLOCK PIXEL-COLUMN SWAPPING FLAG →

EP 1 725 041 A2

# FIG. 57

# FIG. 58

535 — BLOCK SYNTHESIZER

534 — UNPACKING PROCESSOR c

653 — INTERBLOCK-PIXEL PIXEL-COLUMN SWAPPING UNPACKING PORTION

654 — INTERBLOCK-PIXEL PIXEL-COLUMN SWAPPING UNPACKING PORTION

655 — UNPACKING PORTION (TEMPORAL/SPATIAL DECIMATION)

651 — HORIZONTALLY 1/2-DECIMATED CONSECUTIVE BLOCK EXTRACTING PORTION

652 — VERTICALLY 1/2-DECIMATED CONSECUTIVE BLOCK EXTRACTING PORTION

531 — BLOCK DISTRIBUTOR

PACKED AND PIXEL-ORDER-CORRECTED BLOCKS

SIDE INFORMATION

# FIG. 59

PACKED AND PIXEL-ORDER-CORRECTED BLOCKS →

653

661 — BLOCK STORAGE PORTION

663 — BLOCK DISTRIBUTOR

664 — INTERBLOCK-PIXEL PIXEL-COLUMN SWAPPING UNPACKING PORTION E

665 — INTERBLOCK-PIXEL SWAPPING UNPACKING PORTION F

666 — UNPACKING PORTION

→ BLOCKS RESTORED TO FRAME RATE R

BLOCK PIXEL-COLUMN SWAPPING FLAG →

EP 1 725 041 A2

# FIG. 60

INTERBLOCK-PIXEL PIXEL-COLUMN
SWAPPING PORTION E                    664

PACKED BLOCKS HAVING
SWITCHED PIXEL POSITIONS

PIXEL-COLUMN
SWAPPING
PORTION β          642          PACKED BLOCKS

INTERBLOCK-PIXEL PIXEL-COLUMN
SWAPPING PORTION F                    665

BLOCK
DISTRIBUTOR    663

PIXEL-COLUMN
SWAPPING
PORTION β          642

PIXEL-COLUMN
SWAPPING
PORTION α          641          PACKED BLOCKS

EP 1 725 041 A2

# FIG. 61

EP 1 725 041 A2

CODED MOVING PICTURE → DECODER (710) → BLOCK GENERATOR (720) → BLOCK PROCESSOR (730) → DECODED MOVING PICTURE

CODED SIDE INFORMATION →

FIG. 62

DECODED MOVING PICTURE

735

BLOCK SYNTHESIZER

730

732 — FRAME RATE CONVERSION PROCESSOR a (SPATIAL DECIMATION)

733 — FRAME RATE CONVERSION PROCESSOR b (TEMPORAL DECIMATION)

734 — FRAME RATE CONVERSION PROCESSOR c (TEMPORAL AND SPATIAL DECIMATION)

731 — BLOCK DISTRIBUTOR

720 — BLOCK GENERATOR

710

711 — MOVING-PICTURE DECODING PORTION

712 — SIDE-INFORMATION DECODING PORTION

CODED MOVING PICTURE

CODED SIDE INFORMATION

## FIG. 63

PACKED BLOCKS ──────────●──────────→ BLOCK STORAGE PORTION `752` ──→ FILTERING PROCESSOR `753` ──→ BLOCKS HAVING CONVERTED FRAME RATE

SIDE INFORMATION (BLOCK MOVING VELOCITY) ──→ BLOCK MOVEMENT PROCESSOR `751`

EP 1 725 041 A2

FIG. 64

P FRAME
811
851

821
861

(P+0.5) FRAME
813

823
872
871

(P+1) FRAME
812
852

822
862

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000032470 A
- JP 2001352546 A

- JP 2003412501 A

**Non-patent literature cited in the description**

- Shikaku Joho Handbook. 219-220